(19)

**Europäisches Patentamt**
**European Patent Office**
**Office européen des brevets**

(11) **EP 4 510 583 A1**

(12) **EUROPEAN PATENT APPLICATION**
published in accordance with Art. 153(4) EPC

(43) Date of publication:
**19.02.2025 Bulletin 2025/08**

(21) Application number: **22936846.9**

(22) Date of filing: **12.04.2022**

(51) International Patent Classification (IPC):
**H04N 19/59** (2014.01)    **H04N 19/593** (2014.01)

(52) Cooperative Patent Classification (CPC):
**H04N 19/59; H04N 19/593**

(86) International application number:
**PCT/CN2022/086469**

(87) International publication number:
**WO 2023/197192 (19.10.2023 Gazette 2023/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **HUO, Junyan
  Dongguan, Guangdong 523860 (CN)**

• **MA, Yanzhuo
  Dongguan, Guangdong 523860 (CN)**
• **YANG, Fuzheng
  Dongguan, Guangdong 523860 (CN)**
• **ZHANG, Zhenyao
  Dongguan, Guangdong 523860 (CN)**
• **WANG, Danni
  Dongguan, Guangdong 523860 (CN)**
• **LI, Ming
  Dongguan, Guangdong 523860 (CN)**

(74) Representative: **Grassi, Stefano
  Bugnion S.p.A.
  Viale Lancetti, 17
  20158 Milano (IT)**

(54) **ENCODING METHOD AND APPARATUS, DECODING METHOD AND APPARATUS,
ENCODING DEVICE, DECODING DEVICE, AND STORAGE MEDIUM**

(57)    Disclosed in embodiments of the present application are an encoding method and apparatus, a decoding method and apparatus, an encoding device, a decoding device, and a storage medium. The encoding method comprises: determining reference information of the current block; filtering some pieces of information in the reference information of the current block to determine target information of the current block; determining a weighting coefficient according to a reference sample value of a first color component in the target information; determining a prediction block for a second color component of the current block according to the weighting coefficient and a reference sample value of the second color component in the target information; and determining a reconstruction value of a second color component sampling point of the current block according to the prediction block. In this way, the accuracy of chroma prediction can be improved and the code rate can be saved, and the encoding and decoding performance can also be improved.

| | |
|---|---|
| Determine reference information of a current block | S501 |
| Perform a filtering process on the reference information of the current block, to determine target information of the current block | S502 |
| Determine a respective one of weighting coefficients according to each of reference sample values of a first color component in the target information | S503 |
| Determine a prediction block of a second color component of the current block according to the weighting coefficients and reference sample values of a second color component in the target information | S504 |
| Determine reconstructed values of second color component samples of the current block according to the prediction block | S505 |

**FIG. 5**

**Description**

TECHNICAL FIELD

Embodiments of the disclosure relate to the technical field of video encoding and decoding, and in particular to a method and apparatus for encoding, a method and apparatus for decoding, a device for encoding, a device for decoding, and a storage medium.

BACKGROUND

With the improvement of video display quality requirements, new forms of video application such as high definition (HD) and ultra-high definition (UHD) videos, or the like have emerged accordingly. The Joint Video Exploration Team (JVET) of the International Organization for Standardization (ISO)/International Electrotechnical Commission (IEC) and International Telecommunication Union Telecommunication Standardization Sector (ITU-T) has developed a next-generation video coding standard H.266/Versatile Video Coding (VVC).

H.266/VVC includes a cross-color component prediction technology. However, there is a large deviation between a predicted value of a Coding Block (CB) calculated by the cross-color component prediction technology of H.266/VVC and an original value, which results in a low prediction accuracy, results in reduction of quality of a decoded video, and reduces coding performance.

SUMMARY

Embodiments of the disclosure provide a method and apparatus for encoding, a method and apparatus for decoding, a device for encoding, a device for decoding, and a storage medium, which may not only improve accuracy of chroma prediction and save bitrates, but also improve encoding and decoding performance.

Technical solutions of the embodiments of the disclosure may be implemented as follows.

According to a first aspect, an embodiment of the disclosure provides a method for decoding, the method includes the following operations.

Reference information of a current block is determined.

A filtering process is performed on partial information in the reference information of the current block, to determine target information of the current block.

A respective one of weighting coefficients is determined according to each of reference sample values of a first color component in the target information.

A prediction block of a second color component of the current block is determined according to the weighting coefficients and reference sample values of a second color component in the target information.

Reconstructed values of second color component samples of the current block are determined according to the prediction block.

According to a second aspect, an embodiment of the disclosure provides a method for encoding, the method includes the following operations.

Reference information of a current block is determined.

A filtering process is performed on partial information in the reference information of the current block, to determine target information of the current block.

A respective one of weighting coefficients is determined according to each of reference sample values of a first color component in the target information.

A prediction block of a second color component of the current block is determined according to the weighting coefficients and reference sample values of a second color component in the target information.

Predicted difference values of second color component samples of the current block are determined according to the prediction block.

According to a third aspect, an embodiment of the disclosure provides an apparatus for encoding, the apparatus includes a first determination unit, a first filtering unit, and a first prediction unit.

The first determination unit is configured to determine reference information of a current block.

The first filtering unit is configured to perform a filtering process on partial information in the reference information of the current block, to determine target information of the current block.

The first determination unit is further configured to determine a respective one of weighting coefficients according to each of reference sample values of a first color component in the target information.

The first prediction unit is configured to determine a prediction block of a second color component of the current block according to the weighting coefficients and reference sample values of a second color component in the target information.

The first determination unit is further configured to determine predicted difference values of second color component samples of the current block according to the prediction block.

According to a fourth aspect, an embodiment of the disclosure provides a device for encoding, the device includes a first memory and a first processor.

The first memory is configured to store a computer program executable on the first processor.

The first processor is configured to perform the method as described in the second aspect when it executes the computer program.

According to a fifth aspect, an embodiment of the disclosure provides an apparatus for decoding, the apparatus includes a second determination unit, a second filtering unit, and a second prediction unit.

The second determination unit is configured to determine reference information of a current block.

The second filtering unit is configured to perform a filtering process on partial information in the reference information of the current block, to determine target information of the current block.

The second determination unit is further configured to determine a respective one of weighting coefficients according to each of reference sample values of a first color component in the target information.

The second prediction unit is configured to determine a prediction block of a second color component of the current block according to the weighting coefficients and reference sample values of a second color component in the target information.

The second determination unit is further configured to determine reconstructed values of second color component samples of the current block according to the prediction block.

According to a sixth aspect, an embodiment of the disclosure provides a device for decoding, the device includes a second memory and a second processor.

The second memory is configured to store a computer program executable on the second processor.

The second processor is configured to perform the method as described in the first aspect when it executes the computer program.

According to a seventh aspect, an embodiment of the disclosure provides a computer-readable storage medium, the computer-readable storage medium stores a computer program, the computer program implements the method as described in the first aspect or the method as described in the second aspect when it is executed.

The embodiments of the disclosure provide a method and apparatus for encoding, a method and apparatus for decoding, a device for encoding, a device for decoding, and a storage medium. No matter at an encoding side or a decoding side, reference information of a current block is determined; a filtering process is performed on partial information in the reference information of the current block, to determine target information of the current block; a respective one of weighting coefficients is determined according to each of reference sample values of a first color component in the target information; a prediction block of a second color component of the current block is determined according to the weighting coefficients and reference sample values of a second color component in the target information. In this way, at the encoding side, predicted difference values of second color component samples of the current block may be determined according to the prediction block, so that at the decoding side, reconstructed values of the second color component samples of the current block may be determined according to the prediction block. Therefore, with respect to color component information in the neighboring area of the current block and color component information in the current block, accuracy of these reference information may be improved since characteristics of color format information are fully considered; and upsampling, downsampling or other filtering processes are performed on these reference information, so that continuity of spatial correlation thereof may be enhanced to a certain extent, or some information with weak spatial correlation may be removed, chroma prediction may be performed better by using the target information obtained after the filtering processes, thereby improving accuracy of the chroma prediction, saving bitrates, while improving encoding and decoding performance.

BRIEF DESCRIPTION OF THE DRAWINGS

FIG. 1 is a schematic distribution diagram of valid neighboring areas.
FIG. 2 is a schematic distribution diagram of selection areas in different prediction modes.
FIG. 3 is a schematic flowchart of a solution of deriving model parameters.
FIG. 4A is a schematic block diagram of composition of an encoder provided in an embodiment of the disclosure.
FIG. 4B is a schematic block diagram of composition of a decoder provided in an embodiment of the disclosure.
FIG. 5 is a first schematic flowchart of a method for decoding provided in an embodiment of the disclosure.
FIG. 6 is a first schematic diagram of a reference area of a current block provided in an embodiment of the disclosure.
FIG. 7A is a schematic diagram of a downsampling position of reference luma information provided in an embodiment of the disclosure.

FIG. 7B is a schematic diagram of an upsampling position of reference chroma information provided in an embodiment of the disclosure.

FIG. 8 is a schematic diagram of a rearranged position of reference luma information provided in an embodiment of the disclosure.

FIG. 9 is a schematic diagram of weighted prediction of a Weight-based Chroma Prediction (WCP) mode and other prediction modes provided in an embodiment of the disclosure.

FIG. 10 is a schematic framework diagram of a weight-based chroma prediction provided in an embodiment of the disclosure.

FIG. 11 is a second schematic flowchart of a method for decoding provided in an embodiment of the disclosure.

FIG. 12 is a first schematic diagram of an upsampling interpolation process provided in an embodiment of the disclosure.

FIG. 13 is a second schematic diagram of an upsampling interpolation process provided in an embodiment of the disclosure.

FIG. 14 is a schematic diagram of weight values for upsampling interpolation provided in an embodiment of the disclosure.

FIG. 15 is a third schematic diagram of an upsampling interpolation process provided in an embodiment of the disclosure.

FIG. 16 is a third schematic flowchart of a method for decoding provided in an embodiment of the disclosure.

FIG. 17 is a second schematic diagram of a reference area of a current block provided in an embodiment of the disclosure.

FIG. 18 is a first schematic flowchart of a method for encoding provided in an embodiment of the disclosure.

FIG. 19 is a second schematic flowchart of a method for encoding provided in an embodiment of the disclosure.

FIG. 20 is a schematic structural diagram of composition of an apparatus for encoding provided in an embodiment of the disclosure.

FIG. 21 is a schematic diagram of a specific hardware structure of a device for encoding provided in an embodiment of the disclosure.

FIG. 22 is a schematic structural diagram of composition of an apparatus for decoding provided in an embodiment of the disclosure.

FIG. 23 is a schematic diagram of a specific hardware structure of a device for decoding provided in an embodiment of the disclosure.

FIG. 24 is a schematic structural diagram of composition of a system for encoding and decoding provided in an embodiment of the disclosure.

DETAILED DESCRIPTION

In order to understand characteristics and technical contents of the embodiments of the disclosure in more detail, implementations of the embodiments of the disclosure will be described in detail below with reference to the drawings. The drawings are only for reference and illustration, and are not intended to limit the embodiments of the disclosure.

Unless otherwise defined, all technical and scientific terms used here have the same meaning as usually understood by technicians in the technical field to which the disclosure belongs. The terms used here are only for the purpose of describing the embodiments of the disclosure, and are not intended to limit the disclosure.

In the following descriptions, reference is made to "some embodiments" which describe a subset of all possible embodiments, however, it may be understood that "some embodiments" may be the same or different subsets of all possible embodiments, and may be combined with each other without conflict. It should also be pointed out that terms "first \second\third" involved in the embodiments of the disclosure are only intended to distinguish similar objects, and do not represent a specific order of the objects. It may be understood that specific orders or sequences of "first\second\third" may be interchanged if allowable, so that the embodiments of the disclosure described here may be implemented in an order besides that illustrated or described here.

In a video image, a Coding Block (CB) is usually characterized by using a first color component, a second color component and a third color component. Here, the three color components are a luma component, a blue chroma component, and a red chroma component respectively. Exemplarily, the luma component is usually indicated by a symbol Y, the blue chroma component is usually indicated by a symbol Cb or U, and the red chroma component is usually indicated by a symbol Cr or V. In this way, the video image may be represented in a YCbCr format or a YUV format. Furthermore, the video image may also be in a RGB format, a YCgCo format or the like, and the embodiments of the disclosure do not impose any limitation thereto.

It may be understood that in current processes of video image or video encoding and decoding, cross-component prediction technologies mainly include a Cross-component Linear Model (CCLM) prediction mode and a Multi-Directional Linear Model (MDLM) prediction mode, no matter model parameters derived according to the CCLM prediction mode or model parameters derived according to the MDLM prediction mode, prediction models corresponding thereto may implement prediction cross color components, such as from the first color component to the second color component, from the second color component to the first color component, from the first color component to the third color component, from the third color component to the first color component, from the second color component to the third color component, or from the third color component to the second color component, etc.

Taking the prediction from the first color component to the second color component as an example, it is assumed that the first color component is the luma component and the second color component is the chroma component, then in order to reduce redundancy between the luma component and the chroma component, the CCLM prediction mode is used in H.266/Versatile Video Coding (VVC), that is, a predicted value of chroma is created according to a reconstructed luma value of the same CB, such as $Pred_c(i,j) = \alpha \cdot Rec_L(i,j) + \beta$.

Here, $i, j$ indicate a position coordinate of a to-be-predicted pixel in the CB, $i$ indicates a horizontal direction, and $j$ indicates a vertical direction; $Pred_c(i,j)$ indicates a predicted chroma value corresponding to the to-be-predicted pixel in the CB with the position coordinate $(i, j)$, $Rec_L(i,j)$ indicates a reconstructed luma value corresponding to the to-be-predicted pixel in the same CB with the (downsampled) position coordinate $(i, j)$. Furthermore, $\alpha$ and $\beta$ indicate model parameters, which may be derived from reference pixels.

With respect to a CB, a neighboring area thereof may be divided into five parts: a left neighboring area, an upper neighboring area, a lower left neighboring area, an upper left neighboring area, and an upper right neighboring area. H.266/VVC includes three CCLM prediction modes, which are a left and upper neighboring intra-CCLM prediction mode (it may be indicated by INTRA_LT_CCLM), a left and lower left neighboring intra-CCLM prediction mode (it may be indicated by INTRA_L_CCLM), and an upper and upper right neighboring intra-CCLM prediction mode (it may be indicated by INTRA_T_CCLM) respectively. Each of the three prediction modes may select a preset number (such as 4) of reference pixels to derive the model parameters $\alpha$ and $\beta$. A biggest difference between the three prediction modes lies in that selection areas corresponding to the reference pixels for deriving the model parameters $\alpha$ and $\beta$ are different.

Specifically, a size of the CB corresponding to the chroma component is WxH, it is assumed that an upper selection area corresponding to the reference pixels is W', and a left selection area corresponding to the reference pixels is H', then the reference pixels are selected as follows.

With respect to the INTRA_LT_CCLM mode, the reference pixels may be selected from the upper neighboring area and the left neighboring area, that is, W'=W, H'=H.

With respect to the INTRA_L_CCLM mode, the reference pixels may be selected from the left neighboring area and the lower left neighboring area, that is, H'=W+H, and W'=0 is set.

With respect to the INTRA_T_CCLM mode, the reference pixels may be selected from the upper neighboring area and the upper right neighboring area, that is, W'=W+H, and H'=0 is set.

It should be noted that in VTM, at most only pixels in the W range are stored in the upper right neighboring area, and at most only pixels in the H range are stored in the lower left neighboring area. Although the range of selection areas of the INTRA_L_CCLM mode and the INTRA_T_CCLM mode is defined as W+H, in an actual application, the selection area of the INTRA_L_CCLM mode will be limited to H+H, and the selection area of the INTRA_T_CCLM mode will be limited to W+W, then the reference pixels are selected as follows.

With respect to the INTRA_L_CCLM mode, the reference pixels may be selected from the left neighboring area and the lower left neighboring area, that is, H'=min{W+H, H+H}.

With respect to the INTRA_T_CCLM mode, the reference pixels may be selected from the upper neighboring area and the upper right neighboring area, that is, W'=min{W+H, W+W}.

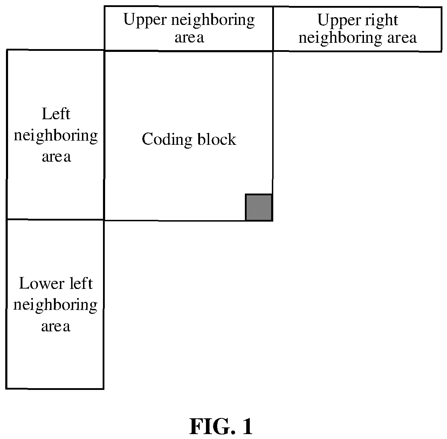

With reference to FIG. 1, a schematic distribution diagram of valid neighboring areas is shown. In FIG. 1, the left neighboring area, the lower left neighboring area, the upper neighboring area and the upper right neighboring area are all valid. Furthermore, the block filled with gray is the to-be-predicted pixel in the CB with the position coordinate $(i,j)$.

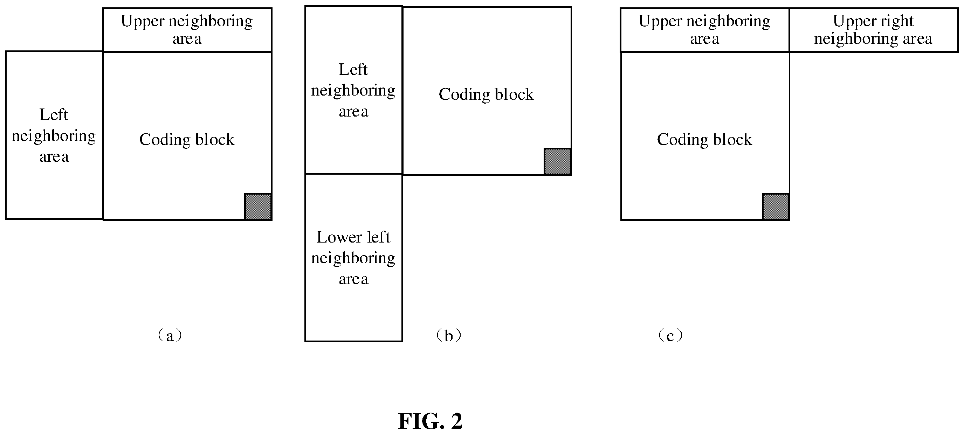

In this way, based on FIG. 1, selection areas for three prediction modes are shown in FIG. 2. In FIG. 2, (a) shows the selection area of the INTRA_LT_CCLM mode, including the left neighboring area and the upper neighboring area; (b) shows the selection area of the INTRA_L_CCLM mode, including the left neighboring area and the lower left neighboring area; (c) shows the selection area of the INTRA_T_CCLM mode, including the upper neighboring area and the upper right neighboring area. In this way, after the selection areas of the three prediction modes are determined, selection of pixels for deriving model parameters may be performed in the selection areas. The pixels selected as such may be referred to as reference pixels, and a number of the reference pixels is four usually; and with respect to a CB with a determined size of WxH, positions of the reference pixels are usually determined.

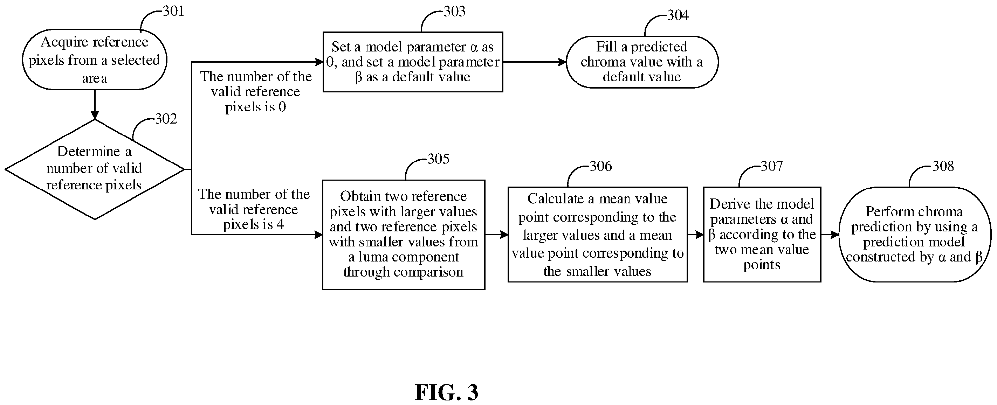

After a preset number of reference pixels are acquired, chroma prediction is currently performed according to a schematic flowchart of a solution of deriving model parameters shown in FIG. 3. According to processes shown in FIG. 3, it is assumed that the preset number is 4, the processes may include the following operations S301 to S308.

At S301, reference pixels are acquired from a selected area.

At S302, a number of valid reference pixels is determined.

At S303, if the number of the valid reference pixels is 0, a model parameter $\alpha$ is set as 0, and a model parameter $\beta$

is set as a default value.

At S304, a predicted chroma value is filled with a default value.

At S305, if the number of the valid reference pixels is 4, two reference pixels with larger values and two reference pixels with smaller values from a luma component are obtained through comparison.

At S306, a mean value point corresponding to the larger values and a mean value point corresponding to the smaller values are calculated.

At S307, the model parameters $\alpha$ and $\beta$ are derived according to the two mean value points.

At S308, chroma prediction is performed by using a prediction model constructed by $\alpha$ and $\beta$.

It should be noted that in VVC, the operation in which the number of valid reference pixels is 0, is determined according to validity of neighboring areas.

It should also be noted that the prediction model is constructed by using a principle of "two points determine a straight line", and the two points here may be referred to as fitting points. In the current technical solution, after four reference pixels are acquired, two reference pixels with larger values and two reference pixels with smaller values in the luma component are obtained through comparison. Then a mean value point (which may be indicated by $mean_{max}$) is calculated according to the two reference pixels with larger values, and another mean value point (which may be indicated by $mean_{min}$) is calculated according to the two reference pixels with smaller values, so that two mean value points $mean_{max}$ and $mean_{min}$ may be obtained. Then $mean_{max}$ and $mean_{min}$ are used as two fitting points, so that the model parameters (indicated by $\alpha$ and $\beta$) may be derived. Finally, the prediction model is constructed according to $\alpha$ and $\beta$, and prediction process of the chroma component is performed according to the prediction model.

However, in the related art, the chroma component is predicted by using a simple linear model $Pred_c(i,j) = \alpha \cdot Rec_L(i,j) + \beta$ for each CB, and a pixel at any position of each CB is predicted by using the same model parameters $\alpha$ and $\beta$. This may result in defects as follows. On one hand, CBs with different content characteristics perform mapping from luma to chroma by using a simple linear model, to achieve chroma prediction, however, not the mapping function from luma to chroma in any CB may accurately fit according to the simple linear model, which results in inaccurate prediction results of some CBs. On the other hand, during prediction, pixel points at different positions in the CB use the same model parameters $\alpha$ and $\beta$, and there are also large differences in prediction accuracy at different positions in the CB. On the other hand, during prediction with CCLM technology, high correlation between reconstructed luma information of a current block and reference information of the neighboring area is not fully considered, which may result in that some CBs cannot be accurately predicted with this technology, thereby affecting gain effects of this technology. Simply speaking, in case of the current CCLM technology, there are large deviations between predicted values and original values of some CBs, resulting in a low prediction accuracy, reducing quality, and thus reducing encoding and decoding efficiencies.

Based on this, an embodiment of the disclosure provides a method for encoding, in which reference information of a current block is determined; a filtering process is performed on partial information in the reference information of the current block, to determine target information of the current block; a respective one of weighting coefficients is determined according to each of reference sample values of a first color component in the target information; a prediction block of a second color component of the current block is determined according to the weighting coefficients and reference sample values of a second color component in the target information; predicted difference values of second color component samples of the current block are determined according to the prediction block.

An embodiment of the disclosure further provides a method for decoding, in which reference information of a current block is determined; a filtering process is performed on partial information in the reference information of the current block, to determine target information of the current block; a respective one of weighting coefficients is determined according to each of reference sample values of a first color component in the target information; a prediction block of a second color component of the current block is determined according to the weighting coefficients and reference sample values of a second color component in the target information; reconstructed values of second color component samples of the current block are determined according to the prediction block.

In this way, with respect to color component information in the neighboring area of the current block and color component information in the current block, accuracy of these reference information may be improved since characteristics of color format information are fully considered; and upsampling, downsampling or other filtering processes are performed on these reference information, so that continuity of spatial correlation thereof may be enhanced to a certain extent, or some information with weak spatial correlation may be removed, chroma prediction may be performed better by using the target information obtained after the filtering processes, thereby improving accuracy of the chroma prediction, saving bitrates, while improving encoding and decoding performance.

Each embodiment of the disclosure will be described in detail below with reference to the drawings.

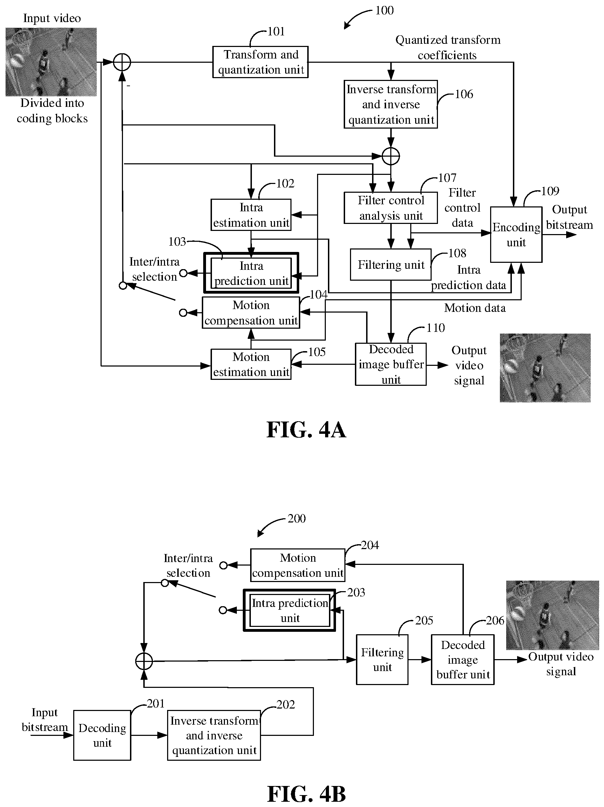

With reference to FIG. 4A, a schematic block diagram of composition of an encoder provided in an embodiment of the disclosure is shown. As shown in FIG. 4A, the encoder (specifically, a "video encoder") 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, a decoded image buffer unit 110, etc. The filtering unit 108 may implement de-blocking filtering and Sample Adaptive Offset (SAO) filtering, the encoding unit 109 may implement header information coding and Context-based Adaptive Binary Arithmetic Coding (CABAC). With respect to an input original video signal, a video CB may be obtained by division of a Coding Tree Unit (CTU), and then with respect to residual pixel information obtained after intra or inter prediction, the video CB is transformed by the transform and quantization unit 101, including that the residual information is transformed from a pixel domain to a transform domain, and resulting transform coefficients are quantized to further reduce bitrates. The intra estimation unit 102 and the intra prediction unit 103 are configured to perform intra prediction on the video CB; specifically, the intra estimation unit 102 and the intra prediction unit 103 are configured to determine an intra prediction mode to be used to encode the video CB. The motion compensation unit 104 and the motion estimation unit 105 is configured to perform inter prediction coding of the received video CB relative to one or more blocks in one or more reference frames, to provide temporal prediction information. Motion estimation performed by the motion estimation unit 105 is a process of generating a motion vector, the motion vector may estimate motion of the video CB, and then the motion compensation unit 104 performs motion compensation based on the motion vector determined by the motion estimation unit 105. After the intra prediction mode is determined, the intra prediction unit 103 is further configured to provide selected intra prediction data to the encoding unit 109, and the motion estimation unit 105 also sends calculated and determined motion vector data to the encoding unit 109. Furthermore, the inverse transform and inverse quantization unit 106 is used for reconstruction of the video CB, and reconstructs a residual block in the pixel domain, block effect artifacts are removed from the reconstructed residual block by the filter control analysis unit 107 and the filtering unit 108, and then the reconstructed residual block is added to a predictive block in frames of the decoded image buffer unit 110, to generate a reconstructed video CB. The encoding unit 109 is configured to encode various coding parameters and quantized transform coefficients. In a CABAC-based coding algorithm, contextual contents may be based on neighboring CBs, and may be configured to encode information indicating the determined intra prediction mode and output a bitstream of the video signal. The decoded image buffer unit 110 is configured to store the reconstructed video CB, for reference of prediction. As encoding of the video image proceeds, new reconstructed video CBs will be continuously generated, and these reconstructed video CBs will be stored in the decoded image buffer unit 110.

With reference to FIG. 4B, a schematic block diagram of composition of a decoder provided in an embodiment of the disclosure is shown. As shown in FIG. 4B, the decoder (specifically, a "video decoder") 200 includes a decoding unit 201, an inverse transform and inverse quantization unit 202, an intra prediction unit 203, a motion compensation unit 204, a filtering unit 205, a decoded image buffer unit 206, etc. The decoding unit 201 may implement header information decoding and CABAC decoding, and the filtering unit 205 may implement de-blocking filtering and SAO filtering. After an input video signal is subject to encoding processes of FIG. 4A, a bitstream of the video signal is output. The bitstream is input into the decoder 200, and first passes through the decoding unit 201 to obtain a decoded transform coefficient. The transform coefficient is processed by the inverse transform and inverse quantization unit 202, to generate a residual block in the pixel domain. The intra prediction unit 203 may be configured to generate prediction data of a current video decoding block based on the determined intra prediction mode and data from previously decoded blocks of the current frame or picture. The motion compensation unit 204 determines prediction information for the video decoding block by parsing motion vectors and other associated syntax elements, and uses the prediction information to generate a predictive block for the video decoding block being decoded. A decoded video block is formed by summing the residual block from the inverse transform and inverse quantization unit 202 and a corresponding predictive block generated by the intra prediction unit 203 or the motion compensation unit 204. The decoded video signal passes through the filtering unit 205 to remove block effect artifacts, which may improve video quality. Then, the decoded video block is stored in the decoded image buffer unit 206, the decoded image buffer unit 206 stores reference images for subsequent intra prediction or motion compensation, while is also configured to output a video signal, that is, the restored original video signal is obtained.

It should be noted that the methods according to the embodiments of the disclosure are mainly applied to the intra prediction unit 103 part as shown in FIG. 4A and the intra prediction unit 203 part as shown in FIG. 4B. That is, the embodiments of the disclosure may be applied to the encoder, or may be applied to the decoder, or even may be applied to both the encoder and the decoder simultaneously. However, the embodiments of the disclosure do not impose specific limitation thereto.

It should also be noted that when it is applied to the intra prediction unit 103 part, the "current block" specifically refers to a CB currently to be intra-predicted; when it is applied to the intra prediction unit 203 part, the "current block" specifically refers to a decoding block currently to be intra-predicted.

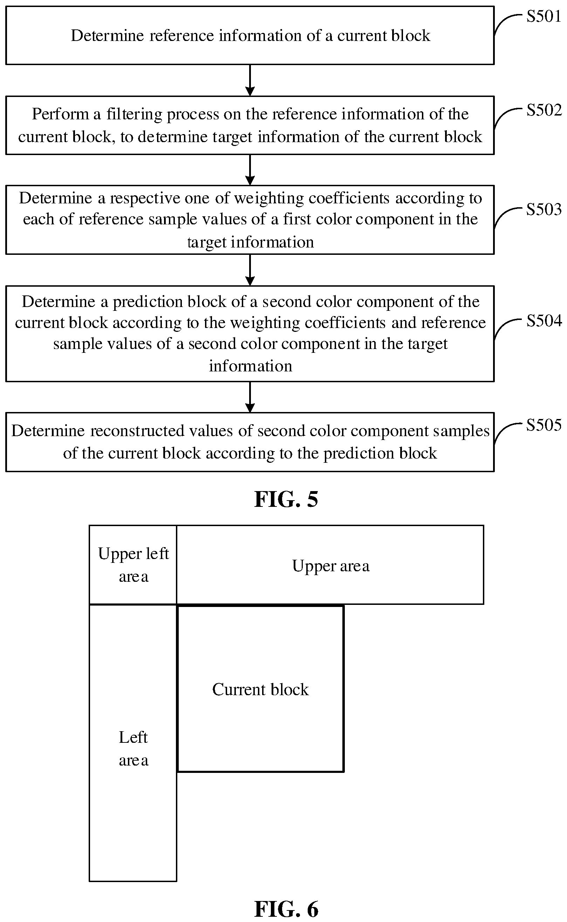

In an embodiment of the disclosure, with reference to FIG. 5, a first schematic flowchart of a method for decoding provided in an embodiment of the disclosure is shown. As shown in FIG. 5, the method may include the following operations S501 to S505.

At S501, reference information of a current block is determined.

It should be noted that the method for decoding according to the embodiment of the disclosure is applied to an apparatus for decoding, or a device for decoding integrated with the apparatus for decoding (which may also be referred to as a "decoder" for short). Furthermore, the method for decoding according to the embodiment of the disclosure may specifically refer to an intra prediction method, and more specifically, to a pre-processing operation method of Weight-based Chroma Prediction (WCP).

In the embodiment of the disclosure, a video image may be divided into multiple decoding blocks, each of the decoding blocks may include a first color component, a second color component, and a third color component, and a current block here refers to a decoding block currently to be intra-predicted in the video image. Furthermore, it is assumed that prediction of the first color component is performed on the current block, and the first color component is a luma component, that is, a to-be-predicted component is a luma component, then the current block may also be referred to as a luma prediction block. Alternatively, it is assumed that prediction of the second color component is performed on the current block, and the second color component is a chroma component, that is, the to-be-predicted component is the chroma component, then the current block may also be referred to as a chroma prediction block.

It should also be noted that in the embodiment of the disclosure, the reference information of the current block may include values of first color component samples in a neighboring area of the current block and values of second color component samples in the neighboring area of the current block. These samples may be determined according to decoded pixels in the neighboring area of the current block. In some embodiments, the neighboring area of the current block may include at least one of an upper neighboring area, an upper right neighboring area, a left neighboring area, or a lower left neighboring area.

Here, the upper neighboring area and the upper right neighboring area may be considered as an upper area as a whole, and the left neighboring area and the lower left neighboring area may be considered as a left area as a whole. Furthermore, the neighboring area may further include an upper left area, details thereof are shown in FIG. 6. When prediction of the second color component is performed on the current block, the upper area, the left area and the upper left area of the current block are used as the neighboring area, and may be referred to as a reference area of the current block, and pixels in the reference area are all decoded reference pixels.

Furthermore, the reference information of the current block may further include reconstructed values of first reference color component samples in the current block. Therefore, in some embodiments, the operation of determining the reference information of the current block may include the following operations.

The reference information of the current block is determined according to values of first color component samples in a neighboring area of the current block, values of second color component samples in the neighboring area of the current block, and the reconstructed values of first reference color component samples in the current block.

It should be noted that in the embodiment of the disclosure, the reference pixels of the current block may refer to reference pixel points neighboring the current block, or may be referred to as the first color component samples or the second color component samples in the neighboring area of the current block, and are indicated by Neighboring Samples or Reference Samples. "Neighboring" here may be spatially neighboring, but is not limited thereto. For example, "neighboring" may also be temporally neighboring, or spatially and temporally neighboring. Or even, the reference pixels of the current block may be reference pixels obtained after a certain process is performed on reference pixel points spatially neighboring, temporally neighboring, and spatially and temporally neighboring, etc. The embodiment of the disclosure does not impose any limitation thereto.

It should also be noted that in the embodiment of the disclosure, the first color component is the luma component, and the second color component is the chroma component. Then, the values of the first color component samples in the neighboring area of the current block are indicated as reference luma information corresponding to the reference pixels of the current block, and the values of the second color component samples in the neighboring area of the current block are indicated as reference chroma information corresponding to the reference pixels of the current block.

In some embodiments, determination of the reference pixels of the current block may include screening pixels in the neighboring area of the current block, to determine the reference pixels.

Specifically, in the embodiment of the disclosure, a first reference pixel set is formed according to the pixels in the neighboring area of the current block; then the first reference pixel set may be screened to determine the reference pixels. Here, a number of reference pixels may be M, and M is a positive integer. In other words, M reference pixels may be selected from the pixels in the neighboring area. The value of M may be 4 usually, but is not specifically limited.

It should also be noted that there may be some unimportant pixels (for example, there is a poor correlation between these pixels) or some abnormal pixels in the pixels in the neighboring area of the current block. In order to ensure accuracy of prediction, these pixels need to be removed to obtain valid reference pixels.

In a specific embodiment, the operation of screening pixels in the neighboring area, to determine the reference pixels may include the following operations.

Positions of to-be-selected pixels are determined based on color component intensities and/or positions of the pixels in the neighboring area.

The reference pixels are determined from the pixels in the neighboring area according to the positions of the to-be-selected pixels.

It should be noted that in the embodiment of the disclosure, the color component intensity may be indicated by color component information, such as reference luma information, reference chroma information, etc. Here, the greater the value of the color component information, the higher the color component intensity. In this way, with respect to screening the pixels in the neighboring area, the pixels in the neighboring area may be screened according to the positions of the pixels or according to the color component intensities, so that the reference pixels of the current block are determined according to the screened pixels, and the values of the first color component samples in the neighboring area of the current block and the values of the second color component samples in the neighboring area of the current block may be further determined.

At S502, a filtering process is performed on partial information in the reference information of the current block, to determine target information of the current block.

In the embodiment of the disclosure, since there is a case where a number of values of the first color component samples in the neighboring area of the current block is different from a number of values of the second color component samples in the neighboring area of the current block, at this time, it may need to perform the filtering process on the values of the first color component samples or the values of the second color component samples, so that the number of the values of the first color component samples is the same as the number of the values of the second color component samples. Furthermore, since a number of reconstructed values of the first reference color component samples in the current block is different from a preset size, at this time, it may also need to perform the filtering process on the reconstructed values of the first reference color component samples in the current block, to convert the number of reconstructed values of the first reference color component samples acquired from the current block into the preset size, for input. That is, with respect to the reference information of the current block, it may be that the filtering process is performed on only the values of the first color component samples in the neighboring area of the current block, or it may be that the filtering process is performed on only the values of the second color component samples in the neighboring area of the current block, or it may be that the filtering process is performed on only the reconstructed values of the first reference color component samples in the current block, or it may be that the filtering process is performed on any two of the above three values, or even it may be that the filtering process is performed on all the above three values, the embodiment of the disclosure does not impose any limitation thereto. These cases will be respectively described below.

In a possible implementation, the operation of performing the filtering process on the partial information in the reference information of the current block, to determine the target information of the current block may include the following operations.

A first filtering process is performed on the values of the first color component samples in the neighboring area of the current block, to obtain filtered sample values of a first color component in the neighboring area of the current block.

The target information of the current block is determined according to the filtered sample values of the first color component in the neighboring area of the current block.

In the embodiment of the disclosure, a number of filtered sample values (Samples) of the first color component in the neighboring area of the current block is equal to L, here, L indicates a number of the values (Samples) of the second color component samples in the neighboring area of the current block, and L is a positive integer.

In a specific embodiment, the first filtering process may be a downsampling filtering process. Exemplarily, a number of reference luma information of the current block is usually greater than a number of reference chroma information of the current block. Therefore, the downsampling filtering process may be performed on the reference luma information of the current block, so that the number of reference luma information is the same as the number of reference chroma information.

It should also be noted that since the number of reference luma information and the number of reference chroma information of the current block may also be affected by color format information, in some embodiments, the method may further include the following operation. The first filtering process is performed on the values of the first color component samples in the neighboring area of the current block based on color format information, to obtain the filtered sample values of the first color component in the neighboring area of the current block.

In a specific embodiment, the first filtering process may further include the following operations.

If the color format information indicates 4:4:4 sampling, downsampling filtering is not performed on the values of the first color component samples in the neighboring area of the current block.

If the color format information indicates 4:2:2 sampling, downsampling filtering is performed on the values of the first color component samples in the neighboring area of the current block.

If the color format information indicates 4:2:0 sampling, downsampling filtering is performed on the values of the first color component samples in the neighboring area of the current block.

It should be noted that in the embodiment of the disclosure, when the color format information indicates 4:2:0 sampling, a downsampling rate is a reciprocal of a positive integer multiple of 2.

It should also be noted that in the embodiment of the disclosure, the color format information may include 4:4:4 sampling, 4:2:2 sampling, 4:2:0 sampling, etc. If the color format information indicates 4:4:4 sampling (which may also be indicated by YUV444), that is, a ratio of luma samples to chroma samples is 4:4:4, then the number of reference luma information acquired from the neighboring area is the same as the number of reference chroma information acquired from the neighboring area, any action is not required. If the color format information indicates 4:2:2 sampling (which may also be indicated by YUV422), that is, the ratio of luma samples to chroma samples is 4:2:2, or if the color format information indicates 4:2:0 sampling (which may also be indicated by YUV420), that is, the ratio of luma samples to chroma samples is 4:1:1, then the number of reference luma information acquired from the neighboring area is different from the number of reference chroma information acquired from the neighboring area. At this time, it needs to perform downsampling filtering on the reference luma information acquired from the neighboring area, to match the number of reference chroma information.

In this way, with respect to downsampling filtering performed on the reference luma information acquired from the neighboring area, downsampling may be performed by using a multi-tap filter (such as a four-tap filter, a five-tap filter, a six-tap filter, etc.), or acquiring a certain pixel from multiple reference luma pixels at a corresponding position of a reference chroma pixel, or even using other downsampling modes, the embodiment of the disclosure does not impose specific limitation thereto.

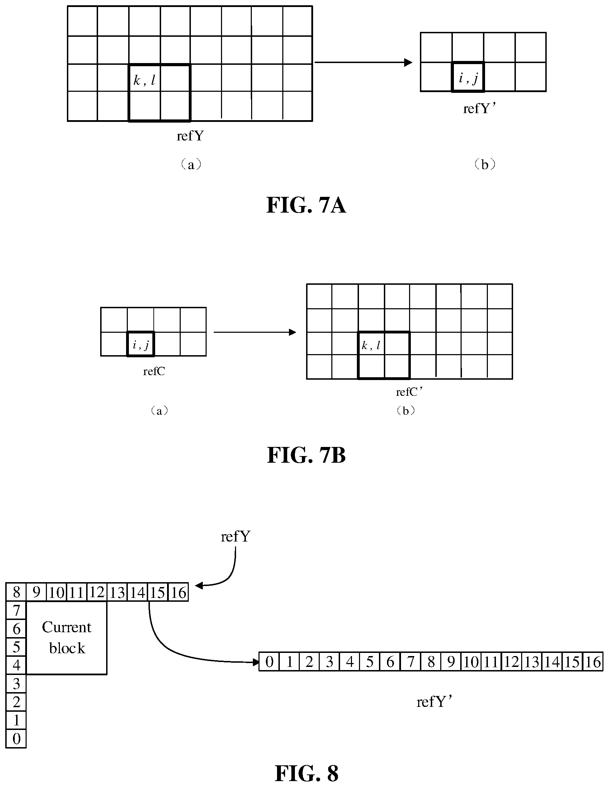

Exemplarily, as shown in FIG. 7A, when the color format information indicates 4:2:0 sampling, taking a neighboring area with a luma pixel size of 8×4 as an example, it needs to downsample the neighboring area into an area with a pixel size of 4×2 at this time. In FIG. 7A, (a) indicates the reference luma information refY, four luma pixels corresponding to a same chroma pixel are contained in a bold box, (k, l) is an upper left corner pixel position corresponding thereto; (b) indicates the downsampled reference luma information refY', a certain downsampled luma pixel is contained in a bold box, and the same chroma pixel corresponding to the four luma pixels contained in the bold box of (a) and the certain downsampled luma pixel are a pair of luma and chroma pixels at the same position; $(i, j)$ is a position of the downsampled luma pixel in the downsampled reference luma information, where $i=0, ..., 3, j=0, 1$.

Further, when a number of reference luma information after downsampling filtering is L and is the same as the number of reference chroma information, it also needs to match L with a preset number at this time. Therefore, in some embodiments, the method may further include the following operations.

L is compared with the preset number.

A second filtering process is performed on the filtered sample values of the first color component in the neighboring area of the current block and the values of the second color component samples in the neighboring area of the current block according to a comparison result between L and the preset number, to determine filtered neighboring sample values of a first color component of the current block and filtered neighboring sample values of the second color component of the current block.

The target information of the current block is determined according to the filtered neighboring sample values of the first color component of the current block and the filtered neighboring sample values of the second color component of the current block.

In a specific embodiment, the operation of performing the second filtering process on the filtered sample values of the first color component in the neighboring area of the current block and the values of the second color component samples in the neighboring area of the current block according to the comparison result between L and the preset number, to determine the filtered neighboring sample values of the first color component of the current block and the filtered neighboring sample values of the second color component of the current block may include the following operations.

If L is greater than the preset number, a first sub-filtering process is performed on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block.

If L is less than the preset number, a second sub-filtering process is performed on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block.

It should be noted that in the embodiment of the disclosure, the preset number may be indicated by inSize. Here, inSize indicates a number of inputs when prediction is performed based on the weighting coefficient, and a value of inSize is relevant to a type of the current block. Exemplarily, it is assumed that a width of the current block is nTbW and a height of the current block is nTbH, then the value of inSize may be 2×nTbH+2×nTbW, or may be 1.5×nTbH+1.5×nTbW, or even may be nTbH +nTbW, specific limitation is not imposed thereto here.

It should also be noted that in the embodiment of the disclosure, if L is equal to the preset number, no operation is required; if L is greater than the preset number, it needs to perform the first sub-filtering process (that is, reducing the size) on the reference luma information and the reference chroma information; if L is less than the preset number, it needs to perform the second sub-filtering process (that is, enlarging the size) on the reference luma information and the reference chroma information.

In another possible implementation, the operation of performing the filtering process on the partial information in the reference information of the current block, to determine the target information of the current block may include the following operations.

A third filtering process is performed on the values of the second color component samples in the neighboring area of the current block, to obtain filtered sample values of a second color component in the neighboring area of the current block.

The target information of the current block is determined according to the filtered sample values of the second color component in the neighboring area of the current block.

In the embodiment of the disclosure, a number of filtered sample values of the second color component in the neighboring area of the current block is equal to K, K indicates a number of the values of the first color component samples in the neighboring area of the current block, and K is a positive integer.

In a specific embodiment, the third filtering process is an upsampling filtering process. Exemplarily, the number of reference luma information of the current block is usually greater than the number of reference chroma information of the current block. Therefore, the upsampling filtering process may also be performed on the reference chroma information of the current block, so that the number of reference luma information is the same as the number of reference chroma information.

Since the number of reference luma information and the number of reference chroma information of the current block may also be affected by color format information, in some embodiments, the method may further include the following operation. The third filtering process is performed on the values of the second color component samples in the neighboring area of the current block based on color format information, to obtain the filtered sample values of the second color component in the neighboring area of the current block.

In a specific embodiment, the third filtering process may further include the following operations.

If the color format information indicates 4:4:4 sampling, upsampling filtering is not performed on the values of the second color component samples in the neighboring area of the current block.

If the color format information indicates 4:2:2 sampling, upsampling filtering is performed on the values of the second color component samples in the neighboring area of the current block.

If the color format information indicates 4:2:0 sampling, upsampling filtering is performed on the values of the second color component samples in the neighboring area of the current block.

It should be noted that in the embodiment of the disclosure, when the color format information indicates 4:2:0 sampling, an upsampling rate is a positive integer multiple of 2. In this way, when the number of reference luma information acquired from the neighboring area is different from the number of reference chroma information acquired from the neighboring area, upsampling filtering may be performed on the reference chroma information acquired from the neighboring area, to match the number of reference luma information.

In this way, with respect to upsampling filtering performed on the reference chroma information acquired from the neighboring area, upsampling may be performed by using linear interpolation, nonlinear interpolation or other modes, or copying a certain reference chroma pixel, or even using other upsampling modes, the embodiment of the disclosure does not impose specific limitation thereto.

Exemplarily, as shown in FIG. 7B, when the color format information indicates 4:2:0 sampling, taking a neighboring area with a chroma pixel size of 4×2 as an example, it needs to upsample the neighboring area into an area with a pixel size of 8×4 at this time. In FIG. 7B, (a) indicates the reference chroma information refC, (b) indicates the upsampled reference chroma information refC'. The chroma pixel corresponding to four upsampled chroma pixels contained in a bold box of (b) is contained in a bold box of (a), where $k$=0, ..., 3, $l$=0, 1. Four chroma pixels contained in the bold box of (b) are upsampled chroma pixels corresponding to the bold box of (a), and ($i, j$) is an upper left corner pixel position.

Further, when a number of reference chroma information after upsampling filtering is K and is the same as the number of reference luma information, it also needs to match K with a preset number at this time. Therefore, in some embodiments, the method may further include the following operations.

K is compared with the preset number.

A fourth filtering process is performed on the values of the first color component samples in the neighboring area of the current block and the filtered sample values of the second color component in the neighboring area of the current block according to a comparison result between K and the preset number, to determine filtered neighboring sample values of a first color component of the current block and filtered neighboring sample values of the second color component of the current block.

The target information of the current block is determined according to the filtered neighboring sample values of the first color component of the current block and the filtered neighboring sample values of the second color component of the current block.

In a specific embodiment, the operation of performing the fourth filtering process on the values of the first color component samples in the neighboring area of the current block and the filtered sample values of the second color component in the neighboring area of the current block according to the comparison result between K and the preset number, to determine the filtered neighboring sample values of the first color component of the current block and the filtered neighboring sample values of the second color component of the current block may include the following operations.

If K is greater than the preset number, a first sub-filtering process is performed on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block.

If K is less than the preset number, a second sub-filtering process is performed on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block.

It should be noted that in the embodiment of the disclosure, the preset number may be indicated by inSize. Specifically, if K is equal to inSize, no operation is required; if K is greater than inSize, it needs to perform the first sub-filtering process (that is, reducing the size) on the reference luma information and the reference chroma information; if K is less than inSize, it needs to perform the second sub-filtering process (that is, enlarging the size) on the reference luma information and the reference chroma information.

It may also be understood that in the embodiment of the disclosure, if the color format information is not considered, the number of reference luma information or the number of reference chroma information acquired from the neighboring area may also be directly matched with inSize, so that the number of reference luma information or the number of reference chroma information is the same as inSize.

In a possible implementation, the operation of performing the filtering process on the partial information in the reference information of the current block, to determine the target information of the current block may include the following operations.

A number of the values of the first color component samples in the neighboring area of the current block is determined as a first number.

A fifth filtering process is performed on the values of the first color component samples in the neighboring area of the current block according to a comparison result between the first number and a preset number, to determine filtered neighboring sample values of a first color component of the current block.

The target information of the current block is determined according to the filtered neighboring sample values of the first color component of the current block.

In a specific embodiment, the operation of performing the fifth filtering process on the values of the first color component samples in the neighboring area of the current block, to determine the filtered neighboring sample values of the first color component of the current block may include the following operations.

If the first number is greater than the preset number, a first sub-filtering process is performed on the values of the first color component samples in the neighboring area of the current block, to determine the filtered neighboring sample values of the first color component of the current block.

If the first number is less than the preset number, a second sub-filtering process is performed on the values of the first color component samples in the neighboring area of the current block, to determine the filtered neighboring sample values of the first color component of the current block.

It should be noted that in the embodiment of the disclosure, the number of reference luma information acquired from the neighboring area may be matched with the preset number. The number of reference luma information acquired from the neighboring area (that is, the first number) may be indicated by refYnum; the preset number may be indicated by inSize. Specifically, if refYnum is equal to inSize, no operation is required; if refYnum is greater than inSize, it needs to perform the first sub-filtering process (that is, reducing the size) on the reference luma information; if refYnum is less than inSize, it needs to perform the second sub-filtering process (that is, enlarging the size) on the reference luma information.

In another possible implementation, the operation of performing the filtering process on the partial information in the reference information of the current block, to determine the target information of the current block may further include the following operations.

A number of the values of the second color component samples in the neighboring area of the current block is determined as a second number.

A sixth filtering process is performed on the values of the second color component samples in the neighboring area of the current block according to a comparison result between the second number and a preset number, to determine filtered neighboring sample values of the second color component of the current block.

The target information of the current block is determined according to the filtered neighboring sample values of the second color component of the current block.

In a specific embodiment, the operation of performing the sixth filtering process on the values of the second color component samples in the neighboring area of the current block, to determine the filtered neighboring sample values of the second color component of the current block may include the following operations.

If the second number is greater than the preset number, a first sub-filtering process is performed on the values of the second color component samples in the neighboring area of the current block, to determine the filtered neighboring sample values of the second color component of the current block.

If the second number is less than the preset number, a second sub-filtering process is performed on the values of the second color component samples in the neighboring area of the current block, to determine the filtered neighboring sample values of the second color component of the current block.

It should also be noted that in the embodiment of the disclosure, the number of reference chroma information acquired from the neighboring area may be matched with the preset number. The number of reference chroma information acquired from the neighboring area (that is, the second number) may be indicated by refCnum; the preset number may be indicated by inSize. Specifically, if refCnum is equal to inSize, no operation is required; if refCnum is greater than inSize, it needs to perform the first sub-filtering process (that is, reducing the size) on the reference chroma information; if refCnum is less than inSize, it needs to perform the second sub-filtering process (that is, enlarging the size) on the reference chroma information.

Here, the first sub-filtering process may be a downsampling filtering process. Furthermore, in some embodiments, the first sub-filtering process may further include at least one of: a sub-filtering process is performed by using a fixed-interval position selection mode; or the sub-filtering process is performed by using a continuous position selection mode.

It should be noted that taking the reference luma information as an example, the number of reference luma information acquired from the neighboring area is refYnum. If the fixed-interval position selection mode is used to reduce the size, that is, refYnum reference luma pixels are arranged into a one-dimensional vector according to a certain position relationship, and then points are selected at a fixed interval according to a size relationship between inSize and refYnum, which may reduce the size of the reference luma information. As shown in FIG. 8, the reference luma information refY acquired in a "L"-shaped reference area with one row and one column may be rearranged into a one-dimensional vector refY' according to a position relationship from lower left to upper left and then from upper left to upper right. Here, the mode for arranging into the one-dimensional vector and the starting position for the fixed-interval selection may be set freely, any limitation is not imposed thereto here. In this way, it is assumed that the fixed interval used to reduce the size is subDist, then starting from a first pixel position of the one-dimensional vector, a pixel is selected every (subDist-1) pixel positions, and finally reference luma information of the number of inSize may be obtained.

It should also be noted that still taking the reference luma information as an example, if the continuous position selection mode is used to reduce the size, that is, refYnum reference luma pixels are arranged into a one-dimensional vector according to a certain position relationship, and then inSize pixels are continuously selected from a preset position of the one-dimensional vector, to obtain reference luma information of the number of inSize. The preset position may be a first pixel position or a pos-th pixel position, any limitation is not imposed thereto here.

Furthermore, the second sub-filtering process may be an upsampling filtering process. Furthermore, in some embodiments, the second sub-filtering process may further include: a sub-filtering process is performed by using a fixed-interval position interpolation mode.

It should be noted that if the fixed-interval position interpolation mode is used to enlarge the size, refCnum reference chroma pixels are arranged into a one-dimensional vector according to a certain position relationship, and then points are selected at a fixed interval according to a size relationship between inSize and refCnum, thereby enlarging the size of the reference chroma information. The mode for arranging into the one-dimensional vector and the starting position for the fixed-interval interpolation may be set freely, any limitation is not imposed thereto here. In this way, with respect to the reference luma information, after an arrangement mode similar to reducing size, the one-dimensional vector is obtained; then based on the fixed interval used to enlarge the size, starting from the first pixel position of the one-dimensional vector, reference luma information of the number of inSize may be obtained by interpolation finally.

Furthermore, it should be noted that after the first filtering process is performed on the values of the first color component samples in the neighboring area of the current block, the target information of the current block is determined according to the filtered neighboring sample values of the first color component of the current block. At this time, the target information may include the filtered neighboring sample values of the first color component of the current block, the values of the second color component samples in the neighboring area of the current block, and the reconstructed values of the first reference color component samples in the current block. Similarly, after the second filtering process is performed on the values of the second color component samples in the neighboring area of the current block, the target information of the current block is determined according to the filtered neighboring sample values of the second color component of the current block. At this time, the target information may include the filtered neighboring sample values of the second color component of the current block, the values of the first color component samples in the neighboring area of the current block, and the reconstructed values of the first reference color component samples in the current block. Alternatively, after the first filtering process is performed on the values of the first color component samples in the neighboring area of the current block, and the second filtering process is performed on the values of the second color component samples in the neighboring area of the current block, at this time, the target information may include the filtered neighboring sample values of the first color component of the current block, the filtered neighboring sample values of the second color component of the current block, and the reconstructed values of the first reference color component samples in the current block.

It may also be understood that if prediction of the chroma component is performed on the current block, the reference information of the current block may further include reconstructed luma information of the current block. Therefore, in some embodiments, the operation of determining the reference information of the current block may further include the following operation. The reference information of the current block is determined based on the reconstructed values of the first reference color component samples in the current block.

It should be noted that in the embodiment of the disclosure, the first reference color component may be a luma component; then, the reconstructed values of the first reference color component samples in the current block are the reconstructed luma information of the current block.

It should also be noted that in the embodiment of the disclosure, since a number of reconstructed luma information of the current block is different from a preset size, it also needs to perform a filtering process on the reconstructed luma information of the current block, to convert the number of reconstructed luma information acquired from the current block into the preset size, for input. Here, the preset size is predSizeW×predSizeH, predSizeW indicates a width of the prediction block, and predSizeH indicates a height of the prediction block.

In some embodiments, the operation of performing the filtering process on the partial information in the reference information of the current block, to determine the target information of the current block may include the following operations.

A seventh filtering process is performed on the reconstructed values of the first reference color component samples in the current block, to determine filtered sample values of the first reference color component samples in the current block.

The target information of the current block is determined according to the filtered sample values of the first reference color component samples in the current block.

In a specific embodiment, the operation of performing the seventh filtering process on the reconstructed values of the first reference color component samples in the current block, to determine the filtered sample values of the first reference color component samples in the current block may include the following operations.

A first width and a first height are determined according to the reconstructed values of the first reference color component samples in the current block.

If the first width is greater than a width of the prediction block, or the first height is greater than a height of the prediction block, a third sub-filtering process is performed on the reconstructed values of the first reference color component samples in the current block, to determine the filtered sample values of the first reference color component samples in the current block.

If the first width is less than the width of the prediction block, or the first height is less than the height of the prediction block, a fourth sub-filtering process is performed on the reconstructed values of the first reference color component samples in the current block, to determine the filtered sample values of the first reference color component samples in the current block.

It should be noted that in the embodiment of the disclosure, it is assumed that the number of reconstructed luma information is recSizeW×recSizeH, then recSizeW indicates the first width, and recSizeH indicates the first height. Specifically, if recSizeW is equal to predSizeW, and recSizeH is equal to predSizeH, no operation is required; if recSizeW is greater than predSizeW, or recSizeH is greater than predSizeH, it needs to perform the first sub-filtering process (that is, reducing the size) on the reconstructed luma information; if recSizeW is less than predSizeW, or recSizeH is less than predSizeH, it needs to perform the second sub-filtering process (that is, enlarging the size) on the reconstructed luma information.

It should also be noted that in the embodiment of the disclosure, the third sub-filtering process may be a downsampling filtering process. Furthermore, in some embodiments, the third sub-filtering process may further include at least one of: the downsampling filtering process is performed in a horizontal direction on the reconstructed values of the first reference color component samples in the current block; the downsampling filtering process is performed in a vertical direction on the reconstructed values of the first reference color component samples in the current block; the downsampling filtering process is performed in the horizontal direction and then in the vertical direction on the reconstructed values of the first reference color component samples in the current block; or the downsampling filtering process is performed in the vertical direction and then in the horizontal direction on the reconstructed values of the first reference color component samples in the current block.

Here, at first, a horizontal downsampling factor may be calculated according to recSizeW and predSizeW, and a vertical downsampling factor may be calculated according to recSizeH and predSizeH; then, downsampling filtering is performed on the reconstructed luma information according to the horizontal downsampling factor and the vertical downsampling factor. Specifically, if the horizontal downsampling factor is greater than 1 and the vertical downsampling factor is equal to 1, it only needs to perform downsampling in the horizontal direction on the reconstructed luma information; if the horizontal downsampling factor is equal to 1 and the vertical downsampling factor is greater than 1, it only needs to perform downsampling in the vertical direction on the reconstructed luma information; if the horizontal downsampling factor is greater than 1 and the vertical downsampling factor is greater than 1, it needs to perform downsampling in both

14

horizontal and vertical directions on the reconstructed luma information, here, downsampling in the horizontal direction and then in the vertical direction may be performed, or downsampling in the vertical direction and then in the horizontal direction may be performed, or even downsampling operations here may be replaced by convolution operations in a neural network structure, the embodiment of the disclosure does not impose any limitation thereto.

It should also be noted that in the embodiment of the disclosure, the fourth sub-filtering process is an upsampling filtering process. Furthermore, in some embodiments, the fourth sub-filtering process may further include at least one of: the upsampling filtering process is performed in a horizontal direction on the reconstructed values of the first reference color component samples in the current block; the upsampling filtering process is performed in a vertical direction on the reconstructed values of the first reference color component samples in the current block; the upsampling filtering process is performed in the horizontal direction and then in the vertical direction on the reconstructed values of the first reference color component samples in the current block; or the upsampling filtering process is performed in the vertical direction and then in the horizontal direction on the reconstructed values of the first reference color component samples in the current block.

Here, at first, a horizontal upsampling factor is calculated according to recSizeW and predSizeW, and a vertical upsampling factor is calculated according to recSizeH and predSizeH; then, upsampling filtering is performed on the reconstructed luma information according to the horizontal upsampling factor and the vertical upsampling factor. Specifically, if the horizontal upsampling factor is greater than 1 and the vertical upsampling factor is equal to 1, it only needs to perform upsampling in the horizontal direction on the reconstructed luma information; if the horizontal upsampling factor is equal to 1 and the vertical upsampling factor is greater than 1, it only needs to perform upsampling in the vertical direction on the reconstructed luma information; if the horizontal upsampling factor is greater than 1 and the vertical upsampling factor is greater than 1, it needs to perform upsampling in both horizontal and vertical directions on the reconstructed luma information, here, upsampling in the horizontal direction and then in the vertical direction may be performed, or upsampling in the vertical direction and then in the horizontal direction may be performed, or even an upsampling result of "in the horizontal direction and then in the vertical direction" and an upsampling result of "in the vertical direction and then in the horizontal direction" may be average-weighted to determine a final upsampling result, or even upsampling operations here may be replaced by convolution operations in a neural network structure, the embodiment of the disclosure does not impose any limitation thereto.

That is, in the embodiment of the disclosure, the reference information of the current block may include the values of the first color component samples in the neighboring area of the current block, the values of the second color component samples in the neighboring area of the current block, and the reconstructed values of the first reference color component samples in the current block. The target information may include the filtered neighboring sample values of the first color component of the current block, the filtered neighboring sample values of the second color component of the current block, and the filtered sample values of the first reference color component samples in the current block. If it does not need to perform a filtering process on the values of the first color component samples in the neighboring area of the current block, the filtered neighboring sample values of the first color component of the current block are equal to the values of the first color component samples in the neighboring area of the current block. Similarly, if it does not need to perform a filtering process on the values of the second color component samples in the neighboring area of the current block, the filtered neighboring sample values of the second color component of the current block are equal to the values of the second color component samples in the neighboring area of the current block. If it does not need to perform a filtering process on the reconstructed values of the first reference color component samples in the current block, the filtered sample values of the first reference color component samples in the current block are equal to the reconstructed values of the first reference color component samples in the current block.

In this way, the obtained target information may include the filtered neighboring sample values of the first color component of the current block, the filtered neighboring sample values of the second color component of the current block, and the filtered sample values of the first reference color component samples in the current block, that is, reference chroma information of the number of inSize, reference luma information of the number of inSize, and reconstructed luma information conforming to the preset size.

At S503, a respective one of weighting coefficients is determined according to each of reference sample values of a first color component in the target information.

It should be noted that in some embodiments, the method may further include the following operations. After determining the filtered neighboring sample values of the first color component of the current block, the filtered neighboring sample values of the second color component of the current block, and the filtered sample values of the first reference color component samples in the current block, each of the reference sample values of the first color component in the target information is set as an absolute value of a difference between a respective one of the filtered neighboring sample values of the first color component of the current block and a filtered sample value of a respective one of the first reference color component samples in the current block.

In some embodiments, the method may further include the following operation. The reference sample values of the second color component in the target information are set as the filtered neighboring sample values of the second color component of the current block.

Furthermore, considering the filtering process on the reference information, it may be that the filtering process is performed on only the reference luma information, or may be that the filtering process is performed on only the reconstructed luma information, or may be that the filtering process is performed on only the reference luma information and the reconstructed luma information, or even may be that the filtering process is performed on the reference chroma information, the reference luma information and the reconstructed luma information, any limitation is not imposed thereto here. Then, with respect to calculation of a luma difference, it may be an absolute value of a difference between the reference luma information and the reconstructed luma information, or may be an absolute value of a difference between the filtered reference luma information and the reconstructed luma information, or may be an absolute value of a difference between the reference luma information and the filtered reconstructed luma information, or even may be an absolute value of a difference between the filtered reference luma information and the filtered reconstructed luma information. Therefore, in the embodiment of the disclosure, with respect to the reference sample values of the first color component in the target information, the method may further include the following operations. Each of the reference sample values of the first color component in the target information is set as an absolute value of a difference between a value of a respective one of the first color component samples in the neighboring area of the current block and a reconstructed value of a respective one of the first reference color component samples in the current block; or, each of the reference sample values of the first color component in the target information is set as an absolute value of a difference between a respective one of the filtered neighboring sample values of the first color component of the current block and a reconstructed value of a respective one of the first reference color component samples in the current block; or, each of the reference sample values of the first color component in the target information is set as an absolute value of a difference between a value of a respective one of the first color component samples in the neighboring area of the current block and a filtered sample value of a respective one of the first reference color component samples in the current block, specific limitation is not imposed thereto here.

In some embodiments, the operation of determining the respective one of the weighting coefficients according to each of the reference sample values of the first color component in the target information may include the following operations.

A respective value corresponding to each of the reference sample values of the first color component under a preset mapping relationship is determined.

The respective one of the weighting coefficients is set to be equal to the respective value.

It should be noted that in the embodiment of the disclosure, each of the reference sample values of the first color component may be the absolute value of the difference between the respective one of the filtered neighboring sample values of the first color component of the current block and the filtered sample value of the respective one of the first reference color component samples in the current block. The first reference color component is the first color component, and the first color component is a color component different from the second color component to be predicted in the embodiment of the disclosure.

Exemplarily, it is assumed that the first color component is a chroma component and the second color component is a luma component, mainly a chroma component of a to-be-predicted pixel in the current block is predicted in the embodiment of the disclosure. First, at least one to-be-predicted pixel in the current block is selected, and a respective luma difference (indicated by $|\Delta C_k|$) between reconstructed chroma of each of the at least one to-be-predicted pixel and the reference chroma in the neighboring area is calculated respectively; chroma differences, in the neighboring area, of to-be-predicted pixels at different positions are different. Position of the reference pixel with a minimum chroma difference will follow variation of the to-be-predicted pixel in the current block. The size of the chroma difference usually indicates a degree of similarity between chroma. If $|\Delta C_k|$ is small, it indicates that similarity between chroma values is relatively strong, and a large weight may be provided to a weighting coefficient (indicated by $w_k$) corresponding thereto. On the contrary, if $|\Delta C_k|$ is large, it indicates that similarity between chroma values is relatively weak, and a small weight may be provided to $w_k$. That is, a relationship between $w_k$ and $|\Delta C_k|$ is approximately in an inverse ratio. In this way, a preset mapping relationship may be established according to $|\Delta C_k|$, which is shown as follows.

$$w_k = f(|\Delta C_k|) \qquad (1)$$

Here, taking formula (1) as an example, $|\Delta C_k|$ indicates the reference sample value of the first color component, $f(|\Delta C_k|)$ indicates the value corresponding to the reference sample value of the first color component under the preset mapping relationship, $w_k$ indicates the weighting coefficient, that is, $w_k$ is set to be equal to $f(|\Delta C_k|)$.

It should also be noted that in the embodiment of the disclosure, if a number of reference sample values of the second color component is N, then a number of weighting coefficients is also N. A sum of the N weighting coefficients is equal to 1, and each of the weighting coefficients is a value equal to or greater than 0 and less than or equal to 1, that is, $0 \le w_k \le 1$. However, it should be noted that "a sum of the N weighting coefficients is equal to 1" is only a theoretical concept. In an actual fixed-point implementation process, an absolute value of the weighting coefficient may be greater than 1.

It may be understood that in probability theory and relevant fields, a normalized exponential function, or a Softmax function, is generalization of a logical function. It may "compress" an N-dimensional vector z containing any real number into another N-dimensional vector σ(z), so that a range of each element is between (0, 1), and a sum of all elements is 1. It is often used as a nonlinear activation function for a multi-classification neural network. The Softmax function is shown as follows.

$$\text{Softmax}(x_i) = \frac{e^{x_i}}{\sum_j e^{x_i}} \qquad (2)$$

However, the Softmax function may satisfy conditional constraints of $w_k$, but a function value thereof increases with the increase of vector elements, which does not conform to the approximately inverse ratio relationship between $w_k$ and $|\Delta C_k|$. Therefore, in order to adapt to design of $w_k$ and meet expectation of nonlinearity of $w_k$, the Softmax function with a parameter $\gamma$ may be proposed to implement the $f$ function of formula (1), which is shown as follows for the details.

$$f(x_i) = \frac{e^{\gamma x_i}}{\sum_j e^{\gamma x_i}} \qquad (3)$$

In order to implement the approximately inverse ratio relationship between $w_k$ and $|\Delta C_k|$, $\gamma$ may be limited to a negative number. That is, when a first reference color component parameter is $|\Delta C_k|$, the mapping relationship between $|\Delta C_k|$ and $w_k$ may be indicated by:

$$w_k = f(\gamma, |\Delta C_k|) = \frac{e^{\gamma |\Delta C_k|}}{\sum_j e^{\gamma |\Delta C_k|}} \qquad (4)$$

According to formula (4), in some embodiments, the operation of determining the respective value corresponding to each of the reference sample values of the first color component under the preset mapping relationship may include the following operations.

A first factor is determined.

A respective first product value is determined according to the first factor and each of the reference sample values of the first color component.

A value corresponding to the respective first product value under the preset mapping relationship is determined.

It should be noted that in the embodiment of the disclosure, the first factor is a constant value less than zero. Taking the Softmax function as an example, in formula (4), $\gamma$ indicates the first factor, $|\Delta C_k|$ indicates the first reference color component parameter, $\gamma |\Delta C_k|$ indicates the first product value, $w_k$ indicates the weighting coefficient; where $k$=1, 2, ..., N.

In a specific embodiment, the operation of determining the first factor may include: the first factor is a preset constant value.

It should be noted that in this case, with respect to $\gamma$, a weighting coefficient distribution of neighboring chroma may be adjusted according to relatively flat characteristics of chroma, thereby capturing a weighting coefficient distribution suitable for natural image chroma prediction. In order to determine the parameter $\gamma$ suitable for natural image chroma prediction, a given $\gamma$ set is traversed, and whether $\gamma$ is suitable is measured by a difference between predicted and original chroma under different $\gamma$. Exemplarily, $\gamma$ may take $-2^\varepsilon$, here $\varepsilon \in \{1, 0, -1, -2, -3\}$; it is found after experiments that in this $\gamma$ set, a best value of $\gamma$ is -0.25. Therefore, in a specific embodiment, $\gamma$ may be set as -0.25, however, the embodiment of the disclosure does not impose specific limitation thereto.

In another specific embodiment, the operation of determining the first factor may include the following operation. A value of the first factor is determined according to size parameters of the current block.

Further, in some embodiments, the method may further include the following operation. The value of the first factor is determined according to a preset look-up table mapping the size parameters of the current block to the value of the first factor.

Here, the size parameters of the current block may include at least one of a width of the current block, a height of the current block, or a product of the width and height of the current block.

It should be noted that in the embodiment of the disclosure, a classification mode may be used to fix the value of the first factor. For example, size parameters according to the current block are divided into three categories, and a respective value of the first factor corresponding to each of the categories is determined. In this case, in the embodiment of the disclosure, a look-up table mapping the size parameters of the current block to the value of the first factor may also be stored in advance, and then the value of the first factor may be determined according to the look-up table. Exemplarily, Table 1 shows a correspondence between the first factor and the size parameters of the current block provided in an embodiment of the disclosure. It should be noted that Table 1 is only an exemplary look-up table, specific limitation is not imposed thereto.

Table 1

| size parameters of current block | first factor |
|---|---|
| Min(W, H)<=4 | -0.125 |
| Min(W, H)>4&&Min(W, H)<=16 | -0.0833 |
| Min(W, H)>16 | -0.0625 |

In yet another specific embodiment, the operation of determining the first factor may include the following operation. The value of the first factor is determined according to a number of reference pixels of the current block.

Further, in some embodiments, the method may further include the following operation. The value of the first factor is determined according to a preset look-up table mapping the number of reference pixels of the current block to the value of the first factor.

It should be noted that in the embodiment of the disclosure, the number of reference pixels may be divided into three categories, and a classification mode is still used to fix the value of the first factor. For example, the number of reference pixels according to the current block is divided into three categories, and a value of the first factor corresponding to each of the categories is determined. In this case, in the embodiment of the disclosure, a look-up table mapping the number of reference pixels of the current block to the value of the first factor may also be stored in advance, and then the value of the first factor may be determined according to the look-up table. Exemplarily, Table 2 shows a correspondence between the first factor and the number of reference pixels of the current block provided in an embodiment of the disclosure. It should be noted that Table 2 is only an exemplary look-up table, specific limitation is not imposed thereto.

Table 2

| number of reference pixels | first factor |
|---|---|
| 0<R<16 | -0.1113 |
| 16<=R<32 | -0.0773 |
| R>=32 | -0.0507 |

Further, with respect to the first product value, the operation of determining the respective first product value according to the first factor and each of the reference sample values of the first color component may include the following operations.

The respective first product value is set to be equal to a product of the first factor and each of the reference sample values of the first color component.

Or, the respective first product value is set to be equal to a value obtained by bit-right-shifting of each of the reference sample values of the first color component, here, a number of bits of the bit-right-shifting is equal to the first factor.

Or, the respective first product value is set as a value obtained by addition and bit-shifting operations of each of the reference sample values of the first color component according to the first factor.

Exemplarily, it is assumed that the first factor is equal to 0.25 and the reference sample value of the first color component is indicated by Ref, then the first product value may be equal to $0.25 \times Ref$, and $0.25 \times Ref$ may be written as Ref/4, that is, Ref>>2. Furthermore, during fixed-point calculation, floating-point numbers may be converted into addition and shifting operations; that is, any limitation is not imposed to calculation modes of the first product value.

It may also be understood that in the embodiment of the disclosure, the first color component may also be a luma component, and the second color component may be a chroma component. At this time, at least one to-be-predicted pixel in the current block is selected, and a respective luma difference (indicated by $|\Delta Y_k|$) between reconstructed luma of each of the at least one to-be-predicted pixel and the reference luma in the neighboring area is calculated respectively. If $|\Delta Y_k|$ is small, it indicates that similarity between luma values is relatively strong, and a large weight may be provided to a weighting coefficient (indicated by $w_k$) corresponding thereto. On the contrary, if $|\Delta Y_k|$ is large, it indicates that similarity between luma values is relatively weak, and a small weight may be provided to $w_k$. That is, when the weighting coefficient is calculated, the reference sample value of the first color component may also be $|\Delta Y_k|$, and then the weighting coefficient is calculated.

It should be noted that when the chroma component of the to-be-predicted pixel in the current block is predicted, since value of the chroma component of the to-be-predicted pixel cannot be determined directly, the chroma difference $|\Delta C_k|$ between the reference pixel and the to-be-predicted pixel cannot be obtained directly. However, there is a strong correlation between components in a local area of the current block. At this time, $|\Delta C_k|$ may be derived according to the luma difference $|\Delta Y_k|$ between the reference pixel and the to-be-predicted pixel; that is, $|\Delta C_k|$ may be obtained according to a product of $|\Delta Y_k|$ and a second factor. In this way, the first product value is equal to a product of the first factor and $|\Delta Y_k|$.

That is, in the embodiment of the disclosure, the reference sample value of the first color component may be $|\Delta C_k|$, that is, an absolute value of the chroma difference; or may be $|\Delta Y_k|$, that is, an absolute value of the luma difference; or may be $|\alpha \Delta Y_k|$, that is, a product of the absolute value of the luma difference and a preset multiplier, etc. The preset multiplier here is the second factor described in the embodiment of the disclosure.

Further, with respect to the second factor, in a specific embodiment, the method may further include the following operation. A least square method calculation is performed according to first and second color component values of the reference pixel, to determine the second factor.

That is, it is assumed that a number of reference pixels is N, the first color component value of the reference pixel is the reference luma information of the current block, and the second color component value of the reference pixel is the reference chroma information of the current block, then a least square method calculation may be performed on chroma component values and luma component values of the N reference pixels, to obtain the second factor. Exemplarily, a least square regression calculation is shown as follows.

$$\alpha = \frac{N \sum_k L_k \cdot C_k - \sum_k C_k \sum_k L_k}{N \sum_k L_k \cdot L_k - \sum_k L_k \sum_k L_k} \tag{5}$$

Where $L_k$ indicates a luma component value of a k-th reference pixel, $C_k$ indicates a chroma component value of the k-th reference pixel, N indicates a number of reference pixels; $\alpha$ indicates the second factor, which may be obtained by using the least square regression calculation. It should be noted that the second factor may also be a fixed value, or finely adjusted based on the fixed value, or the like, the embodiment of the disclosure does not impose specific limitation thereto.

Furthermore, with respect to the preset mapping relationship, in some embodiments, the preset mapping relationship may be a preset function relationship. In some embodiments, the preset mapping relationship may be a Softmax function. The Softmax function is a normalized exponential function, however, normalization may not be required by the embodiment of the disclosure, and a value thereof is not limited to be in a range of [0, 1].

Exemplarily, taking $|\Delta Y_k|$ used as the reference sample value of the first color component as an example, then a weighting coefficient $w_k$ corresponding to the k-th reference pixel may be calculated by formula (4), or may be replaced by formulas as follows.

$$w_k = \frac{e^{-|\Delta Y_k|}}{\sum_j e^{-|\Delta Y_j|}} \tag{6}$$

$$w_k = \frac{e^{\frac{-|\Delta Y_k|}{S}}}{\sum_j e^{\frac{-|\Delta Y_j|}{S}}} \tag{7}$$

Where $S$ indicates a control parameter, and a relationship between $S$ and the first factor ($\gamma$) is $\gamma = -\frac{1}{S}$.

Exemplarily, the value of $S$ is relevant to the size parameters of the current block. The size parameters of the current block include the width and height of the current block. In a possible implementation, if a minimum value from the width and height is less than or equal to 4, the value of $S$ is equal to 8; if the minimum value from the width and height is greater than 4 and less than or equal to 16, the value of $S$ is equal to 12; if the minimum value from the width and height is greater than 16, the value of $S$ is equal to 16. In another possible implementation, if the minimum value from the width and height is less than or equal to 4, the value of $S$ is equal to 7; if the minimum value from the width and height is greater than 4 and less than or equal to 16, the value of S is equal to 11; if the minimum value from the width and height is greater than 16, the value of $S$ is equal to 15. Or, the value of S is relevant to the number (R) of reference pixels of the current block. In a possible implementation, if R is less than 16, the value of S is equal to 8; if R is equal to or greater than 16 and less than 32, the value of S is equal to 12; if R is equal to or greater than 16, the value of $S$ is equal to 16; the embodiment of the disclosure does not impose any limitation thereto.

It should also be noted that besides the Softmax function, in some other embodiments, the preset mapping relationship may be a weighting function having an inverse ratio relationship with the reference sample values of the first color component.

Exemplarily, still taking $|\Delta Y_k|$ used as the reference sample value of the first color component as an example, the Softmax function of formula (4) may also be replaced by formulas as follows.

$$w_k = \frac{\frac{1}{\gamma|\Delta Y_k|+\text{offset}}}{\sum_{j=1}^{N}\left(\frac{1}{\gamma|\Delta Y_j|+\text{offset}}\right)} \qquad (8)$$

$$w_k = \frac{\frac{1}{e^{\gamma|\Delta Y_k|}+\text{offset}}}{\sum_{j=1}^{N}\left(\frac{1}{e^{\gamma|\Delta Y_j|}+\text{offset}}\right)} \qquad (9)$$

Where $k$=1, 2, ..., N, *offset*=1 or 2 or 0.5 or 0.25.

In this way, when the preset mapping relationship is the preset function relationship, it may be as shown in formula (4), or may be as shown in formula (6) or formula (7), or may be as shown in formula (8) or formula (9), or even may be other function models capable of fitting a trend of the closer the reference luma value of the reference pixel relative to the reconstructed luma value of the to-be-predicted pixel in the current block, the higher the importance of the reference chroma value of the reference pixel to the to-be-predicted pixel in the current block, to create the weighting coefficients, or the like, the embodiment of the disclosure does not impose specific limitation thereto.

Furthermore, in some embodiments, the preset mapping relationship may also be in form of a preset look-up table. That is, the embodiment of the disclosure may also simplify operations, for example, an array element look-up mode is used to reduce part of calculation operations. With respect to the preset mapping relationship, it may be that a value of array element is determined according to a preset reference sample value of the first color component and a look-up table mapping the first factor to the array element; then a value corresponding to the value of the array element under the preset mapping relationship is determined; then the weighting coefficient is set to be equal to the value.

Specifically, the $f$ model for calculating the weighting coefficient may be implemented through simplified operations, such as in form of a look-up table. The luma difference $|\Delta Y_k|$ of the to-be-predicted pixel $(i, j)$ may also be indicated by $|\Delta Y_{kij}|$; in this way, the weighting coefficient $w_{kij} = f(|\Delta Y_{kij}|)$ is calculated by the $f$ model. Here, numerators in the $f$ model may be stored as an array index with an independent variable $|\Delta Y_{kij}|$ and a category number of $S$. Subsequent operations which are the same as calculation of numerators involved in the $f$ model, are all obtained by the look-up table, thereby avoiding calculation operations of numerator and denominator parts.

It should be noted that in the embodiment of the disclosure, storage here may be divided into complete storage or partial storage.

In a specific embodiment, the complete storage is to store all numerators of a codomain range of $|\Delta Y_{kij}|$ and the category number of $S$. With respect to the complete storage, an array space with a size of (the codomain range of $|\Delta Y_{kij}|$ multiplied by the category number of $S$) needs to be set up. A required size of a storage array is a size of the codomain range of $|\Delta Y_{kij}|$, and performance remains unchanged at this time.

Exemplarily, taking a 10-bit pixel and formula (7) as an example, the codomain range of the variable $|\Delta Y_{kij}|$ is an integer in a range of 0 to 1023, the category number of $S$ is 3, and numerators are completely stored by using $|\Delta Y_{kij}|$ and the category number of $S$ as indices of a two-dimensional array storMole.

$$flag_S = \begin{cases} 0, & S = 8 \\ 1, & S = 12 \\ 2, & S = 16 \end{cases} \qquad (10)$$

At this time, calculation of the weighting coefficient in formula (7) may be simplified as follows.

$$w_{kij} = \frac{\text{storMole}\big[|\Delta Y_{kij}|\big][flag_S]}{\sum_{k=1}^{N}\text{storMole}\big[|\Delta Y_{kij}|\big][flag_S]}, \quad k = 1, 2, \dots N \qquad (11)$$

In this way, elements of the two-dimensional array storMole[index 1][index 2] are as shown in Table 3.

Table 3

| index 1 ($|\Delta Y_{kij}|$) | index 2 ($flag_S$) | element of array |
|---|---|---|
| 0 | 0 | $e^{\frac{-0}{8}}$ |

(continued)

| index 1 ($|\Delta Y_{kij}|$) | index 2 ($flag_S$) | element of array |
|---|---|---|
| 1 | 0 | $e^{\frac{-1}{8}}$ |
| ... | ... | ... |
| 1023 | 0 | $e^{\frac{-1023}{8}}$ |
| 0 | 1 | $e^{\frac{-0}{12}}$ |
| 1 | 1 | $e^{\frac{-1}{12}}$ |
| ... | ... | ... |
| 1023 | 1 | $e^{\frac{-1023}{12}}$ |
| 0 | 2 | $e^{\frac{-0}{16}}$ |
| 1 | 2 | $e^{\frac{-1}{16}}$ |
| ... | ... | ... |
| 1023 | 2 | $e^{\frac{-1023}{16}}$ |

Furthermore, a corresponding array offset may also be provided for the complete storage according to classification of *S*, and then numerators are completely stored by using ($|\Delta Y_{kij}|$ plus *offset*) as an index of a one-dimensional array ostorMole, which is shown as follows for the details.

$$offset_S = \begin{cases} 0, & S = 8 \\ 1024, & S = 12 \\ 2048, & S = 16 \end{cases} \qquad (12)$$

At this time, calculation of the weighting coefficient in formula (7) may be simplified as follows.

$$w_{kij} = \frac{\text{ostorMole}\left[|\Delta Y_{kij}| + offset_S\right]}{\sum_{k=1}^{N} \text{ostorMole}\left[|\Delta Y_{kij}| + offset_S\right]}, \quad k = 1, 2, \ldots N \qquad (13)$$

In this way, elements of the one-dimensional array ostorMole[index] are as shown in Table 4.

Table 4

| index ($|\Delta Y_{kij}|$ + $offset_S$) | element of array |
|---|---|
| 0 | $e^{\frac{-0}{8}}$ |
| 1 | $e^{\frac{-1}{8}}$ |
| ... | ... |
| 1023 | $e^{\frac{-1023}{8}}$ |
| 0+1024 | $e^{\frac{-0}{12}}$ |
| 1+1024 | $e^{\frac{-1}{12}}$ |

(continued)

| index ($|\Delta Y_{kij}| + offset_S$) | element of array |
|---|---|
| ... | ... |
| 1023+1024 | $e^{\frac{-1023}{12}}$ |
| 0+2048 | $e^{\frac{-0}{16}}$ |
| 1+2048 | $e^{\frac{-1}{16}}$ |
| ... | ... |
| 1023+2048 | $e^{\frac{-1023}{16}}$ |

In another specific embodiment, the partial storage is to select a part of all numerator values in calculation of the weighting coefficient, for storage. Numerator values in a part of the codomain range of $|\Delta Y_{kij}|$ and/or a part of categories of $S$ may be selected for storage. Value of the $f$ model out of the selected range is 0 by default, and a required size of a storage array is a size of (the selected codomain range of $|\Delta Y_{kij}|$ multiplied by the selected category number of $S$).

Exemplarily, taking a 10-bit pixel and formula (7) as an example, it is assumed that numerator values in the codomain range of $|\Delta Y_{kij}|$ which is an integer from 0 to 99 and three categories of S are selected for the partial storage, then the codomain range of $|\Delta Y_{kij}|$ is an integer in a range of 0 to 99, and the category number of $S$ is 3, and numerators are stored by using such $|\Delta Y_{kij}|$ and the category number of $S$ as indices of a two-dimensional array partstorMole.

$$pflag_S = \begin{cases} 0, & S = 8 \\ 1, & S = 12 \\ 2, & S = 16 \end{cases} \quad (14)$$

At this time, calculation of the weighting coefficient in formula (7) may be simplified as follows.

$$w_{kij} = \begin{cases} \frac{\text{partstorMole}[|\Delta Y_{kij}|][pflag_S]}{\sum_{k=1}^{N} \text{partstorMole}[|\Delta Y_{kij}|][pflag_S]} , & |\Delta Y_{kij}| \le 99 \\ 0 , & |\Delta Y_{kij}| > 99, \end{cases} \quad (15)$$

In this way, elements of the two-dimensional array partstorMole[index 1][index 2] are as shown in Table 5.

Table 5

| index 1 ($|\Delta Y_{kij}|$) | index 2 ($pflag_S$) | element of array |
|---|---|---|
| 0 | 0 | $e^{\frac{-0}{8}}$ |
| 1 | 0 | $e^{\frac{-1}{8}}$ |
| ... | ... | ... |
| 99 | 0 | $e^{\frac{-99}{8}}$ |
| 0 | 1 | $e^{\frac{-0}{12}}$ |
| 1 | 1 | $e^{\frac{-1}{12}}$ |
| ... | ... | ... |
| 99 | 1 | $e^{\frac{-99}{12}}$ |

(continued)

| index 1 ($|\Delta Y_{kij}|$) | index 2 ($pflag_S$) | element of array |
|---|---|---|
| 0 | 2 | $e^{\frac{-0}{16}}$ |
| 1 | 2 | $e^{\frac{-1}{16}}$ |
| ... | ... | ... |
| 99 | 2 | $e^{\frac{-99}{16}}$ |

That is, a storage range of the partial storage may be stored according to actual requirements, and is not limited to $|\Delta Y_{kij}|$ with an integer less than 100 and 3 categories of $S$ in the example; in the partial storage, a corresponding offset may also be provided for the selected part of categories of $S$, to set up a one-dimensional storage space for storage, the embodiment of the disclosure does not impose any limitation thereto. Furthermore, with respect to Table 3 to Table 5, enlarged integer values may also be stored here, to perform the fixed-point calculation; in this way, corresponding reduction operations need to be performed after predicted values are determined subsequently.

In this way, the weighting coefficients may be determined according to the reference sample values of the first color component (for example, $|\Delta Y_{kij}|$), and may specifically include N weighting coefficients such as $w_1$, $w_2$, ..., $w_N$, here N indicates the number of reference sample values of the second color component. Here, theoretically speaking, a sum of the N weighting coefficients is equal to 1, and each of the weighting coefficients is a value equal to or greater than 0 and less than or equal to 1. However, it should be noted that "a sum of the N weighting coefficients is equal to 1" is only a theoretical concept; in an actual fixed-point implementation process, an absolute value of the weighting coefficient may be greater than 1.

At S504, a prediction block of a second color component of the current block is determined according to the weighting coefficients and reference sample values of a second color component in the target information.

At S505, reconstructed values of second color component samples of the current block are determined according to the prediction block.

It should be noted that after the weighting coefficients are determined, weighted calculation may be performed on the reference sample values of the second color component by using the weighting coefficients, thereby obtaining predicted values of second color component samples in the prediction block.

In some embodiments, the operation of determining the prediction block of the second color component of the current block according to the weighting coefficients and the reference sample values of the second color component in the target information may include the following operations.

A respective weighted value between each of the reference sample values of the second color component and a weighting coefficient corresponding to the reference sample value is determined.

A predicted value of a respective one of second color component samples in the prediction block is set to be equal to a sum of N weighted values, N indicates a number of the reference sample values of the second color component, and N is a positive integer.

That is, if the number of the reference sample values of the second color component is N, a respective weighted value (that is, $w_k C_k$) between each of the reference sample values of the second color component and a weighting coefficient corresponding to the reference sample value is determined, and then a sum of the N weighted values is used as the predicted value of the respective one of the second color component samples in the prediction block. Specifically, a calculation formula thereof is specifically shown as follows.

$$C_{i,j}^{\text{pred}} = \sum_{k=1}^{N} w_k C_k = w_1 C_1 + w_2 C_2 + \cdots + w_N C_N \qquad (16)$$

Exemplarily, an absolute luma difference is calculated according to reconstructed luma information at a ($i$, $j$) position in the current block and reference luma information in the neighboring area; then the weighting coefficient is calculated according to the Softmax function, and then a predicted value of a chroma component at a ($i$, $j$) position in the prediction block may be obtained by using formula (16). In particular, it should be noted that such mode is conducive to parallel processing and may speed up calculation.

It should also be noted that in the embodiment of the disclosure, the first color component is the luma component, and the second color component is the chroma component. Since there is a case where resolution of the luma component is different from resolution of the chroma component, when the filtering process is performed on the reference information, it includes that downsampling filtering is performed on the luma component to align the resolution of the chroma component, or upsampling filtering is performed on the chroma component to align the resolution of the luma component.

In the embodiment of the disclosure, the prediction block includes predicted values of at least a part of the second color component samples in the current block. If there is a case where the prediction block contains only predicted values of a part of the second color component samples in the current block or does not contain predicted values of the second color component samples (it needs to perform filtering enhancement on the predicted values, to obtain final predicted values), the filtering process may also be performed on the prediction block. At this time, the prediction block may be referred to as a first prediction block, and then an upsampling filtering process is performed on the first prediction block, to determine a second prediction block of the second color component of the current block. At this time, the second prediction block is a final prediction block of the second color component of the current block, and contains predicted values of all the second color component samples in the current block. Specifically, in some embodiments, the operation of performing the upsampling filtering process on the first prediction block, to determine the second prediction block of the second color component of the current block may include: an input of the upsampling filtering process is a first upsampling input block; and an output of the upsampling filtering process is a first upsampling output block.

Further, in some embodiments, the upsampling filtering process may include the following operations.

An upsampling factor is determined, the upsampling factor includes at least one of a horizontal upsampling factor or a vertical upsampling factor.

The upsampling filtering process is performed on the first upsampling input block according to the upsampling factor, to obtain the first upsampling output block.

In a possible implementation, the operation of performing the upsampling filtering process on the first upsampling input block according to the upsampling factor, to obtain the first upsampling output block may include the following operations. If the horizontal upsampling factor is greater than 1, or the vertical upsampling factor is greater than 1, the upsampling filtering process is performed on the first upsampling input block, to obtain the first upsampling output block.

In the embodiment of the disclosure, the operation of performing the upsampling filtering process on the first upsampling input block includes at least one of: the upsampling filtering process is performed in a horizontal direction on the first upsampling input block; the upsampling filtering process is performed in a vertical direction on the first upsampling input block; the upsampling filtering process is performed in the horizontal direction and then in the vertical direction on the first upsampling input block; or the upsampling filtering process is performed in the vertical direction and then in the horizontal direction on the first upsampling input block.

Here, at first, the horizontal upsampling factor may be calculated according to a width of the first upsampling input block and a width of the first upsampling output block, and the vertical upsampling factor may be calculated according to a height of the first upsampling input block and a height of the first upsampling output block; then, upsampling filtering is performed on the first upsampling input block according to the horizontal upsampling factor and the vertical upsampling factor. Specifically, if the horizontal upsampling factor is greater than 1 and the vertical upsampling factor is equal to 1, it only needs to perform upsampling in the horizontal direction on the first upsampling input block; if the horizontal upsampling factor is equal to 1 and the vertical upsampling factor is greater than 1, it only needs to perform upsampling in the vertical direction on the first upsampling input block; if the horizontal upsampling factor is greater than 1 and the vertical upsampling factor is greater than 1, it needs to perform upsampling in both horizontal and vertical directions on the first upsampling input block. Here, upsampling in the horizontal direction and then in the vertical direction may be performed, or upsampling in the vertical direction and then in the horizontal direction may be performed, or even upsampling operations here may be replaced by convolution operations in a neural network structure, the embodiment of the disclosure does not impose any limitation thereto.

In another possible implementation, upsampling filtering is performed on the first prediction block, to determine the second prediction block. At this time, the method may further include the following operations. The first prediction block is used as the first upsampling input block. The first upsampling output block is used as the second prediction block of the second color component of the current block.

In another possible implementation, enhanced filtering is performed on the first prediction block, and then upsampling filtering is performed, to determine the second prediction block. At this time, the method may further include the following operations. A filtering enhancement process is performed on the first prediction block, to determine a first enhanced prediction block. The first enhanced prediction block is used as the first upsampling input block. The first upsampling output block is used as the second prediction block of the second color component of the current block.

In yet another possible implementation, upsampling filtering is performed on the first prediction block, and then enhanced filtering is performed, to determine the second prediction block. At this time, the method may further include the following operations. The first prediction block is used as the first upsampling input block. The first upsampling output block is used as a first upsampling filtering prediction block. A filtering enhancement process is performed on the first upsampling filtering prediction block, to determine the second prediction block of the second color component of the current block.

In yet another possible implementation, enhanced filtering is performed on the first prediction block, then upsampling filtering is performed, and then enhanced filtering is performed, to determine the second prediction block. At this time, the method may further include the following operations. A first filtering enhancement process is performed on the first prediction block, to determine a second enhanced prediction block. The second enhanced prediction block is used as the first upsampling input block. The first upsampling output block is used as a second upsampling filtering prediction block. A second filtering enhancement process is performed on the second upsampling filtering prediction block, to determine the second prediction block of the second color component of the current block.

Further, it usually needs to limit the predicted value of the respective one of the second color component samples in the prediction block to be in a preset range. Therefore, in some embodiments, the method may further include the following operations. A correction operation is performed on the predicted value of the respective one of the second color component samples in the prediction block, to determine the prediction block of the second color component of the current block.

It should be noted that in the embodiment of the disclosure, the preset range may be between 0 and (1<<BitDepth)-1, here, BitDepth is a bit depth required by the chroma component. If the predicted value exceeds values of the preset range, it needs to perform a corresponding correction operation on the predicted value. Exemplarily, a clamping operation may be performed on $C_{i,j}^{pred}$, which is specifically shown as follows.

When value of $C_{i,j}^{pred}$ is less than 0, it is set as 0.

When the value of $C_{i,j}^{pred}$ is equal to or greater than 0 and less than or equal to (1<<BitDepth)-1, it is equal to $C_{i,j}^{pred}$.

When the value of $C_{i,j}^{pred}$ is greater than (1<<BitDepth)-1, it is set as (1<<BitDepth)-1.

In this way, after a correction process is performed on the predicted value, it may be ensured that predicted values of all the second color component samples in the prediction block are between 0 and (1<<BitDepth)-1.

Further, after the prediction block is determined, the prediction block still needs to be post-processed as the final prediction block under certain conditions. Therefore, in some embodiments, the method may further include the following operation.

A relevant process is performed on the prediction block, and the processed prediction block is used as the prediction block of the second color component of the current block.

In a possible implementation, the operation of performing the relevant process on the prediction block may include the following operation. A filtering enhancement process is performed on the prediction block, and the processed prediction block is used as the prediction block of the second color component of the current block.

It should be noted that in a WCP mode, in order to reduce instability caused by pixel-by-pixel independent and parallel prediction, for example, a smooth filtering process may be performed on the prediction block, and then the processed prediction block is used as the final prediction block.

In another possible implementation, the operation of performing the relevant process on the prediction block may include the following operation. A compensation value of a second color component of the prediction block is determined according to reference sample values in a neighboring area of the current block. A correction process is performed on a predicted value of a respective one of second color component samples in the prediction block according to the compensation value, to determine the prediction block of the second color component of the current block.

It should be noted that in order to further improve prediction accuracy in the WCP mode, a position-related correction process may be performed on the prediction block. For example, a chroma compensation value is calculated for each to-be-predicted second color component sample by using reference pixels with close spatial positions, the second color component sample in the prediction block is corrected by using the chroma compensation value, and final predicted values (predSamples) of the second color component samples are determined according to the corrected predicted values, thereby obtaining the final prediction block.

In yet another possible implementation, the operation of performing the relevant process on the prediction block may include the following operations. A prediction process is performed on a respective one of second color component samples in the prediction block according to at least one prediction mode, to determine at least one initial predicted value of the respective one of the second color component samples in the prediction block. A weighted fusion process is performed according to the at least one initial predicted value and a predicted value of the respective one of the second color component samples in the prediction block, to determine the prediction block of the second color component of the current block.

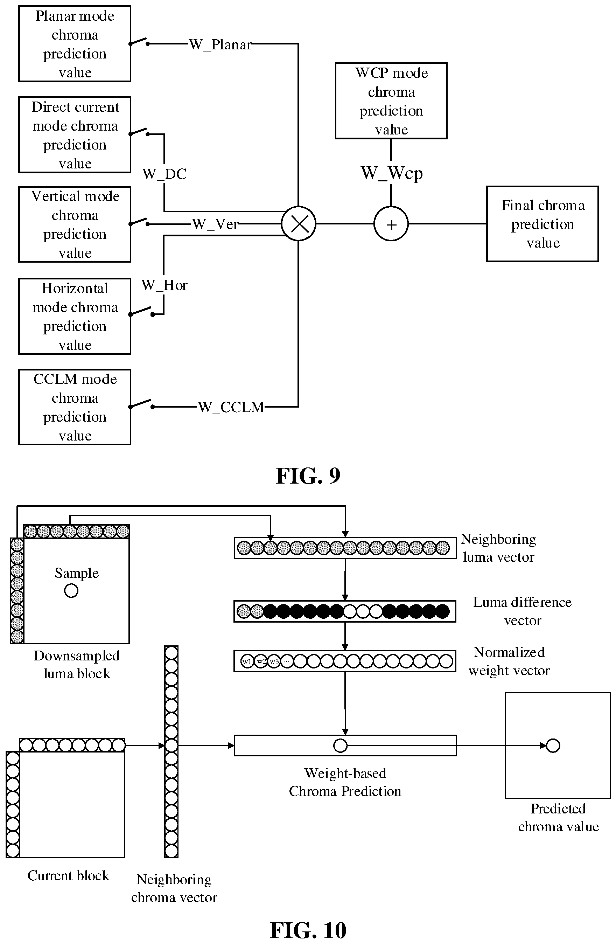

It should be noted that in order to further improve prediction accuracy in the WCP mode, predicted chroma values calculated in other prediction modes may also be weighted-fused with a predicted chroma value calculated in the WCP mode, and a final chroma prediction block is determined according to the fusion result. Exemplarily, as shown in FIG. 9, other prediction modes may include a Planar mode, a direct current (DC) mode, a vertical mode, a horizontal mode, a CCLM mode or the like, and each of the prediction modes is connected to a switch, the switch is configured to control whether the predicted chroma value in this prediction mode participates in the weighted fusion process. It is assumed that a weight value corresponding to the Planar mode is W_Planar, a weight value corresponding to the DC mode is W_DC, a weight value corresponding to the vertical mode is W_Ver, a weight value corresponding to the horizontal mode is W_Hor, a weight value corresponding to the CCLM mode is W_CCLM, and a weight value corresponding to the WCP mode is W_Wcp. With respect to the predicted chroma value in the Planar mode, the predicted chroma value in the DC mode, the predicted chroma value in the vertical mode, the predicted chroma value in the horizontal mode and the predicted chroma value in the CCLM mode, if only the switch connected to the CCLM mode is in a closed state, weighted fusion may be performed on the predicted chroma value in the CCLM mode and the predicted chroma value in the WCP mode according to W_CCLM and W_Wcp, and it may be determined according to values of W_CCLM and W_Wcp whether weighted fusion with equal or unequal weight is performed. A weighted result is a final predicted chroma value of the second color component sample, thereby obtaining the final prediction block.

In some embodiments, after the prediction block is determined, the operation of determining the reconstructed values of the second color component samples of the current block according to the prediction block may include the following operations.

For each of the second color component samples of the current block, a predicted difference value of the second color component sample is determined; a predicted value of the second color component sample is determined according to the prediction block; and a reconstructed value of the second color component sample is determined according to the predicted difference value of the second color component sample and the predicted value of the second color component sample.

It should be noted that in the embodiment of the disclosure, the operation of determining of the predicted difference value (residual) of the second color component sample of the current block may be to determine the predicted difference value of the second color component sample of the current block by parsing the bitstream.

It should also be noted that in the embodiment of the disclosure, the prediction block may contain predicted values of at least a part of the second color component samples in the current block. If the prediction block contains predicted values of all the second color component samples in the current block, the predicted values of the second color component samples of the current block may be set to be equal to the values of the prediction block; if the prediction block contains predicted values of a part of the second color component samples in the current block, upsampling filtering may be performed on the values of the prediction block, and the predicted values of the second color component samples of the current block is set to be equal to output values after the upsampling filtering.

That is, in the embodiment of the disclosure, the operation of determining the predicted values of the second color component samples of the current block according to the prediction block may be to set the predicted values of the second color component samples of the current block to be equal to the values of the prediction block; or may also be to filter the values of the prediction block, and then set the predicted values of the second color component samples of the current block to be equal to the filtered output values.

In this way, taking the chroma component as an example, a predicted chroma difference value of the current block is determined by parsing the bitstream; then, a predicted chroma value of the current block may be determined according to the prediction block; and then the predicted chroma value and the predicted chroma difference value are added to obtain a reconstructed chroma value of the current block.

It may be understood that in the embodiment of the disclosure, a process of acquiring input information in a prediction process of the WCP mode is optimized, which mainly includes three aspects as follows. On one hand, characteristics of input color format information are fully considered, to improve accuracy of the reference luma information and the reference chroma information; on the other hand, spatial correlation is fully utilized, to perform upsampling, downsampling, size enlargement, size reduction, or other filtering processes on the reference luma information, the reference chroma information and the reconstructed luma information of the current block; on yet another hand, relevant information of the prediction block is fully considered, and different filtering process methods are used for the reference luma information, the reference chroma information and the reconstructed luma information of the current block, to improve accuracy of WCP prediction technology.

Simply speaking, the embodiment of the disclosure further provides a weight-based chroma prediction framework. As shown in FIG. 10, with respect to each sample $recY[i][j]$ in downsampled reconstructed luma information (that is, a downsampled luma block) of the current block, a luma difference vector $diffY[i][j]$ is obtained first according to an absolute value of a difference value between $recY[i][j]$ and a neighboring luma vector refY[k]. Secondly, a normalized weight vector $cWeight[i][j]$ is derived according to a nonlinear mapping model relevant to $diffY[i][j]$. Thirdly, the weight vector is used, to vector-multiply the weight vector with a neighboring chroma vector of the current block, which may obtain the predicted chroma value $C_{i,j}^{pred}$.

The embodiment of the disclosure further provides a method for decoding, in which reference information of a current block is determined; a filtering process is performed on partial information in the reference information of the current block, to determine target information of the current block; a respective one of weighting coefficients is determined according to each of reference sample values of a first color component in the target information; a prediction block of a second color component of the current block is determined according to the weighting coefficients and reference sample values of a second color component in the target information; reconstructed values of second color component samples of the current block are determined according to the prediction block. In this way, with respect to color component information in the neighboring area of the current block and color component information in the current block, accuracy of these reference information may be improved since characteristics of color format information are fully considered; and upsampling, downsampling or other filtering processes are performed on these reference information, so that continuity of spatial correlation thereof may be enhanced to a certain extent, or some information with weak spatial correlation may be removed, chroma prediction may be performed better by using the target information obtained after the filtering processes, thereby improving accuracy of the chroma prediction, saving bitrates, while improving encoding and decoding performance.

In another embodiment of the disclosure, based on the method for decoding described in the foregoing embodiment, taking chroma prediction performed on the current block as an example, in the embodiment of the disclosure, the reconstructed luma information of the current block, and the reference luma information and the reference chroma information of the neighboring area are decoded reference information. Therefore, the embodiment of the disclosure proposes a weight-based chroma prediction technology using the above information, and in a process of determining the target information of the current block according to these information, information of the neighboring area of the current block, information of the current block and the current color format information may be analyzed and processed. The information of the neighboring area mainly refers to a position of a sample in the neighboring area, the reference luma information and the reference chroma information. The information of the current block mainly refers to the reconstructed luma information in the current block. The current color format information mainly refers to a parameter InputChromaFormat in a configuration file (in a *.cfg format) during decoding, that is, a ratio of luma and chroma samples of an input video.

It may be understood that in the embodiment of the disclosure, it is mainly proposed: (1) whether downsampling is performed on the reference luma information of the neighboring area, or whether upsampling is performed on the reference chroma information of the neighboring area, is selected according to the current color format information; (2) the reference luma information and the reference chroma information of the neighboring area, and the reconstructed luma information in the current block may be matched with a preset size of core parameters through different operations of size enlargement/reduction.

Here, detailed operations of the chroma prediction process of the WCP mode are as follows.

Input of the WCP mode: the position (xTbCmp, yTbCmp) of the current block, the width nTbW of the current block, and the height nTbH of the current block.

Output of the WCP mode: the predicted value predSamples[x][y] of the current block, an upper left corner position in the current block is a coordinate origin, where x=0, ..., nTbW-1, and y=0, ..., nTbH-1.

The prediction process of the WCP mode may include operations of determining core parameters, acquiring the target information, weight-based chroma prediction, a post-processing process or other operations, and a pre-processing operation is added in a process of acquiring the target information. After these operations, the predicted chroma value of the current block may be obtained.

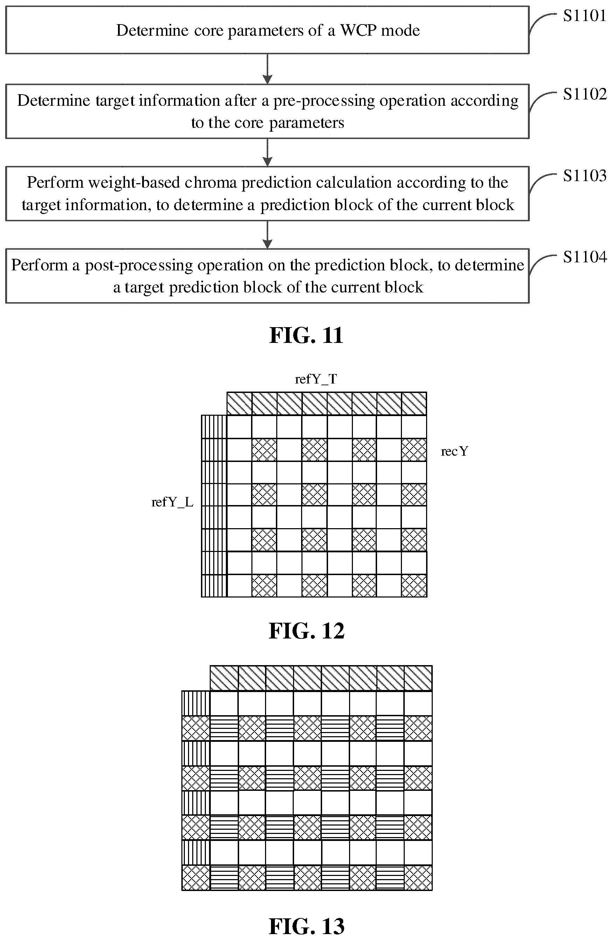

In a specific embodiment, with reference to FIG. 11, a second schematic flowchart of a method for decoding provided in an embodiment of the disclosure is shown. As shown in FIG. 11, the method may include the following operations S1101 to S1104.

At S1101, core parameters of a WCP mode are determined.

It should be noted that with respect to the operation S1101, the core parameters involved in the WCP mode are determined, that is, the core parameters of the WCP mode may be acquired or inferred through configuration or in a certain manner, for example, the core parameters are acquired from a bitstream at the decoding side.

Here, the core parameters of the WCP mode include, but are not limited to a control parameter (S), a number (inSize) of weight-based chroma prediction inputs, and a number of weight-based chroma prediction outputs (arranged in predSizeW×predSizeH). A prediction block of the weight-based chroma prediction output may be indicated by predWcp. Here, the number of weight-based chroma prediction outputs may be set as the same value (for example, predSizeW=predSizeH=T/4), or set to be relevant to size parameters of the current block (for example, predSizeW=nTbW, predSizeH=nTbH). The control parameter (S) may be configured to adjust nonlinear functions in subsequent links or to adjust data involved in subsequent links.

Determination of the core parameters is affected by block sizes or block contents or a number of pixels in the block under certain conditions.

For example, if there are many types of block sizes applied to the WCP mode, or there is a large difference between the block sizes, or there is a large difference between the block contents, or there is a large difference between the number of pixels in the block, the current block may be classified according to its block size or block content or the number of pixels in the block, and the same or different core parameters are determined according to different categories. That is, the control parameter (S), or the number inSize of weight-based chroma prediction inputs, or the number of weight-based chroma prediction outputs (arranged in predSizeW×predSizeH) corresponding to different categories may be the same or different. It should be noted that predSizeW and predSizeH may also be the same or different.

Hereinafter, in order to explain determination of the core parameters better, explanation is made by taking two simple classifications as examples.

First classification example: the WCP mode may classify the current block according to the width and height of the current block, and the category of the block is indicated by wcpSizeId. For different categories of blocks, the control parameter (S), the number inSize of weight-based chroma prediction inputs, and the number of weight-based chroma prediction outputs (arranged in predSizeW×predSizeH) may be the same or different. Here, explanation is made by an example of dividing into three categories.

The current block is divided into three categories according to the width and the height of the current block. The control parameter (S) in different categories may be set to be different, inSize in different categories may be set to be the same, and the number of weight-based chroma prediction outputs (arranged into predSizeW×predSizeH) in different categories may be set to be the same. nTbW is the width of the current block, nTbH is the height of the current block, and the category wcpSizeId of the block is defined as follows.

wcpSizeId=0: it indicates the current block with min(nTbW, nTbH)<=4. The control parameter (S) is 8, inSize is (2×nTbH+2×nTbW), and the weight-based chroma prediction outputs nTbH×nTbW predicted chroma values.

wcpSizeId=1: it indicates the current block with 4<min(nTbW, nTbH)<=16. The control parameter (S) is 12, inSize is (2×nTbH+2×nTbW), and the weight-based chroma prediction outputs nTbH×nTbW predicted chroma values.

wcpSizeId=2: it indicates the current block with min(nTbW, nTbH)>16. The control parameter (S) is 16, inSize is (2×nTbH+2×nTbW), and the weight-based chroma prediction outputs nTbH×nTbW predicted chroma values.

A numeric relationship of the above core parameters is represented in a table form, as shown in Table 6.

Table 6

| wcpSizeId | S | inSize | predSizeH | predSizeW |
|---|---|---|---|---|
| 0 | 8 | 2×nTbH+2×nTbW | nTbH | nTbW |
| 1 | 12 | 2×nTbH+2×nTbW | nTbH | nTbW |
| 2 | 16 | 2×nTbH+2×nTbW | nTbH | nTbW |

Division into three categories may also be explained by another example.

The current block is divided into three categories according to the width and the height of the current block. The control parameter (S) in different categories may be set to be different, inSize in different categories may be set to be the same, and the number of weight-based chroma prediction outputs (arranged into predSizeW×predSizeH) in different categories may be set to be the same. nTbW is the width of the current block, nTbH is the height of the current block, and the category wcpSizeId of the block is defined as follows.

wcpSizeId=0: it indicates the current block with min(nTbW, nTbH)<=4. The control parameter (S) is 8, inSize is (2×nTbH+2×nTbW), and the weight-based chroma prediction outputs nTbH×nTbW predicted chroma values.

wcpSizeId=1: it indicates the current block with 4<min(nTbW, nTbH)<=16. The control parameter (S) is 12, inSize is (1.5×nTbH+1.5×nTbW), and the weight-based chroma prediction outputs nTbH/2×nTbW/2 predicted chroma values.

wcpSizeId=2: it indicates the current block with min(nTbW, nTbH)>16. The control parameter (S) is 16, inSize is (nTbH+nTbW), and the weight-based chroma prediction outputs nTbH/4×nTbW/4 predicted chroma values.

A numeric relationship of the above core parameters is represented in a table form, as shown in Table 7.

Table 7

| wcpSizeId | S | inSize | predSizeH | predSizeW |
|---|---|---|---|---|
| 0 | 8 | 2×nTbH+2×nTbW | nTbH | nTbW |
| 1 | 12 | 1.5×nTbH+1.5×nTbW | nTbH/2 | nTbW/2 |
| 2 | 16 | nTbH+nTbW | nTbH/4 | nTbW/4 |

Second classification example: the WCP mode may also classify the current block according to the width and height of the current block, and the category of the block is indicated by wcpSizeId. For different categories of blocks, the control parameter (S), the number inSize of weight-based chroma prediction inputs, and the number of weight-based chroma prediction outputs (arranged in predSizeW×predSizeH) may be the same or different. Here, explanation is made by an example of dividing into three categories.

The current block is divided into three categories according to the width and the height of the current block. The control parameter (S) in different categories may be set to be different, inSize in different categories may be set to be the same, and the number of weight-based chroma prediction outputs (arranged into predSizeW×predSizeH) in different categories may be set to be the same. nTbW is the width of the current block, nTbH is the height of the current block, and nTbW×nTbH indicates the number of pixels in the current block. The category wcpSizeId of the block is defined as follows.

wcpSizeId=0: it indicates the current block with (nTbW×nTbH)<128. The control parameter (S) is 10, inSize is (2×nTbH+2×nTbW), and the weight-based chroma prediction outputs nTbH×nTbW predicted chroma values.

wcpSizeId=1: it indicates the current block with 128<=(nTbW×nTbH)<=256. The control parameter (S) is 8, inSize is (2×nTbH+2×nTbW), and the weight-based chroma prediction outputs nTbH×nTbW predicted chroma values.

wcpSizeId=2: it indicates the current block with (nTbW×nTbH)>256. The control parameter (S) is 1, inSize is (2×nTbH+2×nTbW), and the weight-based chroma prediction outputs nTbH×nTbW predicted chroma values.

A numeric relationship of the above core parameters is represented in a table form, as shown in Table 8.

Table 8

| wcpSizeId | S | inSize | predSizeH | predSizeW |
|---|---|---|---|---|
| 0 | 10 | 2×nTbH+2×nTbW | nTbH | nTbW |
| 1 | 8 | 2×nTbH+2×nTbW | nTbH | nTbW |
| 2 | 1 | 2×nTbH+2×nTbW | nTbH | nTbW |

Division into three categories may also be explained by another example.

The current block is divided into three categories according to the width and the height of the current block. The control parameter (S) in different categories may be set to be different, inSize in different categories may be set to be the same, and the number of weight-based chroma prediction outputs (arranged into predSizeW×predSizeH) in different categories may be set to be the same. nTbW is the width of the current block, nTbH is the height of the current block, and nTbW×nTbH indicates the number of pixels in the current block. The category wcpSizeId of the block is defined as follows.

wcpSizeId=0: it indicates the current block with (nTbW×nTbH)<64. The control parameter (S) is 16, inSize is (2×nTbH+2×nTbW), and the weight-based chroma prediction outputs nTbH×nTbW predicted chroma values.

wcpSizeId=1: it indicates the current block with 64<=(nTbW×nTbH)<=512. The control parameter (S) is 4, inSize is (1.5×nTbH+1.5×nTbW), and the weight-based chroma prediction outputs nTbH/2×nTbW/2 predicted chroma values.

wcpSizeId=2: it indicates the current block with (nTbW×nTbH)>512. The control parameter (S) is 1, inSize is (nTbH+nTbW), and the weight-based chroma prediction outputs nTbH/4×nTbW/4 predicted chroma values.

A numeric relationship of the above core parameters is represented in a table form, as shown in Table 9.

Table 9

| wcpSizeId | S | inSize | predSizeH | predSizeW |
|---|---|---|---|---|
| 0 | 16 | 2×nTbH+2×nTbW | nTbH | nTbW |
| 1 | 4 | 1.5×nTbH+1.5×nTbW | nTbH/2 | nTbW/2 |
| 2 | 1 | nTbH+nTbW | nTbH/4 | nTbW/4 |

At S1102, target information after a pre-processing operation is determined according to the core parameters.

It should be noted that with respect to the operation S1102, the target information may include reference chroma information (refC), reference luma information (refY) and reconstructed luma information (recY). For acquisition of the target information (that is, input information), when the current block is predicted, the upper area, the upper left area and the left area of the current block are used as the neighboring area (it may also be referred to as a "reference area"), as shown in the foregoing FIG. 6, and pixels in the neighboring area are all decoded reference pixels.

It should also be noted that the reference chroma information refC and the reference luma information refY are acquired from the neighboring area. The acquired reference chroma information includes, but is not limited to selecting a reference chroma reconstructed value of the upper area of the current block, and/or a reference chroma reconstructed value of the left area of the current block. The acquired reference luma information includes, but is not limited to acquiring corresponding reference luma information according to a position of the reference chroma information.

The reconstructed luma information recY of the current block is acquired. Acquisition modes include, but are not limited to acquiring corresponding reconstructed luma information according to the position of the chroma information in the current block, as the reconstructed luma information of the current block.

It may be understood that when the number of the reference chroma information refC and the number of the reference luma information refY acquired from the neighboring area as described above are partially or completely different from inSize specified in the operation of determining the core parameters, or when the number of the reconstructed luma information recY acquired from the current block is different from the preset size (predSizeW×predSizeH) specified in the operation of determining the core parameters, then it needs to perform a relevant process on the three acquired information, and this operation occurs before the prediction process, therefore it is named as a process of pre-processing operation.

Here, the embodiment of the disclosure is mainly directed to a case where inSize specified in the operation of determining the core parameters is different from the number of the reference chroma information refC and the number of the reference luma information refY acquired from the neighboring area, or a case where the number of the reconstructed luma information recY acquired from the current block is different from the preset size (predSizeW×predSizeH) specified in the operation of determining the core parameters. The two cases will be respectively introduced in detail below.

First case: when inSize specified in the operation of determining the core parameters is different from the number of the reference chroma information refC and the number of the reference luma information refY acquired from the neighboring area, it needs to convert the number of pixels of the reference chroma information refC and the reference luma information refY acquired from the neighboring area into inSize specified in the operation of determining the core parameters, for input. The current color format information also determines the number of the reference chroma information and the number of the reference luma information, then specific processes of the pre-processing operation in the first case are as follows.

(1) If the current color format information is considered, the number of the reference luma information and the number of the reference chroma information acquired from the neighboring area are usually unified, and then matched with inSize in the core parameters, processes thereof are as follows.

a. The number of the reference luma information and the number of the reference chroma information acquired from the neighboring area are unified as refNum.

- If the current color format information indicates 4:4:4 sampling (that is, YUV444), a ratio of luma and chroma samples is 4:4:4 at this time, the number of the reference luma information refY acquired from the neighboring area is the same as the number of the reference chroma information refC acquired from the neighboring area, no operation is required.
- If the current color format information indicates 4:2:2 sampling (that is, YUV422), the ratio of luma and chroma samples is 4:2:2 at this time; or, if the current color format information indicates 4:2:0 sampling (that is, YUV420), the ratio of luma and chroma samples is 4:1:1 at this time, it needs to perform downsampling on the reference luma information refY acquired from the neighboring area, to match the number of the reference chroma information refC; or, it needs to perform upsampling on the reference chroma information refC acquired from the neighboring area, to match the number of the reference luma information refY.
- The current color format information includes, but is not limited to color format information as mentioned above. A processing principle is that when the ratio of luma and chroma samples is different, it needs to perform downsampling on the reference luma information, or perform upsampling on the reference chroma information.

b. The number refNum of reference information is matched with inSize in the core parameters.

- If inSize is equal to refNum, no operation is required.
- If inSize is less than refNum, it needs to reduce sizes of the reference luma information and the reference chroma information.
- If inSize is greater than refNum, it needs to enlarge sizes of the reference luma information and the reference chroma information.

It should be noted that downsampling processes mentioned in the process of the first case are specifically as follows. For reference chroma information refC of the number of refNum acquired from the neighboring area, downsampling of the reference luma information refY may be performed by downsampling using a multi-tap filter, or acquiring a certain pixel from multiple reference luma pixels at a corresponding position of the reference chroma pixel, or other downsampling modes, the embodiment of the disclosure does not impose any limitation thereto.

Exemplarily, when the color format information indicates 4:2:0 sampling, taking a neighboring area with a luma pixel size of 8×4 as an example, it needs to downsample the neighboring area into an area with a pixel size of 4×2, as shown in the foregoing FIG. 7A. In FIG. 7A, (a) indicates the reference luma information refY, (b) indicates the downsampled reference luma information refY'. Four luma pixels corresponding to the same chroma pixel are contained in a bold box of (a), $(k, l)$ is an upper left corner pixel position corresponding thereto. A certain downsampled luma pixel is contained in a bold box of (b), and the same chroma pixel corresponding to the four luma pixels contained in the bold box of (a) and the certain downsampled luma pixel are a pair of luma and chroma pixels at the same position; $(i, j)$ is a position of the downsampled luma pixel in the downsampled reference luma information refY', where $i=0, ..., 3, j=0, 1$.

- If a 4-tap filter is used for downsampling, for example, coefficients of the filter are [1,1,1,1], a calculation process of pixel points in refY' is as follows.
  *for i=0, ..., 3 and j=0, **1***

$$refY'[i][j] = \left( \begin{matrix} refY[k][l] + refY[k+1][l] \\ +refY[k][l+1] + refY[k+1][l+1] + 2 \end{matrix} \right) \gg 2 \qquad (17)$$

- If a 5-tap filter is used for downsampling, for example, coefficients of the filter are [1,1,4,1,1], the calculation process of pixel points in refY' is as follows.
  *for i=0, ..., 3 and j=0, **1***

$$refY'[i][j] = \left( \begin{matrix} refY[k][l-1] + refY[k-1][l] + 4 \times refY[k][l] \\ +refY[k+1][l] + refY[k+1][l+1] + 4 \end{matrix} \right) \gg 3 \qquad (18)$$

- If a 6-tap filter is used for downsampling, for example, coefficients of the filter are [1,2,1,1,2,1], the calculation process of pixel points in refY' is as follows.
  *for i=0, ..., 3 and j=0, 1*

$$refY'[i][j] = \left( \begin{matrix} refY[k-1][l] + 2 \times refY[k][l] + refY[k+1][l] \\ +refY[k-1][l+1] + 2 \times refY[k][l+1] \\ +refY[k+1][l+1] + 4 \end{matrix} \right) \gg 3 \qquad (19)$$

- If downsampling is performed by acquiring a certain pixel from multiple reference luma pixels at a corresponding position (such as the upper left corner pixel position) of the reference chroma pixel, the calculation process of pixel points in refY' is as follows.
  *for i=0, ..., 3 and j=0, 1*

$$refY'[i][j] = refY[k][l] \qquad (20)$$

Upsampling processes mentioned in the process of the first case are specifically as follows. For reference luma information refY of the number of refNum acquired from the neighboring area, upsampling of the reference chroma information refC may be performed by upsampling using linear interpolation, nonlinear interpolation or other modes, or copying a certain reference chroma pixel, or even using other upsampling modes, the embodiment of the disclosure does not impose any limitation thereto, either.

Exemplarily, when the color format information indicates 4:2:0 sampling, taking a neighboring area with a chroma pixel size of 4×2 as an example, it needs to upsample the neighboring area into an area with a pixel size of 8×4, as shown in FIG. 7B. In FIG. 7B, (a) indicates the reference chroma information refC, (b) indicates the upsampled reference chroma information refC'. Chroma pixels corresponding to four upsampled chroma pixels contained in a bold box of (b) are contained in a bold box of (a), where $k=0, ..., 3, l=0, 1$. Four chroma pixels contained in the bold box of (b) are upsampled chroma pixels corresponding to the bold box of (a), and $(i, j)$ is an upper left corner pixel position.

- If linear interpolation in the horizontal direction is used for upsampling, it needs to perform linear interpolation on pixel points in refC' through neighboring points in the horizontal direction, as shown in the following example.
*for k=0, ..., 3 and l=0, 1*

$$refC'[i][j] = (w0 \times refC[k][l] + w1 \times refC[k+1][l] + offset) \gg shift \qquad (21)$$

$$refC'[i+1][j] = (w2 \times refC[k][l] + w3 \times refC[k+1][l] + offset) \gg shift \qquad (22)$$

$$refC'[i][j+1] = (w4 \times refC[k][l] + w5 \times refC[k+1][l] + offset) \gg shift \qquad (23)$$

$$refC'[i+1][j+1] = (w6 \times refC[k][l] + w7 \times refC[k+1][l] + offset) \gg shift \quad (24)$$

Where *offset* = 1 << (*shift* - 1). {w0, w1, w2, w3, w4, w5, w6, w7} and *shift* may be differently selected according to block sizes or block contents. Here is an example of a commonly used combination of coefficients:

$$\begin{cases} shift = 3 \\ w0 = 6 \quad w1 = 2 \\ w2 = 5 \quad w3 = 3 \\ w4 = 6 \quad w5 = 2 \\ w6 = 5 \quad w7 = 3 \end{cases}$$

- If linear interpolation in the vertical direction is used for upsampling, it needs to perform linear interpolation on pixel points in refC' through neighboring points in the vertical direction, for example:
*for k=0, ..., 3 and l=0, 1*

$$refC'[i][j] = (w0 \times refC[k][l] + w1 \times refC[k][l+1] + offset) \gg shift \qquad (25)$$

$$refC'[i+1][j] = (w2 \times refC[k][l] + w3 \times refC[k][l+1] + offset) \gg shift \qquad (26)$$

$$refC'[i][j+1] = (w4 \times refC[k][l] + w5 \times refC[k][l+1] + offset) \gg shift \qquad (27)$$

$$refC'[i+1][j+1] = (w6 \times refC[k][l] + w7 \times refC[k][l+1] + offset) \gg shift \quad (28)$$

*offset* = 1 << (*shift* - 1). {w0, w1, w2, w3, w4, w5, w6, w7} and *shift* may be differently selected according to block sizes or block contents. Here is an example of a commonly used combination of coefficients:

$$\begin{cases} shift = 4 \\ w0 = 11 \quad w1 = 5 \\ w2 = 9 \quad w3 = 7 \\ w4 = 11 \quad w5 = 5 \\ w6 = 9 \quad w7 = 7 \end{cases}$$

- If upsampling is performed by copying a certain reference chroma pixel, a calculation process of pixel points in refC' is as follows.
*for k=0, ..., 3 and l=0, 1*

$$refC'[i][j] = refC[k][l] \qquad (29)$$

$$refC'[i+1][j] = refC[k][l] \qquad (30)$$

$$refC'[i][j+1] = refC[k][l] \qquad (31)$$

$$refC'[i+1][j+1] = refC[k][l] \qquad (32)$$

(2) If the current color format information is not considered, it only needs to match with inSize in the core parameters, processes thereof are as follows.

a. A number refYnum of the reference luma information acquired from a neighboring reference area is matched with inSize in the core parameters.

- If inSize is equal to refYnum, no operation is required.
- If inSize is less than refYnum, it needs to reduce the size of the reference luma information.
- If inSize is greater than refYnum, it needs to enlarge the size of the reference luma information.

b. A number refCnum of the reference chroma information acquired from the reference area is matched with inSize in the WCP core parameters.

- If inSize is equal to refYnum, no operation is required.

- If inSize is less than refYnum, it needs to reduce the size of the reference chroma information.

- If inSize is greater than refYnum, it needs to enlarge the size of the reference chroma information.

Processes of the operation of reducing the size mentioned in the process of the first case are specifically as follows. Taking the reference luma information as an example, the number of the reference luma information acquired from the neighboring area is refYnum.

- If a fixed-interval point selection mode is used to reduce the size, refYnum reference luma pixels are arranged into a one-dimensional vector according to a certain position relationship, and then points are selected at a fixed interval according to a size relationship between inSize and refYnum, which may reduce the size of the reference luma information. Here, the mode for arranging into the one-dimensional vector and the starting position for the fixed-interval selection may be set freely, the embodiment of the disclosure does not impose any limitation thereto.

Exemplarily, as shown in FIG. 8, the reference luma information refY acquired in a "L"-shaped reference area with one row and one column may be rearranged into a one-dimensional vector refY' according to a position relationship from lower left to upper left and then from upper left to upper right.
Here, the fixed interval used to reduce the size is subDist = (refYnum + inSize - 1)/ inSize. Starting from the first pixel position of refY' obtained as above, a pixel is selected every (subDist-1) pixel positions, and finally reference luma information in_refY of the number of inSize is obtained, detailed processes thereof are as follows.
*for i* =0, ..., inSize-1

$$in\_refY[i] = refY'[i \times subDist] \qquad (33)$$

- If a continuous position selection mode is used to reduce the size, that is, refYnum reference luma pixels are arranged into a one-dimensional vector according to a certain position relationship, and then inSize pixels are continuously selected from a certain position of the one-dimensional vector, obtaining in_refY. For example, selection is performed starting from a pos-th pixel position of refY', detailed processes thereof are as follows.
*for i* =0, ..., inSize-1

$$in\_refY[i] = refY'[pos + i] \qquad (34)$$

Processes of the operation of enlarging the size mentioned in the process of the first case are specifically as follows. Taking the reference chroma information as an example, the number of the reference chroma information acquired from the neighboring area is refCnum.

- If a fixed-interval interpolation mode is used to enlarge the size, refCnum reference chroma pixels are arranged into a one-dimensional vector according to a certain position relationship, and then points are selected at a fixed interval according to a size relationship between inSize and refCnum, which may enlarge the size of the reference chroma information. Here, the mode for arranging into the one-dimensional vector and the starting position for the fixed-interval interpolation may be set freely, the embodiment of the disclosure does not impose any limitation thereto, either. After refY is arranged in a mode similar to that of reducing the size, a one-dimensional vector refY' is obtained. Then, the fixed interval used to enlarge the size is subDist = (refCnum + inSize - 1)/refCnum. Starting from the first pixel position of refY', reference luma information in_refY of the number of inSize is obtained finally. If the linear interpolation mode is used, detailed processes are as follows.

$$for\ i = 0, \ldots, \text{inSize-1}$$

$$if\ (i\ \%\ subDist == 0)$$

$$in\_refY[i] = refY'[i \times subDist] \qquad\qquad (35)$$

$$else$$

$$in\_refY[i] = \left(\begin{array}{c} w0 \times refY'[i \times subDist] \\ +w1 \times refY'[(i + 1) \times subDist] + offset \end{array}\right) \gg shift \quad (36)$$

Where {w0, w1} changes with positions according to values of the fixed interval, *offset* = 1 << (*shift* - 1). Here, *shift* may be differently selected according to block sizes or block contents. If subDist=3, here is an example of a commonly used combination of coefficients:

$$\begin{cases} shift = 3 \\ w0 = 6 \quad w1 = 2, \quad if\ i\ \%\ subDist == 1 \\ w0 = 5 \quad w1 = 3, \quad if\ i\ \%\ subDist == 2 \end{cases}$$

Second case: when the number (recSizeW×recSizeH) of the reconstructed luma information refY acquired from the current block is different from the preset size (predSizeW×predSizeH) specified in the operation of determining the core parameters, it needs to convert the number of the reconstructed luma information refY acquired from the current block into the preset size (predSizeW×predSizeH) specified in the operation of determining the WCP core parameters, for input, processes thereof are specifically as follows.

- If recSizeW is equal to predSizeW, and recSizeH is equal to predSizeH, no operation is required.
- If recSizeW is greater than predSizeW, or recSizeH is greater than predSizeH, it needs to reduce the size of the reconstructed luma information recY.
- If recSizeW is less than predSizeW, or recSizeH is less than predSizeH, it needs to enlarge the size of the reconstructed luma information recY.

Processes of the operation of reducing the size mentioned in the process of the second case are specifically as follows. At first, the horizontal downsampling factor downHor is calculated according to the width predSizeW determined by the core parameters and the width recSizeW of the reconstructed luma information recY. Similarly, the vertical downsampling factor downVer is calculated according to the height predSizeH determined by the core parameters and the height recSizeH of the reconstructed luma information recY, calculation methods thereof are shown as follows.

$$downHor = recSizeW/predSizeW \qquad\qquad (37)$$

$$downVer = recSizeH/predSizeH \qquad\qquad (38)$$

Then, downsampling is performed according to conditions as follows, to generate the input reconstructed luma information in_recY.

(1) If downHor is greater than 1 and downVer is equal to 1, it only needs to perform downsampling in the horizontal direction, specific formula thereof is as follows.

$$in\_recY[x][y] = (recY[downHor \times x - 1][y] + 2 \times recY[downHor \times x][y] + recY[downHor \times x + 1][y] + 2) >> 2 \quad (39)$$

(2) If downHor is equal to 1 and downVer is greater than 1, it only needs to perform downsampling in the vertical direction, specific formula thereof is as follows.

$$in\_recY[x][y] = (recY[x][downVer \times y - 1] + 2 \times recY[x][downVer \times y] + recY[x][downVer \times y + 1] + 2) >> 2 \quad (40)$$

(3) If both downHor and downVer are greater than 1, it needs to perform downsampling in both horizontal and vertical directions, specific formula thereof is as follows.

$$in\_recY[x][y] = (recY[downHor \times x - 1][downVer \times y] + recY[downHor \times x - 1][downVer \times y + 1] + 2 * recY[downHor \times x][downVer \times y] + 2 * recY[downHor \times x][downVer \times y + 1] + recY[downHor \times x + 1][downVer \times y] + recY[downHor \times x + 1][downVer \times y + 1] + 4) >> 3 \quad (41)$$

Processes of the operation of enlarging the size mentioned in the process of the second case are specifically as follows. At first, the horizontal upsampling factor upHor is calculated according to the width predSizeW determined by the core parameters and the width recSizeW of the reconstructed luma information recY. Similarly, the vertical upsampling factor up Ver is calculated according to the height predSizeH determined by the core parameters and the height recSizeH of the reconstructed luma information recY, calculation methods thereof are shown as follows.

$$upHor = predSizeW/recSizeW \quad (42)$$

$$upVer = predSizeH/recSizeH \quad (43)$$

Then, upsampling is performed according to conditions as follows, to generate the input reconstructed luma information in_recY.

At first, an upper reference reconstructed luma pixel refY_T is filled into an upper row in_recY[x][-1] of to-be-input reconstructed luma information, and a left reference reconstructed luma pixel refY_L is filled into a left column in_recY[-1][y] of the to-be-input reconstructed luma information. where x=0, ..., predSizeW-1, y=0, ..., predSizeH-1. At this time, recY is placed into a corresponding position ((x+1)×upHor-1, (y+1)×upVer-1) in in_recY by formula as follows.

$$in\_recY[(x + 1) \times upHor - 1][(y + 1) \times upVer - 1] = recY[x][y] \quad (44)$$

It may be understood that in_recY is equally divided into recSizeW×recSizeH sub-blocks, and the position for placement is a lower right corner position of each of the sub-blocks. With reference to FIG. 12, taking predSizeW=8 and predSizeH=8, and the current block with a size of 4×4 as an example, diagonal filling is the upper reference reconstructed luma pixel refY_T, vertical bar filling is the left reference reconstructed luma pixel refY_L, and grid filling is the position where the reconstructed luma information recY of the current block is filled.

- If the horizontal upsampling factor upHor is greater than 1, upsampling in the horizontal direction is performed first, and the upsampling process is shown by formula as follows.

$$sum = (upHor - dX) \times rec\_Y[xHor][yHor] + dX \times rec\_Y[xHor + upHor][yHor] \quad (45)$$

$$rec\_Y[xHor + dX][yHor] = \left(sum + \frac{upHor}{2}\right)/upHor \quad (46)$$

This process is shown in FIG. 13. Taking predSizeW=8 and predSizeH=8, and the current block with a size of 4×4 as an example, during horizontal upsampling, points in the left reference luma pixel refY_L corresponding to horizontal positions where rec_Y is filled may also be used as reference points for upsampling, and may also be marked with grid filling here. At this time, the grid filling points are all reference points for upsampling, and prediction points obtained by linear interpolation between every two grid filling points in the horizontal direction are marked with horizontal bar filling.

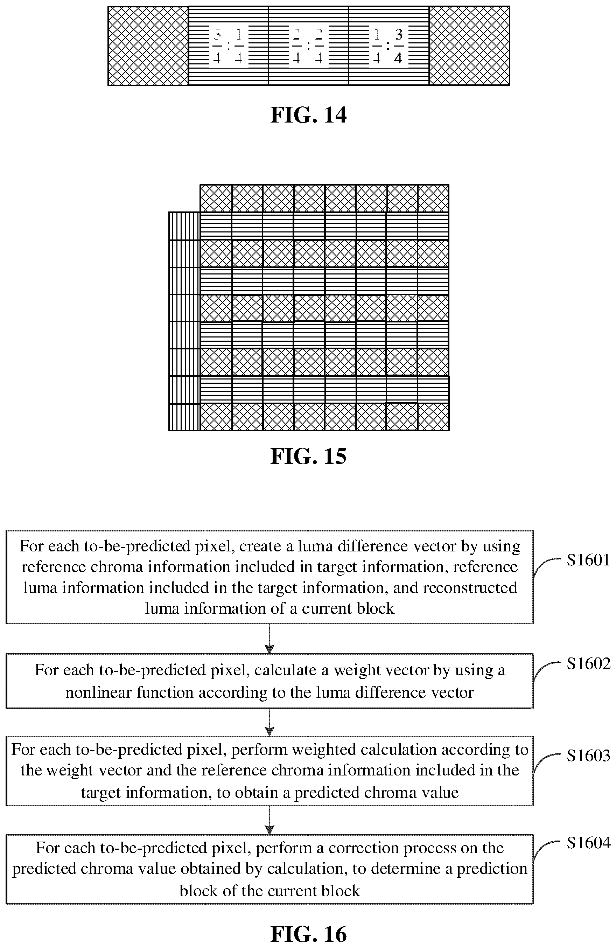

The upsampling method uses linear interpolation upsampling, that is, a value of each point (horizontal bar filling) obtained by interpolation between two upsampling luma reference points (grid filling) is weighted average of two upsampling reference luma points. According to formulas (45) and (46), a weight of a left upsampling reference chroma point is (upHor-dX)/upHor, and a weight of a right upsampling reference chroma point is dX/upHor, here dX=1, ..., upHor-1 (that is, a distance between the current interpolation point and a left reference point). In this way, when interpolation in the horizontal direction is performed, the weight is only relevant to the horizontal upsampling factor upHor. FIG. 14 shows an example of weights. In this example, upHor=4. With respect to the first interpolation point in FIG. 14, the weight of the left upsampling reference chroma point is 3/4, and the weight of the right upsampling reference chroma point is 1/4; with respect to the second interpolation point in FIG. 14, the weight of the left upsampling reference chroma point is 2/4, and the weight of the right upsampling reference chroma point is 2/4; with respect to the third interpolation point in FIG. 14, the weight of the left upsampling reference chroma point is 1/4, and the weight of the right upsampling reference chroma point is 3/4.

- If the vertical upsampling factor upVer is greater than 1, it needs to perform upsampling in the horizontal direction, process thereof is similar to the horizontal upsampling process, and specific process is shown by formula as follows.

$$\text{sum} = (\text{upVer} - \text{dY}) \times \text{rec\_Y}[\text{xVer}][\text{yVer}] + \text{dY} \times \text{rec\_Y}[\text{xVer}][\text{yVer} + \text{upVer}] \quad (47)$$

$$\text{rec\_Y}[\text{xVer}][\text{yVer} + \text{dY}] = \left(\text{sum} + \frac{\text{upVer}}{2}\right)/\text{upVer} \quad (48)$$

This process is shown in FIG. 15. Taking predSizeW=8 and predSizeH=8, and the current block with a size of 4×4 as an example, after horizontal upsampling as shown in FIG. 13 is completed, all existing points of the upper reference luma pixel refY_T and in_recY will be used as reference points for vertical upsampling, and will also be marked with grid filling here. Then at this time, grid filling points are all reference points for upsampling, and prediction points obtained by linear interpolation between every two grid filling points in the vertical direction are marked with horizontal bar filling.

The upsampling method also uses linear interpolation. According to formulas (47) and (48), weight of an upper upsampling reference point is (upVer-dY)/upVer, and weight of a lower reference point is dY/upVer, where dY=1, ..., upVer-1 (that is, a distance between the current interpolation point and an upper reference point). In this way, during vertical interpolation, the weight is only relevant to the vertical upsampling factor up Ver.

In this way, the final in_recY may be obtained according to the above processes. With respect to the above processes of enlarging the size, besides using the "horizontal and then vertical" upsampling method, the "vertical and then horizontal" upsampling method may be used, or the reconstructed luma value after "horizontal and then vertical" upsampling and the reconstructed luma value after "vertical and then horizontal" upsampling may be averaged to obtain the final input reconstructed luma value in_recY, or upsampling operations may be replaced by convolution operations in a neural network, the embodiment of the disclosure does not impose any limitation thereto.

In this way, the input target information acquired finally may include reference chroma information refC of the number of inSize, reference luma information refY of the number of inSize, and the reconstructed luma information recY of the current prediction block.

At S1103, weight-based chroma prediction calculation is performed according to the target information, to determine a prediction block of the current block.

It should be noted that with respect to the operation S1103, the predicted chroma value in the preset size specified by the core parameters is indicated by $C^{pred}[i][j]$, where $i$=0, ..., predSizeW-1, j=0, ..., predSizeH-1, and they are obtained one by one. It should be noted that predSizeH and predSizeW are core parameters, and may be the same as or different from the height nTbH or the width nTbW of the current block. In this way, under certain conditions, the following calculations may also be performed on only a part of the to-be-predicted pixels in the current block.

The chroma prediction calculation in the WCP mode may include the following operations. Weight-based predicted chroma values are obtained by acquiring weights and performing weighted prediction according to the weights. Processes of acquiring the weights include creating the luma difference vector and calculating the weights. Detailed calculation processes thereof are as follows.

*for* $i=0, \ldots,$ predSizeW-1, $j=0, \ldots,$ predSizeH-1

*for* $k=0, 1, \ldots,$ inSize-1

creating each element $diffY[i][j][k]$ in the luma difference vector

calculating each element $cWeight[i][j][k]$ (or $cWeightFloat[i][j][k]$) in the weight vector, and then calculating the predicted chroma value $C^{pred}[i][j]$ by using $cWeight[i][j]$ (or $cWeightFloat[i][j][k]$) and refC.

In a specific embodiment, with reference to FIG. 16, a third schematic flowchart of a method for decoding provided in an embodiment of the disclosure is shown. As shown in FIG. 16, the method may include the following operations S1601 to S1604.

At S1601, for each to-be-predicted pixel, a luma difference vector is created by using reference chroma information included in target information, reference luma information included in the target information, and reconstructed luma information of a current block.

It should be noted that with respect to each to-be-predicted pixel $C^{pred}[i][f]$ within the size specified by the core parameters, the reconstructed luma information $recY[i][j]$ corresponding thereto is subtracted from reference luma information refY of the number of inSize, and an absolute value of the subtracted difference is acquired to obtain the luma difference vector $diffY[i][j][k]$. Specific calculation formula thereof is as follows.

$$diffY[i][j][k] = abs(refY[k] - recY[i][j]) \quad (49)$$

Here, $abs(\ x\ ) = \begin{cases} x & ; & x >= 0 \\ -x & ; & x < 0 \end{cases}$ , abs(x) indicates an absolute value of x.

It should also be noted that under certain conditions, linear or nonlinear numerical processes may be performed on the luma difference vector of the to-be-predicted pixel. For example, the value of the luma difference vector of the to-be-predicted pixel may be scaled according to a control parameter S in the core parameters.

At S1602, for each to-be-predicted pixel, a weight vector is calculated by using a nonlinear function according to the luma difference vector.

It should be noted that in the embodiment of the disclosure, the luma difference vector $diffY[i][j]$ corresponding to each to-be-predicted pixel $C^{pred}[i][j]$ is processed by using a weight model, to obtain a floating-point type weight vector $cWeightFloat[i][j]$ corresponding thereto. The weight model here includes, but is not limited to nonlinear functions such as a nonlinear normalization function, a nonlinear exponential normalization function or the like, any limitation is not imposed thereto.

Exemplarily, a nonlinear Softmax function may be used as the weight model, the luma difference vector $diffY[i][j]$ corresponding to each to-be-predicted pixel is used as an input of the weight model, and the weight model outputs a floating-point type weight vector $cWeightFloat[i][j]$ corresponding to each to-be-predicted pixel, calculation formula thereof is shown as follows.

$$cWeightFloat[i][j][k] = \frac{e^{-diffY[i][j][k]}}{\sum_{n=0}^{inSize-1} e^{-diffY[i][j][n]}} \quad (50)$$

Under certain conditions, the weight model may also be adjusted according to the control parameter (S) in the core parameters. Exemplarily, if the current block has a flexible size, the weight model may be adjusted according to the control parameter (S). Taking the nonlinear Softmax function as an example, different control parameters may be selected according to different categories of block classification to which the current block belongs, to adjust the function. At this time, calculation formula of the weight vector corresponding to each to-be-predicted pixel is shown as follows.

$$cWeightFloat[i][j][k] = \frac{e^{\frac{-diffY[i][j][k]}{S}}}{\sum_{n=0}^{inSize-1} e^{\frac{-diffY[i][j][n]}{S}}} \quad (51)$$

In the embodiment of the disclosure, a fixed-point process may also be performed on the weighting coefficient. Therefore, in some embodiments, the method further includes the following operations. If the weighting coefficient is a floating-point weighting coefficient, the fixed-point process is performed on the floating-point weighting coefficient, to obtain a fixed-point weighting coefficient.

In this way, after calculation of the above formula (50) or formula (51) is completed, the fixed-point processes may be performed on *cWeightFloat,* which is shown as follows.

$$cWeight[i][j][k] = round\left(cWeightFloat[i][j][k] \times 2^{Shift}\right) \ (52)$$

Here, *round(x) = Sign(x) × Floor(abs(x) + 0.5)* . Here, *Floor(x)* indicates a maximum integer less than or equal to

$$Sign(x) = \begin{cases} 1 & ; & x > 0 \\ 0 & ; & x == 0 \\ -1 & ; & x < 0 \end{cases}$$

x, *, abs(x)* indicates an absolute value of x. Furthermore, *Shift* is a shift amount set in the fixed-point operation to improve accuracy.

At S1603, for each to-be-predicted pixel, weighted calculation is performed according to the weight vector and the reference chroma information included in the target information, to obtain a predicted chroma value.

It should be noted that the predicted chroma value of each to-be-predicted pixel is calculated according to the weight vector *cWeight[i][j]* (or *cWeightFloat[i][j]*) and the reference chroma information refC corresponding to the to-be-predicted pixel. Specifically, the reference chroma information refC of each to-be-predicted pixel $C^{pred}[i][j]$ is multiplied by elements of the weight vector corresponding to the to-be-predicted pixel one by one, to obtain *subC[i][j]* (or *subCFloat[i][j]*), results of multiplication are accumulated to obtain the predicted chroma value $C^{pred}[i][j]$ of the to-be-predicted pixel, that is, weighted prediction of the chroma component is achieved.

In a possible implementation, this may include the following operations. Weighted calculation is performed according to the floating-point weighting coefficient and the reference chroma information, to obtain an initial predicted value of the to-be-predicted pixel. The fixed-point process is performed on the initial predicted value, to obtain a target predicted value of the to-be-predicted pixel.

Exemplarily, calculation formula thereof is shown as follows.

*for k=0,* 1, ..., inSize-1

$$subCFloat[i][j][k] = (cWeightFloat[i][j][k] \times refC[k]) \quad (53)$$

After calculation is completed, the fixed-point process may also be performed on *subCFloat[i][j][k]*. In order to keep a certain calculation accuracy in the fixed-point process, it may be multiplied by a coefficient here, which is specifically shown as follows.

$$subC[i][j][k] = round(subCFloat[i][j][k] \times 2^{Shift}) \ (54)$$

Or:

*for i=0, ..., predSizeW-1, j=0, ..., predSizeH-1*

$$C^{pred}Float[i][j] = \sum_{k=0}^{inSize-1} subCFloat[i][j][k] \quad (55)$$

After calculation is completed, fixed-point is performed on $C^{pred}Float[i][j]$, which is shown as follows.

$$C^{pred}[i][j] = round(C^{\mathrm{pred}}Float[i][j]) \quad (56)$$

In another possible implementation, weighted calculation may be performed according to the fixed-point weighting coefficient and the reference chroma information, to obtain an initial predicted value of the to-be-predicted pixel. A fixed-point compensation process is performed on the initial predicted value, to obtain a target predicted value of the to-be-predicted pixel.

Exemplarily, calculation formula thereof is shown as follows.

*for k=0, 1, ..., inSize-1*

$$subC[i][j][k] = (cWeight[i][j][k] \times refC[k]) \quad (57)$$

Then, calculation is performed by using fixed-point *subC[i][j][k]*, which is specifically shown as follows.

*for i=0, ..., predSizeW-1, j=0, ..., predSizeH-1*

$$C^{pred}[i][j] = \left(\sum_{k=0}^{inSize-1} subC[i][j][k] + Offset\right) \gg Shift_1 \quad (58)$$

Where *Offset* = 1 « (*Shift₁* - 1), *Shift₁* is a shift amount required when *cWeight[i][j][k]* or *subC[i][j][k]* is calculated (*Shift₁* = *Shift*), or may be a shift amount required in the fixed-point operation to improve accuracy in other links.

At S1604, for each to-be-predicted pixel, a correction process is performed on the predicted chroma value obtained by calculation, to determine a prediction block of the current block.

It should be noted that the predicted chroma value should be limited to be in a preset range. If the predicted chroma value exceeds the preset range, it needs to perform a corresponding correction operation on the predicted chroma value. Exemplarily, in a possible implementation, a clamping operation may be performed on the predicted chroma value of $C_{i,j}^{pred}[i][j]$, which is specifically as follows.

- When a value of $C_{i,j}^{pred}[i][j]$ is less than 0, it is set as 0.

- When the value of $C_{i,j}^{pred}[i][j]$ is greater than (1<<BitDepth)-1, it is set as (1<<BitDepth)-1.

Here, BitDepth is a bit depth required by a chroma pixel value, to ensure that all the predicted chroma values in the prediction block are between 0 and (1 <<BitDepth)-1.

That is as follows.

$$C^{pred}[i][j] = Clip3(0, (1 \ll BitDepth) - 1, C^{pred}[i][j]) \quad (59)$$

Where

$$Clip3(x, y, z) = \begin{cases} x \; ; z < x \\ y \; ; z > y \\ z \; ; otherwise \end{cases} \quad (60)$$

Or, formula (59) and formula (60) are combined to obtain a formula as follows.

$$C^{pred}[i][j] = Clip3\left(0, (1 \ll BitDepth) - 1, \left(\sum_{k=0}^{inSize-1} subC[i][j][k] + Offset\right)\right) \gg Shift_1 \quad (61)$$

At S1104, a post-processing operation is performed on the prediction block, to determine a target prediction block of the current block.

It should be noted that after weight-based chroma prediction outputs the predicted chroma value (predWcp), it also needs to be post-processed under certain conditions, to be used as the final predicted chroma value (predSamples); otherwise, the final predicted chroma value predSamples is predWcp.

Exemplarily, in order to reduce instability caused by WCP pixel-by-pixel independent and parallel prediction, smooth filtering may be performed on predWcp, to be used as the final predicted chroma value predSamples. Or, in order to further improve accuracy of the WCP predicted value, a position-related correction process may be performed on predWcp. For example, a chroma compensation value is calculated for each to-be-predicted pixel by using reference pixels with close spatial positions, predWcp is corrected by using the chroma compensation value, and the corrected predicted value is used as the final predicted chroma value predSamples. Or, in order to further improve accuracy of the WCP predicted value, predicted chroma values calculated in other chroma prediction modes may be weighted-fused with the predicted chroma value predWcp calculated in WCP, and the fusion result is used as the final predicted chroma value predSamples. For example, the predicted chroma value predicted by the CCLM mode and the predicted chroma value predWcp calculated in WCP may be weighted with equal or unequal weight, and the weighted result is used as the final predicted chroma value predSamples. Or, in order to improve WCP prediction performance, the predicted output predWcp of WCP may be corrected by using a neural network model or the like, the embodiment of the disclosure does not impose any limitation thereto.

It may also be understood that in the embodiment of the disclosure, if the reference chroma information redCref and the reference luma information redYref with a size of the parameter inSize determined in the WCP mode, and the reconstructed luma information redYrec of the current block with a size of the parameter (predSizeW×predSizeH) determined in the WCP mode have been obtained. Since some of the above three information have been subjected to operations of upsampling, downsampling or size reduction/enlargement, or have not been subjected to these operations, there is still spatial redundancy between them. At this time, the reference chroma information redCref, the reference luma information redYref and the reconstructed luma information redYrec may be filtered. Different filtering operations may be used according to different parameter values of inSize and predSizeW×predSizeH determined in the WCP mode, to obtain three new sets of information including reference chroma information redCref', reference luma information redYref' and reconstructed luma information redYrec'. For example, redCref, redYref and redYrec are filtered through linear filtering and nonlinear filtering of mean value, median value and Gaussian, or neural network, or other methods. Furthermore, these filtering operations may also occur before operations of upsampling, downsampling or size reduction/enlargement, to obtain three new sets of information including reference chroma information redC', reference luma information redY' and reconstructed luma information redY', and then operations of upsampling, downsampling or size reduction/enlargement are performed on these information.

It may also be understood that in the embodiment of the disclosure, the number of the reference chroma information refC acquired from the neighboring area is refSizeC, and the number of the reference luma information refY acquired from the neighboring area is refSizeY; the size of the reconstructed luma information recY acquired from the current block is recSizeW×recSizeH, recSizeW is the block width of the reconstructed luma information recY, recSizeH is the block height of the reconstructed luma information recY. The reference chroma information, the reference luma information and the reconstructed luma information are all matched with inSize and (predSizeW×predSizeH) specified in the operation of determining the core parameters by using a neural network. The three information may use the same or different neural network models according to various situations, that is, operations of upsampling, downsampling or size reduction/enlargement are replaced by neural network models. Furthermore, filtering operations involved in the foregoing embodiments may also be performed before or after using the neural network models, to obtain three new sets of information including reference luma information, reference chroma information and reconstructed luma information.

It may also be understood that in the embodiment of the disclosure, reference information used by a certain predicted chroma pixel in weight-based chroma prediction in the WCP mode is fixed, which will affect prediction accuracy inevitably. Therefore, a solution of changing the reference pixel of each pixel is also proposed here, detailed processes thereof are as follows.

At first, the core parameters include, but are not limited to the control parameter ($S$), the number inSize[$i$][$j$] of weight-based chroma prediction inputs, and the number of weight-based chroma prediction outputs (predWcp) (arranged into predSizeW×predSizeH). Here, inSize[$i$][$j$] indicates a number of reference pixels used by a certain to-be-predicted pixel $C^{pred}$[$i$][$j$], where $i$=0, ..., predSizeW-1, $j$=0, ..., predSizeH-1.

Secondly, the reference chroma information refC and the reference luma information refY are acquired from the neighboring area. The acquired reference chroma information includes, but is not limited to selecting a reference chroma reconstructed value of the upper area of the current block, and a reference chroma reconstructed value of the left area of the current block. The acquired reference luma information includes, but is not limited to acquiring corresponding reference luma information according to a position of the reference chroma information.

The reconstructed luma information recY of the current block is acquired. Acquisition modes include, but are not limited to acquiring corresponding reconstructed luma information according to the position of the chroma information in the current block, as the reconstructed luma information of the current block.

Thirdly, with respect to different prediction positions of the block with a size of predSizeW×predSizeH, different reference luma information refY[$i$][$j$] and reference chroma information refC[$i$][$j$] are selected from the reference chroma information refC and the reference luma information refY acquired from the neighboring area, detailed processes are as follows.

> for $i$=0, ..., predSizeW-1, $j$=0, ..., predSizeH-1
> for $k$=0, 1, ..., inSize-1
> acquiring the input target information includes: acquiring reference chroma information refC of the number of inSize[$i$][$j$], acquiring reference luma information refY of the number of in Size[$i$][$j$], and acquiring the reconstructed luma information refY[$i$][$j$].

Fourthly, with respect to each to-be-predicted pixel $C^{pred}$[$i$][$j$] within the size specified by the core parameters, the reconstructed luma information *recY*[$i$][$j$] corresponding thereto is subtracted from reference luma information *refY*[$i$][$j$] of the number of inSize[i][j], and an absolute value of the subtracted difference is acquired to obtain the luma difference vector *dif fY*[$i$][$j$][$k$] Where *refY*[$i$][$j$] is a set of reference luma vectors corresponding to the to-be-predicted pixel $C^{pred}_{i,j}$. Detailed calculation formula thereof is as follows.

> for $i$=0, ..., predSizeW-1, $j$=0, ..., predSizeH-1
> for $k$=0, 1, ..., inSize[$i$][$j$]-1

$$diffY[i][j][k] = abs(refY[i][j][k] - recY[i][j]) \qquad (62)$$

Under certain conditions, linear or nonlinear numerical processes may be performed on the luma difference vector of the to-be-predicted pixel. Exemplarily, value of the luma difference vector of the to-be-predicted pixel may be scaled according to the control parameter S in the core parameters.

Fifthly, the predicted chroma value of each to-be-predicted pixel is calculated according to the weight vector *cWeight[i][j]* and the reference chroma information refC corresponding to the to-be-predicted pixel. Specifically, the reference chroma information *refC[i][j]* of each to-be-predicted pixel $C^{pred}[i][j]$ is multiplied by elements of the weight vector corresponding to the to-be-predicted pixel one by one, to obtain *subC[i][j]*, results of multiplication are accumulated to obtain the predicted chroma value $C^{pred}[i][j]$ (that is, weighted prediction) of the to-be-predicted pixel. Where *refC[i][j]* is a set of reference chroma vectors corresponding to the to-be-predicted pixel $C^{pred}[i][j]$. Calculation formula thereof is shown as follows.

*for k*=0, 1, ..., inSize-1

$$subCFloat[i][j][k] = (cWeightFloat[i][j][k] \cdot refC[i][j][k]) \quad (63)$$

After calculation is completed, fixed-point may be performed on subCFloat. In order to keep a certain calculation accuracy in the fixed-point process, it may be multiplied by a coefficient here, which is shown by formula as follows.

$$subC[i][j][k] = round(subCFloat[i][j][k] \times 2^{Shift}) \quad (64)$$

or,

$$subC[i][j][k] = (cWeight[i][j][k] \times refC[i][j][k]) \quad (65)$$

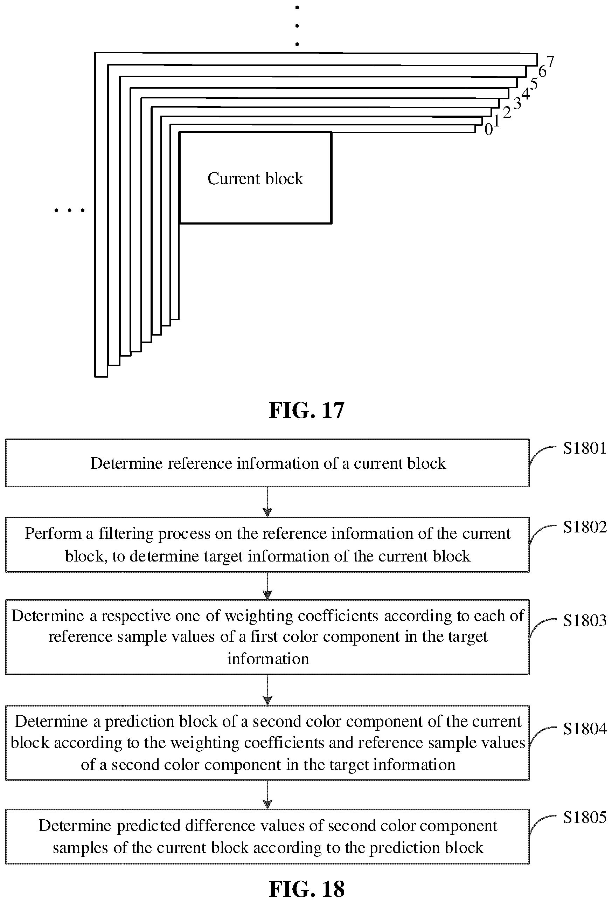

It may also be understood that in the embodiment of the disclosure, the neighboring area is the same as that used in other existing chroma prediction modes, which will affect prediction accuracy inevitably. Therefore, the neighboring area may also be changed. Exemplarily, the existing multi-reference row technology in H.266 may be used to extend the reference area of the WCP prediction technology. As shown in FIG. 17, it may be extended to 0, 1, 2, 3, 4, 5, 6, 7, or other neighboring areas of multiple rows or columns, to be used as the reference area of the current block; however, it is not limited to this technology, and the reference row or reference column may also be increased or decreased, the embodiment of the disclosure does not impose specific limitation thereto.

The embodiment provides a decoding method. Specific implementations of the foregoing embodiments are described in detail through the embodiment. It may be seen that according to technical solutions of the foregoing embodiments, accuracy of the WCP prediction technology may be improved. Specifically, the process of acquiring the target information is optimized, in case of different core parameters, different processing modes (including upsampling, downsampling, size reduction, size enlargement, or other filtering methods) are used according to current different color format information or different numbers of acquired information, to match the acquired information with the number of information specified by WCP, complete the correction process of the target information, and thus obtain the final predicted chroma value. Since spatial characteristics presented by all pixels in the reference luma pixel and the reference chroma pixel acquired from the neighboring area in case of different color format information, are different according to images with different content characteristics, then through upsampling or downsampling processes, continuity of spatial correlation thereof may be enhanced to a certain extent, or some information with weak spatial correlation are removed, so that it is used as the final input target information of the WCP prediction technology, which may make the predicted value more accurate, thereby improving accuracy of the chroma prediction, saving bitrates, while improving encoding and decoding performance.

In yet another embodiment of the disclosure, with reference to FIG. 18, a first schematic flowchart of a method for encoding provided in an embodiment of the disclosure is shown. As shown in FIG. 18, the method may include the following operations S1801 to S1805.

At S1801, reference information of a current block is determined.

It should be noted that the method for encoding according to the embodiment of the disclosure is applied to an apparatus for encoding, or a device for encoding (which may also be referred to as an "encoder" for short) integrated with the apparatus for encoding. Furthermore, the method for encoding according to the embodiment of the disclosure may specifically refer to an intra prediction method, and more specifically, to a pre-processing operation method of Weight-based Chroma Prediction (WCP).

In the embodiment of the disclosure, a video image may be divided into multiple CBs, each of the CBs may include a first color component, a second color component, and a third color component, and the current block here refers to a CB currently to be intra-predicted in the video image. Furthermore, it is assumed that prediction of the first color component is performed on the current block, and the first color component is a luma component, that is, a to-be-predicted component is a luma component, then the current block may also be referred to as a luma prediction block. Or, it is assumed that prediction of the second color component is performed on the current block, and the second color component is a chroma component, that is, the to-be-predicted component is the chroma component, then the current block may also be referred to as a chroma prediction block.

It should also be noted that in the embodiment of the disclosure, the reference information of the current block may include values of first color component samples in a neighboring area of the current block and values of second color component samples in the neighboring area of the current block. These samples may be determined according to encoded pixels in the neighboring area of the current block. In some embodiments, the neighboring area of the current block may include at least one of an upper neighboring area, an upper right neighboring area, a left neighboring area, or a lower left neighboring area.

Furthermore, the reference information of the current block may further include reconstructed values of first reference color component samples in the current block. Therefore, in some embodiments, the operation of determining the reference information of the current block may include the following operations.

The reference information of the current block is determined according to values of first color component samples in a neighboring area of the current block, values of second color component samples in the neighboring area of the current block, and the reconstructed values of first reference color component samples in the current block.

It should be noted that in the embodiment of the disclosure, the reference pixels of the current block may refer to reference pixel points neighboring the current block, or may be referred to as the first color component samples or the second color component samples in the neighboring area of the current block, and are indicated by Neighboring Samples or Reference Samples. "Neighboring" here may be spatially neighboring, but is not limited thereto. For example, "neighboring" may also be temporally neighboring, or spatially and temporally neighboring. Or even, the reference pixels of the current block may be reference pixels obtained after a certain process is performed on reference pixel points spatially neighboring, temporally neighboring, and spatially and temporally neighboring, etc. The embodiment of the disclosure does not impose any limitation thereto.

It should also be noted that in the embodiment of the disclosure, the first color component is the luma component, and the second color component is the chroma component. Then, the values of the first color component samples in the neighboring area of the current block are indicated as reference luma information corresponding to the reference pixels of the current block, and the values of the second color component samples in the neighboring area of the current block are indicated as reference chroma information corresponding to the reference pixels of the current block.

At S1802, a filtering process is performed on partial information in the reference information of the current block, to determine target information of the current block.

In the embodiment of the disclosure, since there is a case where a number of values of the first color component samples in the neighboring area of the current block is different from a number of values of the second color component samples in the neighboring area of the current block, at this time, it may need to perform the filtering process on the values of the first color component samples or the values of the second color component samples, so that the number of the values of the first color component samples is the same as the number of the values of the second color component samples.

In a possible implementation, the operation of performing the filtering process on the partial information in the reference information of the current block, to determine the target information of the current block may include the following operations.

A first filtering process is performed on the values of the first color component samples in the neighboring area of the current block, to obtain filtered sample values of a first color component in the neighboring area of the current block.

The target information of the current block is determined according to the filtered sample values of the first color component in the neighboring area of the current block.

In the embodiment of the disclosure, a number of filtered sample values of the first color component in the neighboring area of the current block is equal to L, here, L indicates a number of the values of the second color component samples in the neighboring area of the current block, and L is a positive integer.

In a specific embodiment, the first filtering process may be a downsampling filtering process. Exemplarily, a number of reference luma information of the current block is usually greater than a number of reference chroma information of the current block. Therefore, the downsampling filtering process may be performed on the reference luma information of the current block, so that the number of reference luma information is the same as the number of reference chroma information.

It should also be noted that since the number of reference luma information and the number of reference chroma information of the current block may also be affected by color format information, in some embodiments, the method may further include the following operation. The first filtering process is performed on the values of the first color component samples in the neighboring area of the current block based on color format information, to obtain the filtered sample values of the first color component in the neighboring area of the current block.

In a specific embodiment, the first filtering process may further include the following operations.

If the color format information indicates 4:4:4 sampling, downsampling filtering is not performed on the values of the first color component samples in the neighboring area of the current block.

If the color format information indicates 4:2:2 sampling, downsampling filtering is performed on the values of the first color component samples in the neighboring area of the current block.

If the color format information indicates 4:2:0 sampling, downsampling filtering is performed on the values of the first color component samples in the neighboring area of the current block.

It should be noted that in the embodiment of the disclosure, when the color format information indicates 4:2:0 sampling, a downsampling rate is a reciprocal of a positive integer multiple of 2.

In this way, with respect to downsampling filtering performed on the reference luma information acquired from the neighboring area, downsampling may be performed by using a multi-tap filter (such as a four-tap filter, a five-tap filter, a six-tap filter, etc.), or acquiring a certain pixel from multiple reference luma pixels at a corresponding position of a reference chroma pixel, or even using other downsampling modes, the embodiment of the disclosure does not impose specific limitation thereto.

Further, when a number of reference luma information after downsampling filtering is L and is the same as the number of reference chroma information, it also needs to match L with a preset number at this time. Therefore, in some embodiments, the method may further include the following operations.

L is compared with the preset number.

A second filtering process is performed on the filtered sample values of the first color component in the neighboring area of the current block and the values of the second color component samples in the neighboring area of the current block according to a comparison result between L and the preset number, to determine filtered neighboring sample values of a first color component of the current block and filtered neighboring sample values of the second color component of the current block.

The target information of the current block is determined according to the filtered neighboring sample values of the first color component of the current block and the filtered neighboring sample values of the second color component of the current block.

In a specific embodiment, the operation of performing the second filtering process on the filtered sample values of the first color component in the neighboring area of the current block and the values of the second color component samples in the neighboring area of the current block according to the comparison result between L and the preset number, to determine the filtered neighboring sample values of the first color component of the current block and the filtered neighboring sample values of the second color component of the current block may include the following operations.

If L is greater than the preset number, a first sub-filtering process is performed on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block.

If L is less than the preset number, a second sub-filtering process is performed on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block.

It should be noted that in the embodiment of the disclosure, the preset number may be indicated by inSize. Specifically, if L is equal to the preset number, no operation is required; if L is greater than the preset number, it needs to perform the first sub-filtering process (that is, reducing the size) on the reference luma information and the reference chroma information; if L is less than the preset number, it needs to perform the second sub-filtering process (that is, enlarging the size) on the reference luma information and the reference chroma information.

In another possible implementation, the operation of performing the filtering process on the partial information in the reference information of the current block, to determine the target information of the current block may include the following operations.

A third filtering process is performed on the values of the second color component samples in the neighboring area of the current block, to obtain filtered sample values of a second color component in the neighboring area of the current block.

The target information of the current block is determined according to the filtered sample values of the second color component in the neighboring area of the current block.

In the embodiment of the disclosure, a number of filtered sample values of the second color component in the neighboring area of the current block is equal to K, K indicates a number of the values of the first color component samples in the neighboring area of the current block, and K is a positive integer.

In a specific embodiment, the third filtering process is an upsampling filtering process. Exemplarily, the number of reference luma information of the current block is usually greater than the number of reference chroma information of the current block. Therefore, the upsampling filtering process may also be performed on the reference chroma information of the current block, so that the number of reference luma information is the same as the number of reference chroma information.

Since the number of reference luma information and the number of reference chroma information of the current block may also be affected by color format information, in some embodiments, the method may further include the following operation. The third filtering process is performed on the values of the second color component samples in the neighboring area of the current block based on color format information, to obtain the filtered sample values of the second color component in the neighboring area of the current block.

In a specific embodiment, the third filtering process may further include the following operations.

If the color format information indicates 4:4:4 sampling, upsampling filtering is not performed on the values of the second color component samples in the neighboring area of the current block.

If the color format information indicates 4:2:2 sampling, upsampling filtering is performed on the values of the second color component samples in the neighboring area of the current block.

If the color format information indicates 4:2:0 sampling, upsampling filtering is performed on the values of the second color component samples in the neighboring area of the current block.

It should be noted that in the embodiment of the disclosure, when the color format information indicates 4:2:0 sampling, an upsampling rate is a positive integer multiple of 2. In this way, when the number of reference luma information acquired from the neighboring area is different from the number of reference chroma information acquired from the neighboring area, upsampling filtering may be performed on the reference chroma information acquired from the neighboring area, to match the number of reference luma information.

In this way, with respect to upsampling filtering performed on the reference chroma information acquired from the neighboring area, upsampling may be performed by using linear interpolation, nonlinear interpolation or other modes, or copying a certain reference chroma pixel, or even using other upsampling modes, the embodiment of the disclosure does not impose specific limitation thereto.

Further, when a number of reference chroma information after upsampling filtering is K and is the same as the number of reference luma information, it also needs to match K with a preset number at this time. Therefore, in some embodiments, the method may further include the following operations.

K is compared with the preset number.

A fourth filtering process is performed on the values of the first color component samples in the neighboring area of the current block and the filtered sample values of the second color component in the neighboring area of the current block according to a comparison result between K and the preset number, to determine filtered neighboring sample values of a first color component of the current block and filtered neighboring sample values of the second color component of the current block.

The target information of the current block is determined according to the filtered neighboring sample values of the first color component of the current block and the filtered neighboring sample values of the second color component of the current block.

In a specific embodiment, the operation of performing the fourth filtering process on the values of the first color component samples in the neighboring area of the current block and the filtered sample values of the second color component in the neighboring area of the current block according to the comparison result between K and the preset number, to determine the filtered neighboring sample values of the first color component of the current block and the filtered neighboring sample values of the second color component of the current block may include the following operations.

If K is greater than the preset number, a first sub-filtering process is performed on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block.

If K is less than the preset number, a second sub-filtering process is performed on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block.

It should be noted that in the embodiment of the disclosure, the preset number may be indicated by inSize. Specifically, if K is equal to inSize, no operation is required; if K is greater than inSize, it needs to perform the first sub-filtering process (that is, reducing the size) on the reference luma information and the reference chroma information; if K is less than inSize, it needs to perform the second sub-filtering process (that is, enlarging the size) on the reference luma information and the reference chroma information.

It may also be understood that in the embodiment of the disclosure, if the color format information is not considered, the number of reference luma information or the number of reference chroma information acquired from the neighboring area may also be directly matched with inSize, so that the number of reference luma information or the number of reference chroma information is the same as inSize.

In a possible implementation, the operation of performing the filtering process on the partial information in the reference information of the current block, to determine the target information of the current block may include the following operations.

A number of the values of the first color component samples in the neighboring area of the current block is determined as a first number.

A fifth filtering process is performed on the values of the first color component samples in the neighboring area of the current block according to a comparison result between the first number and a preset number, to determine filtered neighboring sample values of a first color component of the current block.

The target information of the current block is determined according to the filtered neighboring sample values of the first color component of the current block.

In a specific embodiment, the operation of performing the fifth filtering process on the values of the first color component samples in the neighboring area of the current block, to determine the filtered neighboring sample values of the first color component of the current block may include the following operations.

If the first number is greater than the preset number, a first sub-filtering process is performed on the values of the first color component samples in the neighboring area of the current block, to determine the filtered neighboring sample values of the first color component of the current block.

If the first number is less than the preset number, a second sub-filtering process is performed on the values of the first color component samples in the neighboring area of the current block, to determine the filtered neighboring sample values of the first color component of the current block.

It should be noted that in the embodiment of the disclosure, the number of reference luma information acquired from the neighboring area may be matched with the preset number. The number of reference luma information acquired from the neighboring area (that is, the first number) may be indicated by refYnum; the preset number may be indicated by inSize. Specifically, if refYnum is equal to inSize, no operation is required; if refYnum is greater than inSize, it needs to perform the first sub-filtering process (that is, reducing the size) on the reference luma information; if refYnum is less than inSize, it needs to perform the second sub-filtering process (that is, enlarging the size) on the reference luma information.

In another possible implementation, the operation of performing the filtering process on the partial information in the reference information of the current block, to determine the target information of the current block may further include the following operations.

A number of the values of the second color component samples in the neighboring area of the current block is determined as a second number.

A sixth filtering process is performed on the values of the second color component samples in the neighboring area of the current block according to a comparison result between the second number and a preset number, to determine filtered neighboring sample values of the second color component of the current block.

The target information of the current block is determined according to the filtered neighboring sample values of the second color component of the current block.

In a specific embodiment, the operation of performing the sixth filtering process on the values of the second color component samples in the neighboring area of the current block, to determine the filtered neighboring sample values of the second color component of the current block may include the following operations.

If the second number is greater than the preset number, a first sub-filtering process is performed on the values of the second color component samples in the neighboring area of the current block, to determine the filtered neighboring sample values of the second color component of the current block.

If the second number is less than the preset number, a second sub-filtering process is performed on the values of the second color component samples in the neighboring area of the current block, to determine the filtered neighboring sample values of the second color component of the current block.

It should also be noted that in the embodiment of the disclosure, the number of reference chroma information acquired from the neighboring area may be matched with the preset number. The number of reference chroma information acquired from the neighboring area (that is, the second number) may be indicated by refCnum; the preset number may be indicated by inSize. Specifically, if refCnum is equal to inSize, no operation is required; if refCnum is greater than inSize, it needs to perform the first sub-filtering process (that is, reducing the size) on the reference chroma information; if refCnum is less than inSize, it needs to perform the second sub-filtering process (that is, enlarging the size) on the reference chroma information.

In the embodiment of the disclosure, the first sub-filtering process may be a downsampling filtering process. Furthermore, in some embodiments, the first sub-filtering process may further include at least one of: a sub-filtering process is performed by using a fixed-interval position selection mode; or the sub-filtering process is performed by using a continuous position selection mode.

In the embodiment of the disclosure, the second sub-filtering process may be an upsampling filtering process. Furthermore, in some embodiments, the second sub-filtering process may further include: a sub-filtering process is performed by using a fixed-interval position interpolation mode.

It may also be understood that if prediction of the chroma component is performed on the current block, the reference information of the current block may further include reconstructed luma information of the current block. Therefore, the reference information of the current block may also be determined based on the reconstructed values of the first reference color component samples in the current block.

In the embodiment of the disclosure, the first reference color component may be a luma component; then, the reconstructed values of the first reference color component samples in the current block are the reconstructed luma information of the current block. Since a number of reconstructed luma information of the current block is different from a preset size, it also needs to perform a filtering process on the reconstructed luma information of the current block, to convert the number of reconstructed luma information acquired from the current block into the preset size, for input. Here, the preset size is predSizeW×predSizeH, predSizeW indicates a width of the prediction block, and predSizeH indicates a height of the prediction block.

In some embodiments, the operation of performing the filtering process on the partial information in the reference information of the current block, to determine the target information of the current block may include the following operations. A seventh filtering process is performed on the reconstructed values of the first reference color component samples in the current block, to determine filtered sample values of the first reference color component samples in the current block. The target information of the current block is determined according to the filtered sample values of the first reference color component samples in the current block.

In a specific embodiment, the operation of performing the seventh filtering process on the reconstructed values of the first reference color component samples in the current block, to determine the filtered sample values of the first reference color component samples in the current block may include the following operations.

A first width and a first height are determined according to the reconstructed values of the first reference color component samples in the current block.

If the first width is greater than a width of the prediction block, or the first height is greater than a height of the prediction block, a third sub-filtering process is performed on the reconstructed values of the first reference color component samples in the current block, to determine the filtered sample values of the first reference color component samples in the current block.

If the first width is less than the width of the prediction block, or the first height is less than the height of the prediction block, a fourth sub-filtering process is performed on the reconstructed values of the first reference color component samples in the current block, to determine the filtered sample values of the first reference color component samples in the current block.

It should be noted that in the embodiment of the disclosure, it is assumed that the number of reconstructed luma information is recSizeW×recSizeH, then recSizeW indicates the first width, and recSizeH indicates the first height. Specifically, if recSizeW is equal to predSizeW, and recSizeH is equal to predSizeH, no operation is required; if recSizeW is greater than predSizeW, or recSizeH is greater than predSizeH, it needs to perform the first sub-filtering process (that is, reducing the size) on the reconstructed luma information; if recSizeW is less than predSizeW, or recSizeH is less than predSizeH, it needs to perform the second sub-filtering process (that is, enlarging the size) on the reconstructed luma information.

It should also be noted that in the embodiment of the disclosure, the third sub-filtering process may be a downsampling filtering process. Furthermore, in some embodiments, the third sub-filtering process may further include at least one of: the downsampling filtering process is performed in a horizontal direction on the reconstructed values of the first reference color component samples in the current block; the downsampling filtering process is performed in a vertical direction on the reconstructed values of the first reference color component samples in the current block; the downsampling filtering process is performed in the horizontal direction and then in the vertical direction on the reconstructed values of the first reference color component samples in the current block; or the downsampling filtering process is performed in the vertical direction and then in the horizontal direction on the reconstructed values of the first reference color component samples in the current block.

Here, at first, a horizontal downsampling factor may be calculated according to recSizeW and predSizeW, and a vertical downsampling factor may be calculated according to recSizeH and predSizeH; then, downsampling filtering is performed on the reconstructed luma information according to the horizontal downsampling factor and the vertical downsampling factor. Specifically, if the horizontal downsampling factor is greater than 1 and the vertical downsampling factor is equal to 1, it only needs to perform downsampling in the horizontal direction on the reconstructed luma information; if the horizontal downsampling factor is equal to 1 and the vertical downsampling factor is greater than 1, it only needs to perform downsampling in the vertical direction on the reconstructed luma information; if the horizontal downsampling factor is greater than 1 and the vertical downsampling factor is greater than 1, it needs to perform downsampling in both horizontal and vertical directions on the reconstructed luma information, here, downsampling in the horizontal direction and then in the vertical direction may be performed, or downsampling in the vertical direction and then in the horizontal direction may be performed, or even downsampling operations here may be replaced by convolution operations in a neural network structure, the embodiment of the disclosure does not impose any limitation thereto

It should also be noted that in the embodiment of the disclosure, the fourth sub-filtering process is an upsampling filtering process. Furthermore, in some embodiments, the fourth sub-filtering process may further include at least one of: the upsampling filtering process is performed in a horizontal direction on the reconstructed values of the first reference color component samples in the current block; the upsampling filtering process is performed in a vertical direction on the reconstructed values of the first reference color component samples in the current block; the upsampling filtering process is performed in the horizontal direction and then in the vertical direction on the reconstructed values of the first reference color component samples in the current block; or the upsampling filtering process is performed in the vertical direction and then in the horizontal direction on the reconstructed values of the first reference color component samples in the current block.

Here, at first, a horizontal upsampling factor is calculated according to recSizeW and predSizeW, and a vertical upsampling factor is calculated according to recSizeH and predSizeH; then, upsampling filtering is performed on the reconstructed luma information according to the horizontal upsampling factor and the vertical upsampling factor. Specifically, if the horizontal upsampling factor is greater than 1 and the vertical upsampling factor is equal to 1, it only needs to perform upsampling in the horizontal direction on the reconstructed luma information; if the horizontal upsampling factor is equal to 1 and the vertical upsampling factor is greater than 1, it only needs to perform upsampling in the vertical direction on the reconstructed luma information; if the horizontal upsampling factor is greater than 1 and the vertical upsampling factor is greater than 1, it needs to perform upsampling in both horizontal and vertical directions on the reconstructed luma information, here, upsampling in the horizontal direction and then in the vertical direction may be performed, or upsampling in the vertical direction and then in the horizontal direction may be performed, or even an upsampling result of "in the horizontal direction and then in the vertical direction" and an upsampling result of "in the vertical direction and then in the horizontal direction" may be average-weighted to determine a final upsampling result, or even upsampling operations here may be replaced by convolution operations in a neural network structure, the embodiment of the disclosure does not impose any limitation thereto.

That is, in the embodiment of the disclosure, the reference information of the current block may include the values of the first color component samples in the neighboring area of the current block, the values of the second color component samples in the neighboring area of the current block, and the reconstructed values of the first reference color component samples in the current block. The target information may include the filtered neighboring sample values of the first color component of the current block, the filtered neighboring sample values of the second color component of the current block, and the filtered sample values of the first reference color component samples in the current block. If it does not need to perform a filtering process on the values of the first color component samples in the neighboring area of the current block, the filtered neighboring sample values of the first color component of the current block are equal to the values of the first color component samples in the neighboring area of the current block. Similarly, if it does not need to perform a filtering process on the values of the second color component samples in the neighboring area of the current block, the filtered neighboring sample values of the second color component of the current block are equal to the values of the second color component samples in the neighboring area of the current block. If it does not need to perform a filtering process on the reconstructed values of the first reference color component samples in the current block, the filtered sample values of the first reference color component samples in the current block are equal to the reconstructed values of the first reference color component samples in the current block.

In this way, the obtained target information may include the filtered neighboring sample values of the first color component of the current block, the filtered neighboring sample values of the second color component of the current block, and the filtered sample values of the first reference color component samples in the current block, that is, reference chroma information of the number of inSize, reference luma information of the number of inSize, and reconstructed luma information conforming to the preset size.

At S1803, a respective one of weighting coefficients is determined according to each of reference sample values of a first color component in the target information.

It should be noted that in some embodiments, the method may further include the following operations. After determining the filtered neighboring sample values of the first color component of the current block, the filtered neighboring sample values of the second color component of the current block, and the filtered sample values of the first reference color component samples in the current block, each of the reference sample values of the first color component in the target information is set as an absolute value of a difference between a respective one of the filtered neighboring sample values of the first color component of the current block and a filtered sample value of a respective one of the first reference color component samples in the current block.

In some embodiments, the method may further include the following operation. The reference sample values of the second color component in the target information are set as the filtered neighboring sample values of the second color component of the current block.

Furthermore, considering the filtering process on the reference information, it may be that the filtering process is performed on only the reference luma information, or may be that the filtering process is performed on only the reconstructed luma information, or may be that the filtering process is performed on only the reference luma information and the reconstructed luma information, or even may be that the filtering process is performed on the reference chroma information, the reference luma information and the reconstructed luma information, any limitation is not imposed thereto here. Then, with respect to calculation of a luma difference, the method may further include the following operations. Each of the reference sample values of the first color component in the target information is set as an absolute value of a difference between a value of a respective one of the first color component samples in the neighboring area of the current block and a reconstructed value of a respective one of the first reference color component samples in the current block; or, each of the reference sample values of the first color component in the target information is set as an absolute value of a difference between a respective one of the filtered neighboring sample values of the first color component of the current block and a reconstructed value of a respective one of the first reference color component samples in the current block; or, each of the reference sample values of the first color component in the target information is set as an absolute value of a difference between a value of a respective one of the first color component samples in the neighboring area of the current block and a filtered sample value of a respective one of the first reference color component samples in the current block, specific limitation is not imposed thereto here.

In some embodiments, the operation of determining the respective one of the weighting coefficients according to each of the reference sample values of the first color component in the target information may include the following operations.

A respective value corresponding to each of the reference sample values of the first color component under a preset mapping relationship is determined.

The respective one of the weighting coefficients is set to be equal to the respective value.

It should be noted that in the embodiment of the disclosure, each of the reference sample values of the first color component may be the absolute value of the difference between the respective one of the filtered neighboring sample values of the first color component of the current block and the filtered sample value of the respective one of the first reference color component samples in the current block. The first reference color component is the first color component, and the first color component is a color component different from the second color component to be predicted in the embodiment of the disclosure.

It should be noted that in the embodiment of the disclosure, in order to predict the chroma component of the to-be-predicted pixel in the current block, at least one to-be-predicted pixel in the current block may be selected, and a respective luma difference (indicated by $|\Delta Y_k|$) between reconstructed luma of each of the at least one to-be-predicted pixel and the reference luma in the neighboring area is calculated respectively. If $|\Delta Y_k|$ is small, it indicates that similarity between luma values is relatively strong, and a large weight is provided to a weighting coefficient (indicated by $w_k$) corresponding thereto. On the contrary, if $|\Delta Y_k|$ is large, it indicates that similarity between luma values is relatively weak, and a small weight is provided to $w_k$. That is, $w_k$ and $|\Delta Y_k|$ are approximately in an inverse ratio there-between, under the preset mapping relationship.

Further, in some embodiments, the operation of determining the respective value corresponding to each of the reference sample values of the first color component under the preset mapping relationship may include the following operations. A first factor is determined. A respective first product value is determined according to the first factor and each of the reference sample values of the first color component. A value corresponding to the respective first product value under the preset mapping relationship is determined.

In a specific embodiment, the operation of determining the first factor may include: the first factor is a preset constant value.

In another specific embodiment, the operation of determining the first factor may include the following operation. A value of the first factor is determined according to size parameters of the current block.

Further, in some embodiments, the method may further include the following operation. The value of the first factor is determined according to a preset look-up table mapping the size parameters of the current block to the value of the first factor.

Here, the size parameters of the current block may include at least one of a width of the current block, a height of the current block, or a product of the width and height of the current block.

It should be noted that in the embodiment of the disclosure, a classification mode may be used to fix the value of the first factor. For example, size parameters according to the current block are divided into three categories, and a respective value of the first factor corresponding to each of the categories is determined. Exemplarily, the foregoing Table 1 shows a schematic correspondence between the first factor and the size parameters of the current block.

In yet another specific embodiment, the operation of determining the first factor may include the following operation. The value of the first factor is determined according to a number of reference pixels of the current block.

Further, in some embodiments, the method may further include the following operation. The value of the first factor is determined according to a preset look-up table mapping the number of reference pixels of the current block to the value of the first factor.

It should be noted that in the embodiment of the disclosure, the number of reference pixels may be divided into three categories, and a classification mode is still used to fix the value of the first factor. Exemplarily, the foregoing Table 2 shows a schematic correspondence between the first factor and the number of reference pixels of the current block.

Further, with respect to the first product value, the operation of determining the respective first product value according to the first factor and each of the reference sample values of the first color component may include the following operations.

The respective first product value is set to be equal to a product of the first factor and each of the reference sample values of the first color component.

Or, the respective first product value is set to be equal to a value obtained by bit-right-shifting of each of the reference sample values of the first color component, here, a number of bits of the bit-right-shifting is equal to the first factor.

Or, the respective first product value is set as a value obtained by addition and bit-shifting operations of each of the reference sample values of the first color component according to the first factor.

Exemplarily, it is assumed that the first factor is equal to 0.25 and the reference sample value of the first color component is indicated by Ref, then the first product value may be equal to $0.25 \times$ Ref, and $0.25 \times$ Ref may be written as Ref/4, that is, Ref>>2. Furthermore, during fixed-point calculation, floating-point numbers may be converted into addition and shifting operations; that is, any limitation is not imposed to calculation modes of the first product value.

It may also be understood that in the embodiment of the disclosure, the first reference color component may also be a chroma component, that is, at least one to-be-predicted pixel with apparent color difference in the current block is selected, and a respective chroma difference (indicated by $|\Delta C_k|$) between reconstructed chroma of each of the at least one to-be-predicted pixel and the reference chroma in the neighboring area is calculated respectively. If $|\Delta C_k|$ is small, it indicates that similarity between chroma values is relatively strong, and a large weight may be provided to a weighting coefficient (indicated by $w_k$) corresponding thereto. On the contrary, if $|\Delta C_k|$ is large, it indicates that similarity between chroma values is relatively weak, and a small weight may be provided to $w_k$. That is, when the weighting coefficient is calculated, the reference sample value of the first color component may also be $|\Delta C_k|$, and then the weighting coefficient is calculated.

Simply speaking, in the embodiment of the disclosure, the reference sample value of the first color component may be $|\Delta C_k|$, that is, an absolute value of the chroma difference; or may be $|\Delta Y_k|$, that is, an absolute value of the luma difference; or may be $|\alpha \Delta Y_k|$, that is, a product of the absolute value of the luma difference and a preset multiplier, etc. The preset multiplier here is the second factor described in the embodiment of the disclosure.

Further, with respect to the second factor, in a specific embodiment, the method may further include the following operation. A least square method calculation is performed according to first and second color component values of the reference pixel, to determine the second factor.

That is, it is assumed that a number of reference pixels is N, the first color component value of the reference pixel is the reference luma information of the current block, and the second color component value of the reference pixel is the reference chroma information of the current block, then a least square method calculation may be performed on chroma component values and luma component values of the N reference pixels, for example, a least square regression calculation is as shown in the foregoing formula (5), so that the second factor may be obtained by calculation.

Furthermore, with respect to the preset mapping relationship, it may be a preset function relationship. In some embodiments, the preset mapping relationship may be a Softmax function, as shown in the foregoing formula (6) or formula (7). The Softmax function is a normalized exponential function, however, normalization may not be required by the embodiment of the disclosure, and a value thereof is not limited to be in a range of [0, 1].

It should also be noted that besides the Softmax function, in some other embodiments, the preset mapping relationship may be a weighting function having an inverse ratio relationship with the reference sample values of the first color component, as shown in the foregoing formula (8) or formula (9).

In this way, the preset mapping relationship may be as shown in formula (4), or may be as shown in formula (6) or formula (7), or may be as shown in formula (8) or formula (9), or even may be other function models capable of fitting a trend of the closer the reference luma value of the reference pixel relative to the reconstructed luma value of the to-be-predicted pixel in the current block, the higher the importance of the reference chroma value of the reference pixel to the to-be-predicted pixel in the current block, to create the weighting coefficients, or the like. Furthermore, the preset mapping relationship may also be in form of a preset look-up table, for example, an array element look-up mode is used to reduce part of calculation operations, or the like, and the embodiment of the disclosure does not impose specific limitation thereto.

In this way, the weighting coefficients may be determined according to the reference sample values of the first color component (for example, $|\Delta Y_{kij}|$), and may specifically include N weighting coefficients such as $w_1, w_2, ..., w_N$, here N indicates the number of reference sample values of the second color component. Here, theoretically speaking, a sum of the N weighting coefficients is equal to 1, and each of the weighting coefficients is a value equal to or greater than 0 and less than or equal to 1.

At S1804, a prediction block of a second color component of the current block is determined according to the weighting coefficients and reference sample values of a second color component in the target information.

At S1805, predicted difference values of second color component samples of the current block are determined according to the prediction block.

It should be noted that after the weighting coefficients are determined, weighted calculation may be performed on the reference sample values of the second color component by using the weighting coefficients, thereby obtaining predicted values of second color component samples in the prediction block.

In some embodiments, the operation of determining the prediction block of the second color component of the current block according to the weighting coefficients and the reference sample values of the second color component in the target information may include the following operations.

A respective weighted value between each of the reference sample values of the second color component and a weighting coefficient corresponding to the reference sample value is determined.

A predicted value of a respective one of second color component samples in the prediction block is set to be equal to a sum of N weighted values, N indicates a number of the reference sample values of the second color component, and N is a positive integer.

That is, if the number of the reference sample values of the second color component is N, a respective weighted value (that is, $w_k C_k$) between each of the reference sample values of the second color component and a weighting coefficient corresponding to the reference sample value is determined, and then a sum of the N weighted values is used as the predicted value of the respective one of the second color component samples in the prediction block. Specifically, a calculation formula thereof is shown as the foregoing formula (16), and this calculation mode is conducive to parallel processing and may speed up calculation.

It should also be noted that in the embodiment of the disclosure, the first color component is the luma component, and the second color component is the chroma component. Since there is a case where resolution of the luma component is different from resolution of the chroma component, when the filtering process is performed on the reference information, it includes that downsampling filtering is performed on the luma component to align the resolution of the chroma component, or upsampling filtering is performed on the chroma component to align the resolution of the luma component.

Further, it usually needs to limit the predicted value of the respective one of the second color component samples in the prediction block to be in a preset range. Therefore, in some embodiments, the method may further include the following operations. A correction operation is performed on the predicted value of the respective one of the second color component samples in the prediction block, to determine the prediction block of the second color component of the current block.

It should be noted that in the embodiment of the disclosure, the preset range may be between 0 and (1<<BitDepth)-1. If the predicted value exceeds values of the preset range, it needs to perform a corresponding correction operation on the predicted value. Exemplarily, a clamping operation may be performed on $C_{i,j}^{pred}$, so that it may be ensured that predicted values of all the second color component samples in the prediction block are between 0 and (1<<BitDepth)-1.

Further, after the prediction block is determined, the prediction block still needs to be post-processed as the final prediction block under certain conditions. Therefore, in some embodiments, the method may further include the following operations.

A relevant process is performed on the prediction block, and the processed prediction block is used as the prediction block of the second color component of the current block.

In a possible implementation, the operation of performing the relevant process on the prediction block may include the following operation. A filtering enhancement process is performed on the prediction block, and the processed prediction block is used as the prediction block of the second color component of the current block.

In another possible implementation, the operation of performing the relevant process on the prediction block may include the following operation. A compensation value of a second color component of the prediction block is determined according to reference sample values in a neighboring area of the current block. A correction process is performed on a predicted value of a respective one of second color component samples in the prediction block according to the compensation value, to determine the prediction block of the second color component of the current block.

In yet another possible implementation, the operation of performing the relevant process on the prediction block may include the following operations. A prediction process is performed on a respective one of second color component samples in the prediction block according to at least one prediction mode, to determine at least one initial predicted value of the respective one of the second color component samples in the prediction block. A weighted fusion process is performed according to the at least one initial predicted value and a predicted value of the respective one of the second color component samples in the prediction block, to determine the prediction block of the second color component of the current block.

That is, with respect to the relevant process of the prediction block, in order to reduce instability caused by WCP pixel-by-pixel independent and parallel prediction, smooth filtering may be performed on the prediction block, to be used as the final predicted chroma value. Or, in order to further improve accuracy of the WCP predicted value, a position-related correction process may be performed on the prediction block. For example, a chroma compensation value is calculated for each to-be-predicted pixel by using reference pixels with close spatial positions, the prediction block is corrected by using the chroma compensation value, and the corrected predicted value is used as the final predicted chroma value. Or, in order to further improve accuracy of the WCP predicted value, predicted chroma values calculated in other chroma prediction modes may be weighted-fused with the predicted chroma value calculated in WCP, and the fusion result is used as the final predicted chroma value. Or, in order to improve WCP prediction performance, the predicted chroma value calculated in WCP may be corrected by using a neural network model or the like, the embodiment of the disclosure does not impose any limitation thereto.

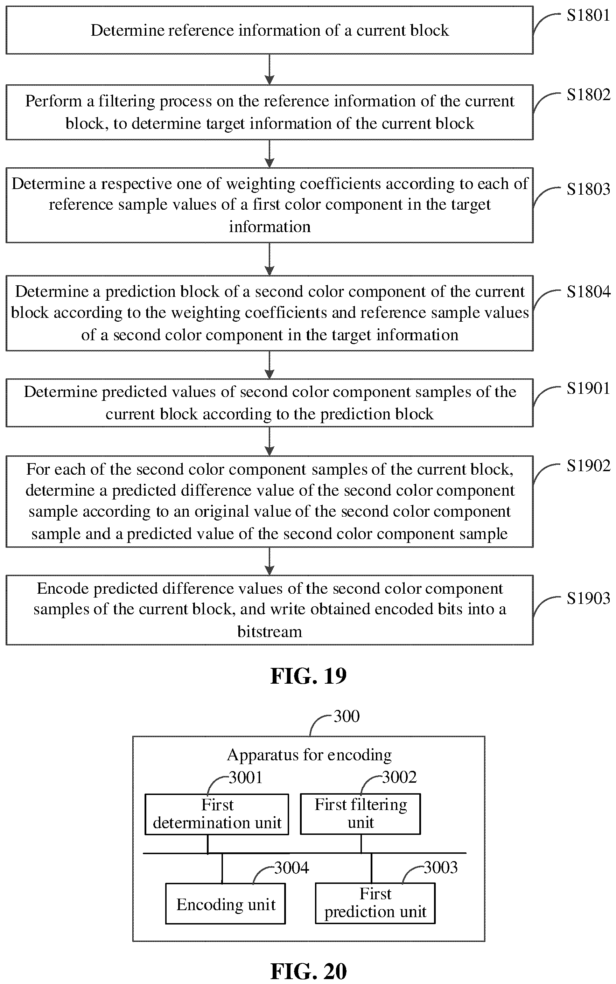

In some embodiments, after the prediction block is determined, as shown in FIG. 19, the following operations S1901 to S1903 may also be included after the operation S1804.

At S1901, predicted values of second color component samples of the current block are determined according to the prediction block.

At S1902, for each of the second color component samples of the current block, a predicted difference value of the second color component sample is determined according to an original value of the second color component sample and a predicted value of the second color component sample.

At S1903, predicted difference values of the second color component samples of the current block are encoded, and obtained encoded bits are written into a bitstream.

It should be noted that in the embodiment of the disclosure, the prediction block may contain predicted values of at least a part of the second color component samples in the current block. If the prediction block contains predicted values of all the second color component samples in the current block, the predicted values of the second color component samples of the current block may be set to be equal to the values of the prediction block; if the prediction block contains predicted values of a part of the second color component samples in the current block, upsampling filtering may be performed on the values of the prediction block, and the predicted values of the second color component samples of the current block is set to be equal to output values after the upsampling filtering.

It should also be noted that after the predicted values of the second color component samples of the current block are determined, for each of the second color component samples of the current block, a predicted difference value of the second color component sample may be determined according to an original value of the second color component sample and a predicted value of the second color component sample. Specifically, for each of the second color component samples of the current block, the predicted value of the second color component sample may be subtracted the original value of the second color component sample, so that predicted difference values of the second color component samples of the current block may be determined. In this way, after the predicted difference values of the second color component samples are written into the bitstream, the predicted difference values of the second color component samples may be obtained by decoding subsequently at the decoding side, to restore reconstructed values of the second color component samples of the current block.

In summary, it may be seen that taking chroma prediction performed on the current block as an example, in the embodiment of the disclosure, the reconstructed luma information of the current block, and the reference luma information and the reference chroma information of the neighboring area are encoded reference information. Therefore, the embodiment of the disclosure proposes a weight-based chroma prediction technology using the above information, and in a process of determining the target information of the current block according to these information, information of the neighboring area of the current block, information of the current block and the current color format information may be analyzed and processed, which mainly includes two aspects as follows: on one hand, whether downsampling is performed on the reference luma information of the neighboring area, or whether upsampling is performed on the reference chroma information of the neighboring area, is selected according to the current color format information; on the other hand, the reference luma information and the reference chroma information of the neighboring area, and the reconstructed luma information in the current block may be matched with a preset size of core parameters through different operations of size enlargement/reduction, which may improve accuracy of WCP prediction technology.

The embodiment of the disclosure further provides a method for encoding, in which reference information of a current block is determined; a filtering process is performed on partial information in the reference information of the current block, to determine target information of the current block; a respective one of weighting coefficients is determined according to each of reference sample values of a first color component in the target information; a prediction block of a second color component of the current block is determined according to the weighting coefficients and reference sample values of a second color component in the target information; predicted difference values of second color component samples of the current block are determined according to the prediction block. In this way, with respect to color component information in the neighboring area of the current block and color component information in the current block, accuracy of these reference information may be improved since characteristics of color format information are fully considered; and upsampling, downsampling or other filtering processes are performed on these reference information, so that continuity of spatial correlation thereof may be enhanced to a certain extent, or some information with weak spatial correlation may be removed, chroma prediction may be performed better by using the target information obtained after the filtering processes, thereby improving accuracy of the chroma prediction, saving bitrates, while improving encoding and decoding performance.

In yet another embodiment of the disclosure, the embodiment of the disclosure further provides a bitstream, the bitstream is generated by bit encoding according to to-be-encoded information, the to-be-encoded information includes at least predicted difference values of second color component samples of the current block.

In the embodiment of the disclosure, after the predicted difference values of the second color component samples of the current block are transmitted from the encoding side to the decoding side, the decoding side obtains the predicted difference values of the second color component samples through decoding, and then combines them with the predicted values of the second color component samples of the current block, so that the reconstructed values of the second color component samples of the current block may be restored. In this way, characteristics of input color format information are fully considered, to improve accuracy of the reference information of the neighboring area; spatial correlation is fully utilized, to perform upsampling, downsampling, size enlargement, size reduction, or other filtering processes on the reference information of the neighboring area and the reconstructed luma information of the current block, which not only improves accuracy of the chroma prediction, saves bitrates, but also improves encoding and decoding performance.

In yet another embodiment of the disclosure, based on an inventive concept the same as the foregoing embodiments, with reference to FIG. 20, a schematic structural diagram of composition of an apparatus for encoding 300 provided in an embodiment of the disclosure is shown. As shown in FIG. 20, the apparatus for encoding 300 may include a first determination unit 3001, a first filtering unit 3002, and a first prediction unit 3003.

The first determination unit 3001 is configured to determine reference information of a current block.

The first filtering unit 3002 is configured to perform a filtering process on partial information in the reference information of the current block, to determine target information of the current block.

The first determination unit 3001 is further configured to determine a respective one of weighting coefficients according to each of reference sample values of a first color component in the target information.

The first prediction unit 3003 is configured to determine a prediction block of a second color component of the current block according to the weighting coefficients and reference sample values of a second color component in the target information.

The first determination unit 3001 is further configured to determine predicted difference values of second color component samples of the current block according to the prediction block.

In some embodiments, the prediction block includes predicted values of at least a part of the second color component samples in the current block.

In some embodiments, the first determination unit 3001 is further configured to determine the reference information of the current block according to values of first color component samples in a neighboring area of the current block, values of second color component samples in the neighboring area of the current block, and reconstructed values of first reference color component samples in the current block.

In some embodiments, the neighboring area of the current block includes at least one of an upper neighboring area, an upper right neighboring area, a left neighboring area, or a lower left neighboring area.

In some embodiments, the first filtering unit 3002 is further configured to: perform a first filtering process on the values of the first color component samples in the neighboring area of the current block, to obtain filtered sample values of a first color component in the neighboring area of the current block; and determine the target information of the current block according to the filtered sample values of the first color component in the neighboring area of the current block.

In some embodiments, a number of filtered sample values of the first color component in the neighboring area of the current block is equal to L, L indicates a number of the values of the second color component samples in the neighboring area of the current block, and L is a positive integer.

In some embodiments, the first filtering process is a downsampling filtering process.

In some embodiments, the first filtering unit 3002 is further configured to perform the first filtering process on the values of the first color component samples in the neighboring area of the current block based on color format information, to obtain the filtered sample values of the first color component in the neighboring area of the current block.

In some embodiments, the first filtering unit 3002 is further configured to: if the color format information indicates 4:2:0 sampling, perform downsampling filtering on the values of the first color component samples in the neighboring area of the current block, a downsampling rate is a reciprocal of a positive integer multiple of 2.

In some embodiments, the first filtering unit 3002 is further configured to: compare L with a preset number; perform a second filtering process on the filtered sample values of the first color component in the neighboring area of the current block and the values of the second color component samples in the neighboring area of the current block according to a comparison result between L and the preset number, to determine filtered neighboring sample values of a first color component of the current block and filtered neighboring sample values of the second color component of the current block;

and determine the target information of the current block according to the filtered neighboring sample values of the first color component of the current block and the filtered neighboring sample values of the second color component of the current block.

In some embodiments, the first filtering unit 3002 is further configured to: if L is greater than the preset number, perform a first sub-filtering process on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block; and if L is less than the preset number, perform a second sub-filtering process on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block.

In some embodiments, the first filtering unit 3002 is further configured to: perform a third filtering process on the values of the second color component samples in the neighboring area of the current block, to obtain filtered sample values of a second color component in the neighboring area of the current block; and determine the target information of the current block according to the filtered sample values of the second color component in the neighboring area of the current block.

In some embodiments, a number of filtered sample values of the second color component in the neighboring area of the current block is equal to K, K indicates a number of the values of the first color component samples in the neighboring area of the current block, and K is a positive integer.

In some embodiments, the third filtering process is an upsampling filtering process.

In some embodiments, the first filtering unit 3002 is further configured to perform the third filtering process on the values of the second color component samples in the neighboring area of the current block based on color format information, to obtain the filtered sample values of the second color component in the neighboring area of the current block.

In some embodiments, the first filtering unit 3002 is further configured to: if the color format information indicates 4:2:0 sampling, perform upsampling filtering on the values of the second color component samples in the neighboring area of the current block, an upsampling rate is a positive integer multiple of 2.

In some embodiments, the first filtering unit 3002 is further configured to: compare K with a preset number; perform a fourth filtering process on the values of the first color component samples in the neighboring area of the current block and the filtered sample values of the second color component in the neighboring area of the current block according to a comparison result between K and the preset number, to determine filtered neighboring sample values of a first color component of the current block and filtered neighboring sample values of the second color component of the current block; and determine the target information of the current block according to the filtered neighboring sample values of the first color component of the current block and the filtered neighboring sample values of the second color component of the current block.

In some embodiments, the first filtering unit 3002 is further configured to: if K is greater than the preset number, perform a first sub-filtering process on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block; and if K is less than the preset number, perform a second sub-filtering process on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block.

In some embodiments, the first filtering unit 3002 is further configured to: determine a number of the values of the first color component samples in the neighboring area of the current block as a first number; perform a fifth filtering process on the values of the first color component samples in the neighboring area of the current block according to a comparison result between the first number and a preset number, to determine filtered neighboring sample values of a first color component of the current block; and determine the target information of the current block according to the filtered neighboring sample values of the first color component of the current block.

In some embodiments, the first filtering unit 3002 is further configured to: if the first number is greater than the preset number, perform a first sub-filtering process on the values of the first color component samples in the neighboring area of the current block, to determine the filtered neighboring sample values of the first color component of the current block; and if the first number is less than the preset number, perform a second sub-filtering process on the values of the first color component samples in the neighboring area of the current block, to determine the filtered neighboring sample values of the first color component of the current block.

In some embodiments, the first filtering unit 3002 is further configured to: determine a number of the values of the second color component samples in the neighboring area of the current block as a second number; perform a sixth filtering process on the values of the second color component samples in the neighboring area of the current block according to a comparison result between the second number and a preset number, to determine filtered neighboring sample values of the second color component of the current block; and determine the target information of the current block according to the filtered neighboring sample values of the second color component of the current block.

In some embodiments, the first filtering unit 3002 is further configured to: if the second number is greater than the preset number, perform a first sub-filtering process on the values of the second color component samples in the neighboring area of the current block, to determine the filtered neighboring sample values of the second color component of the current block; and if the second number is less than the preset number, perform a second sub-filtering process on the values of the second color component samples in the neighboring area of the current block, to determine the filtered neighboring sample values of the second color component of the current block.

In some embodiments, the first filtering unit 3002 is further configured to set the reference sample values of the second color component in the target information as the filtered neighboring sample values of the second color component of the current block.

In some embodiments, the first sub-filtering process is a downsampling filtering process.

In some embodiments, the first filtering unit 3002 is further configured for the first sub-filtering process including at least one of: performing a sub-filtering process by using a fixed-interval position selection mode; or performing the sub-filtering process by using a continuous position selection mode.

In some embodiments, the second sub-filtering process is an upsampling filtering process.

In some embodiments, the first filtering unit 3002 is further configured for the second sub-filtering process including at least one of: performing a sub-filtering process by using a fixed-interval position interpolation mode.

In some embodiments, the first filtering unit 3002 is further configured to: perform a seventh filtering process on the reconstructed values of the first reference color component samples in the current block, to determine filtered sample values of the first reference color component samples in the current block; and determine the target information of the current block according to the filtered sample values of the first reference color component samples in the current block.

In some embodiments, the first filtering unit 3002 is further configured to: determine a first width and a first height according to the reconstructed values of the first reference color component samples in the current block; if the first width is greater than a width of the prediction block, or the first height is greater than a height of the prediction block, perform a third sub-filtering process on the reconstructed values of the first reference color component samples in the current block, to determine the filtered sample values of the first reference color component samples in the current block; and if the first width is less than the width of the prediction block, or the first height is less than the height of the prediction block, perform a fourth sub-filtering process on the reconstructed values of the first reference color component samples in the current block, to determine the filtered sample values of the first reference color component samples in the current block.

In some embodiments, the third sub-filtering process is a downsampling filtering process.

In some embodiments, the first filtering unit 3002 is further configured for the third sub-filtering process including at least one of: performing the downsampling filtering process in a horizontal direction on the reconstructed values of the first reference color component samples in the current block; performing the downsampling filtering process in a vertical direction on the reconstructed values of the first reference color component samples in the current block; performing the downsampling filtering process in the horizontal direction and then in the vertical direction on the reconstructed values of the first reference color component samples in the current block; or performing the downsampling filtering process in the vertical direction and then in the horizontal direction on the reconstructed values of the first reference color component samples in the current block.

In some embodiments, the fourth sub-filtering process is an upsampling filtering process.

In some embodiments, the first filtering unit 3002 is further configured for the fourth sub-filtering process including at least one of: performing the upsampling filtering process in a horizontal direction on the reconstructed values of the first reference color component samples in the current block; performing the upsampling filtering process in a vertical direction on the reconstructed values of the first reference color component samples in the current block; performing the upsampling filtering process in the horizontal direction and then in the vertical direction on the reconstructed values of the first reference color component samples in the current block; or performing the upsampling filtering process in the vertical direction and then in the horizontal direction on the reconstructed values of the first reference color component samples in the current block.

In some embodiments, the first filtering unit 3002 is further configured to set each of the reference sample values of the first color component in the target information as an absolute value of a difference between a value of a respective one of the first color component samples in the neighboring area of the current block and a reconstructed value of a respective one of the first reference color component samples in the current block.

In some embodiments, the first filtering unit 3002 is further configured to set each of the reference sample values of the first color component in the target information as an absolute value of a difference between a respective one of the filtered neighboring sample values of the first color component of the current block and a filtered sample value of a respective one of the first reference color component samples in the current block.

In some embodiments, the first determination unit 3001 is further configured to: determine a respective value corresponding to each of the reference sample values of the first color component under a preset mapping relationship; and set the respective one of the weighting coefficients to be equal to the respective value.

In some embodiments, the first determination unit 3001 is further configured to: determine a first factor; determine a respective first product value according to the first factor and each of the reference sample values of the first color component; and determine a value corresponding to the respective first product value under the preset mapping relationship.

In some embodiments, the first factor is a preset constant value.

In some embodiments, the first determination unit 3001 is further configured to determine a value of the first factor according to size parameters of the current block, the size parameters of the current block include at least one of a width of the current block or a height of the current block.

In some embodiments, the preset mapping relationship is a Softmax function.

In some embodiments, the preset mapping relationship is a weighting function having an inverse ratio relationship with the reference sample values of the first color component.

In some embodiments, the first prediction unit 3003 is further configured to: determine a respective weighted value between each of the reference sample values of the second color component and a weighting coefficient corresponding to the reference sample value; and set a predicted value of a respective one of second color component samples in the prediction block to be equal to a sum of N weighted values, N indicates a number of the reference sample values of the second color component, and N is a positive integer.

In some embodiments, the first prediction unit 3003 is further configured to perform a correction operation on the predicted value of the respective one of the second color component samples in the prediction block, to determine the prediction block of the second color component of the current block.

In some embodiments, the first prediction unit 3003 is further configured to perform a filtering enhancement process on the prediction block, and use the processed prediction block as the prediction block of the second color component of the current block.

In some embodiments, the first prediction unit 3003 is further configured to: determine a compensation value of a second color component of the prediction block according to reference sample values in a neighboring area of the current block; and perform a correction process on a predicted value of a respective one of second color component samples in the prediction block according to the compensation value, to determine the prediction block of the second color component of the current block.

In some embodiments, the first prediction unit 3003 is further configured to: perform a prediction process on a respective one of second color component samples in the prediction block according to at least one prediction mode, to determine at least one initial predicted value of the respective one of the second color component samples in the prediction block; and perform a weighted fusion process according to the at least one initial predicted value and a predicted value of the respective one of the second color component samples in the prediction block, to determine the prediction block of the second color component of the current block.

In some embodiments, the first determination unit 3001 is further configured to: determine predicted values of the second color component samples of the current block according to the prediction block; and for each of the second color component samples of the current block, determine a predicted difference value of the second color component sample according to an original value of the second color component sample and a predicted value of the second color component sample.

In some embodiments, with reference to FIG. 20, the apparatus for encoding 300 may further include an encoding unit 3004, the encoding unit 3004 is configured to encode the predicted difference values of the second color component samples of the current block, and write obtained encoded bits into a bitstream.

It may be understood that in the embodiment of the disclosure, the "unit" may be part of a circuit, part of a processor, part of a program or software, or the like, and of course, the "unit" may also be a module, or may be non-modular. Furthermore, components in the embodiment may be integrated into a processing unit, or each unit may physically exist alone, or two or more units may be integrated into a unit. The above integrated unit may be implemented in form of hardware, or may be implemented in form of software function modules.

If the integrated unit is implemented in form of software function modules and is not sold or used as an independent product, the integrated unit may be stored in a computer-readable storage medium. Based on such understanding, the technical solution of the embodiment substantially or parts making contributions to the related art, or all or part of the technical solution may be embodied in form of a software product, and the computer software product is stored in a storage medium, and includes several instructions to enable a computer device (which may be a personal computer, a server, or a network device, etc.) or a processor to execute all or part of operations of the method described in the embodiment. The foregoing storage medium includes various media capable of storing program codes such as a U disk, a mobile hard disk, a Read Only Memory (ROM), a Random Access Memory (RAM), a magnetic disk, or an optical disk, etc.

Therefore, an embodiment of the disclosure provides a computer-readable storage medium, applied to the apparatus for encoding 300. The computer-readable storage medium stores a computer program, and the computer program implements the method of any one of the foregoing embodiments when it is executed by a first processor.

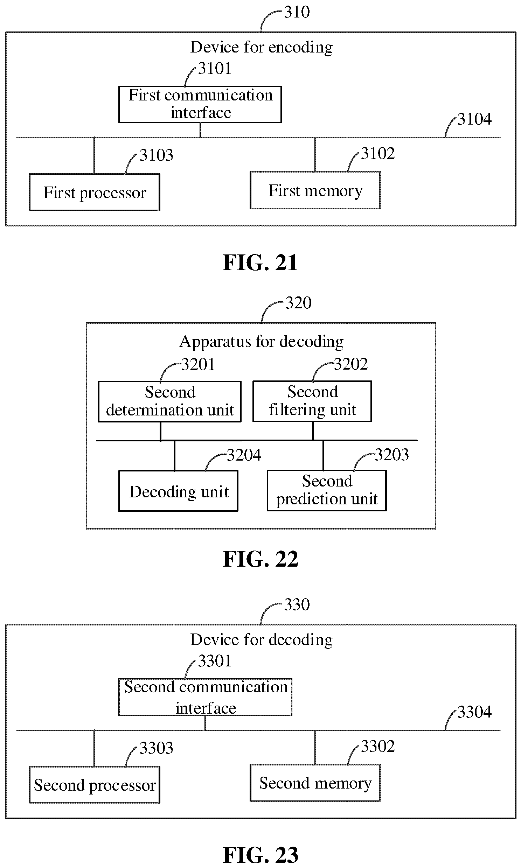

Based on composition of the above apparatus for encoding 300 and the computer-readable storage medium, with reference to FIG. 21, a schematic diagram of a specific hardware structure of a device for encoding 310 provided in an embodiment of the disclosure is shown. As shown in FIG. 21, the device for encoding 310 may include a first communication interface 3101, a first memory 3102, and a first processor 3103; various components are coupled together through a first bus system 3104. It may be understood that the first bus system 3104 is configured to implement connection and communication between these components. Besides a data bus, the first bus system 3104 includes a power bus, a control bus and a status signal bus. However, for the sake of clear illustration, various buses are labeled as the first bus system 3104 in FIG. 21.

The first communication interface 3101 is configured to receive and send signals in a process of receiving/sending information from/to other external network elements.

The first memory 3102 is configured to store a computer program executable on the first processor 3103.

The first processor 3103 is configured to: when it executes the computer program, execute operations of: determining reference information of a current block; performing a filtering process on partial information in the reference information of the current block, to determine target information of the current block; determining a respective one of weighting coefficients according to each of reference sample values of a first color component in the target information; determining a prediction block of a second color component of the current block according to the weighting coefficients and reference sample values of a second color component in the target information; and determining predicted difference values of second color component samples of the current block according to the prediction block.

It may be understood that the first memory 3102 in the embodiment of the disclosure may be a volatile memory or a non-volatile memory, or may include both volatile and non-volatile memories. The non-volatile memory may be a ROM, a Programmable ROM (PROM), an Erasable PROM (EPROM), an Electrically EPROM (EEPROM), or a flash memory. The volatile memory may be a RAM, and used as an external cache. By way of exemplary rather than limiting descriptions, many forms of RAMs are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), and a Direct Rambus RAM (DRRAM). The first memory 3102 of the system and method described in the disclosure is intended to include, but is not limited to these and any other suitable types of memories.

The first processor 3103 may be an integrated circuit chip with signal processing capabilities. During implementation, each operation of the above method may be completed by an integrated logic circuit in form of hardware or instructions in form of software in the first processor 3103. The above first processor 3103 may be a general-purpose processor, a Digital Signal Processor (DSP), an Application Specific Integrated Circuit (ASIC), a Field Programmable Gate Array (FPGA) or other programmable logic devices, a discrete gate or a transistor logic device, or a discrete hardware component. Each method, operation and logical block diagram disclosed in the embodiment of the disclosure may be implemented or executed. The general-purpose processor may be a microprocessor, or the processor may be any conventional processor, etc. Operations of the method disclosed in combination with the embodiment of the disclosure may be directly embodied as being executed and completed by a hardware decoding processor, or executed and completed by a combination of hardware in the decoding processor and a software module. The software module may be located in a mature storage medium in this field such as a random memory, a flash memory, a ROM, a PROM or an electrically erasable programmable memory, a register, etc. The storage medium is located in the first memory 3102, the first processor 3103 reads information in the first memory 3102 and completes operations of the above method in combination with hardware thereof.

It may be understood that these embodiments described in the disclosure may be implemented with hardware, software, firmware, middleware, microcode, or a combination thereof. With respect to implementation with hardware, the processing unit may be implemented in one or more ASICs, DSPs, DSP Devices (DSPDs), Programmable Logic Devices (PLDs), FPGAs, general-purpose processors, controllers, microcontrollers, microprocessors, other electronic units configured to perform functions described in the disclosure, or a combination thereof. With respect to implementation with software, technologies described in the disclosure may be implemented by modules (such as procedures, functions, etc.) performing the functions described in the disclosure. Software codes may be stored in a memory and executed by a processor. The memory may be implemented in the processor or out of the processor.

Optionally, as another embodiment, the first processor 3103 is further configured to perform the method of any one of the foregoing embodiments when it executes the computer program.

The embodiment provides a device for encoding, which may further include the apparatus for encoding 300 described in the foregoing embodiment. With respect to the device for encoding, characteristics of input color format information are fully considered, to improve accuracy of the reference information of the neighboring area; spatial correlation is fully utilized, to perform upsampling, downsampling, size enlargement, size reduction, or other filtering processes on the reference information of the neighboring area and the reconstructed luma information of the current block, which not only improves accuracy of the chroma prediction, saves bitrates, but also improves encoding and decoding performance.

Based on an inventive concept the same as the foregoing embodiments, with reference to FIG. 22, a schematic structural diagram of composition of an apparatus for decoding 320 provided in an embodiment of the disclosure is shown. As shown in FIG. 22, the apparatus for decoding 320 may include a second determination unit 3201, a second filtering unit 3202, and a second prediction unit 3203.

The second determination unit 3201 is configured to determine reference information of a current block.

The second filtering unit 3202 is configured to perform a filtering process on partial information in the reference information of the current block, to determine target information of the current block.

The second determination unit 3201 is further configured to determine a respective one of weighting coefficients according to each of reference sample values of a first color component in the target information.

The second prediction unit 3203 is configured to determine a prediction block of a second color component of the current block according to the weighting coefficients and reference sample values of a second color component in the target information.

The second determination unit 3201 is further configured to determine reconstructed values of second color component samples of the current block according to the prediction block.

In some embodiments, the prediction block includes predicted values of at least a part of the second color component samples in the current block.

In some embodiments, the second determination unit 3201 is further configured to determine the reference information of the current block according to values of first color component samples in a neighboring area of the current block, values of second color component samples in the neighboring area of the current block, and reconstructed values of first reference color component samples in the current block.

In some embodiments, the neighboring area of the current block may include at least one of an upper neighboring area, an upper right neighboring area, a left neighboring area, or a lower left neighboring area.

In some embodiments, the second filtering unit 3202 is further configured to: perform a first filtering process on the values of the first color component samples in the neighboring area of the current block, to obtain filtered sample values of a first color component in the neighboring area of the current block; and determine the target information of the current block according to the filtered sample values of the first color component in the neighboring area of the current block.

In some embodiments, a number of filtered sample values of the first color component in the neighboring area of the current block is equal to L, L indicates a number of the values of the second color component samples in the neighboring area of the current block, and L is a positive integer.

In some embodiments, the first filtering process is a downsampling filtering process.

In some embodiments, the second filtering unit 3202 is further configured to perform the first filtering process on the values of the first color component samples in the neighboring area of the current block based on color format information, to obtain the filtered sample values of the first color component in the neighboring area of the current block.

In some embodiments, the second filtering unit 3202 is further configured to: if the color format information indicates 4:2:0 sampling, perform downsampling filtering on the values of the first color component samples in the neighboring area of the current block, a downsampling rate is a reciprocal of a positive integer multiple of 2.

In some embodiments, the second filtering unit 3202 is further configured to: compare L with a preset number; perform a second filtering process on the filtered sample values of the first color component in the neighboring area of the current block and the values of the second color component samples in the neighboring area of the current block according to a comparison result between L and the preset number, to determine filtered neighboring sample values of a first color component of the current block and filtered neighboring sample values of the second color component of the current block; and determine the target information of the current block according to the filtered neighboring sample values of the first color component of the current block and the filtered neighboring sample values of the second color component of the current block.

In some embodiments, the second filtering unit 3202 is further configured to: if L is greater than the preset number, perform a first sub-filtering process on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block; and if L is less than the preset number, perform a second sub-filtering process on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block.

In some embodiments, the second filtering unit 3202 is further configured to: perform a third filtering process on the values of the second color component samples in the neighboring area of the current block, to obtain filtered sample values of a second color component in the neighboring area of the current block; and determine the target information of the current block according to the filtered sample values of the second color component in the neighboring area of the current block.

In some embodiments, a number of filtered sample values of the second color component in the neighboring area of the current block is equal to K, K indicates a number of the values of the first color component samples in the neighboring area of the current block, and K is a positive integer.

In some embodiments, the third filtering process is an upsampling filtering process.

In some embodiments, the second filtering unit 3202 is further configured to perform the third filtering process on the values of the second color component samples in the neighboring area of the current block based on color format information, to obtain the filtered sample values of the second color component in the neighboring area of the current block.

In some embodiments, the second filtering unit 3202 is further configured to: if the color format information indicates 4:2:0 sampling, perform upsampling filtering on the values of the second color component samples in the neighboring area of the current block, an upsampling rate is a positive integer multiple of 2.

In some embodiments, the second filtering unit 3202 is further configured to: compare K with a preset number; perform a fourth filtering process on the values of the first color component samples in the neighboring area of the current block and the filtered sample values of the second color component in the neighboring area of the current block according to a comparison result between K and the preset number, to determine filtered neighboring sample values of a first color component of the current block and filtered neighboring sample values of the second color component of the current block; and determine the target information of the current block according to the filtered neighboring sample values of the first color component of the current block and the filtered neighboring sample values of the second color component of the current block.

In some embodiments, the second filtering unit 3202 is further configured to: if K is greater than the preset number, perform a first sub-filtering process on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block; and if K is less than the preset number, perform a second sub-filtering process on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block.

In some embodiments, the second filtering unit 3202 is further configured to: determine a number of the values of the first color component samples in the neighboring area of the current block as a first number; perform a fifth filtering process on the values of the first color component samples in the neighboring area of the current block according to a comparison result between the first number and a preset number, to determine filtered neighboring sample values of a first color component of the current block; and determine the target information of the current block according to the filtered neighboring sample values of the first color component of the current block.

In some embodiments, the second filtering unit 3202 is further configured to: if the first number is greater than the preset number, perform a first sub-filtering process on the values of the first color component samples in the neighboring area of the current block, to determine the filtered neighboring sample values of the first color component of the current block; and if the first number is less than the preset number, perform a second sub-filtering process on the values of the first color component samples in the neighboring area of the current block, to determine the filtered neighboring sample values of the first color component of the current block.

In some embodiments, the second filtering unit 3202 is further configured to: determine a number of the values of the second color component samples in the neighboring area of the current block as a second number; perform a sixth filtering process on the values of the second color component samples in the neighboring area of the current block according to a comparison result between the second number and a preset number, to determine filtered neighboring sample values of the second color component of the current block; and determine the target information of the current block according to the filtered neighboring sample values of the second color component of the current block.

In some embodiments, the second filtering unit 3202 is further configured to: if the second number is greater than the preset number, perform a first sub-filtering process on the values of the second color component samples in the neighboring area of the current block, to determine the filtered neighboring sample values of the second color component of the current block; and if the second number is less than the preset number, perform a second sub-filtering process on the values of the second color component samples in the neighboring area of the current block, to determine the filtered neighboring sample values of the second color component of the current block.

In some embodiments, the second filtering unit 3202 is further configured to set the reference sample values of the second color component in the target information as the filtered neighboring sample values of the second color component of the current block.

In some embodiments, the first sub-filtering process is a downsampling filtering process.

In some embodiments, the first filtering unit 3002 is further configured for the first sub-filtering process including at least one of: performing a sub-filtering process by using a fixed-interval position selection mode; or performing the sub-filtering process by using a continuous position selection mode.

In some embodiments, the second sub-filtering process is an upsampling filtering process.

In some embodiments, the first filtering unit 3002 is further configured for the second sub-filtering process including at least one of: performing a sub-filtering process by using a fixed-interval position interpolation mode.

In some embodiments, the second filtering unit 3202 is further configured to: perform a seventh filtering process on the reconstructed values of the first reference color component samples in the current block, to determine filtered sample values of the first reference color component samples in the current block; and determine the target information of the current block according to the filtered sample values of the first reference color component samples in the current block.

In some embodiments, the second filtering unit 3202 is further configured to: determine a first width and a first height according to the reconstructed values of the first reference color component samples in the current block; if the first width is greater than a width of the prediction block, or the first height is greater than a height of the prediction block, perform a third sub-filtering process on the reconstructed values of the first reference color component samples in the current block, to determine the filtered sample values of the first reference color component samples in the current block; and if the first width is less than the width of the prediction block, or the first height is less than the height of the prediction block, perform a fourth sub-filtering process on the reconstructed values of the first reference color component samples in the current block, to determine the filtered sample values of the first reference color component samples in the current block.

In some embodiments, the third sub-filtering process is a downsampling filtering process.

In some embodiments, the first filtering unit 3002 is further configured for the third sub-filtering process including at least one of: performing the downsampling filtering process in a horizontal direction on the reconstructed values of the first reference color component samples in the current block; performing the downsampling filtering process in a vertical direction on the reconstructed values of the first reference color component samples in the current block; performing the downsampling filtering process in the horizontal direction and then in the vertical direction on the reconstructed values of the first reference color component samples in the current block; or performing the downsampling filtering process in the vertical direction and then in the horizontal direction on the reconstructed values of the first reference color component samples in the current block.

In some embodiments, the fourth sub-filtering process is an upsampling filtering process.

In some embodiments, the second filtering unit 3202 is further configured for the fourth sub-filtering process including at least one of: performing the upsampling filtering process in a horizontal direction on the reconstructed values of the first reference color component samples in the current block; performing the upsampling filtering process in a vertical direction on the reconstructed values of the first reference color component samples in the current block; performing the upsampling filtering process in the horizontal direction and then in the vertical direction on the reconstructed values of the first reference color component samples in the current block; or performing the upsampling filtering process in the vertical direction and then in the horizontal direction on the reconstructed values of the first reference color component samples in the current block.

In some embodiments, the second filtering unit 3202 is further configured to set each of the reference sample values of the first color component in the target information as an absolute value of a difference between a value of a respective one of the first color component samples in the neighboring area of the current block and a reconstructed value of a respective one of the first reference color component samples in the current block.

In some embodiments, the second filtering unit 3202 is further configured to set each of the reference sample values of the first color component in the target information as an absolute value of a difference between a respective one of the filtered neighboring sample values of the first color component of the current block and a filtered sample value of a respective one of the first reference color component samples in the current block.

In some embodiments, the second determination unit 3201 is further configured to: determine a respective value corresponding to each of the reference sample values of the first color component under a preset mapping relationship; and set the respective one of the weighting coefficients to be equal to the respective value.

In some embodiments, the second determination unit 3201 is further configured to: determine a first factor; determine a respective first product value according to the first factor and each of the reference sample values of the first color component; and determine a value corresponding to the respective first product value under the preset mapping relationship.

In some embodiments, the first factor is a preset constant value.

In some embodiments, the second determination unit 3201 is further configured to determine a value of the first factor according to size parameters of the current block, the size parameters of the current block include at least one of a width of the current block or a height of the current block.

In some embodiments, the preset mapping relationship is a Softmax function.

In some embodiments, the preset mapping relationship is a weighting function having an inverse ratio relationship with the reference sample values of the first color component.

In some embodiments, the second prediction unit 3203 is further configured to: determine a respective weighted value between each of the reference sample values of the second color component and a weighting coefficient corresponding to the reference sample value; and set a predicted value of a respective one of second color component samples in the prediction block to be equal to a sum of N weighted values, N indicates a number of the reference sample values of the second color component, and N is a positive integer.

In some embodiments, the second prediction unit 3203 is further configured to perform a correction operation on the predicted value of the respective one of the second color component samples in the prediction block, to determine the prediction block of the second color component of the current block.

In some embodiments, the second prediction unit 3203 is further configured to perform a filtering enhancement process on the prediction block, and use the processed prediction block as the prediction block of the second color component of the current block.

In some embodiments, the second prediction unit 3203 is further configured to: determine a compensation value of a second color component of the prediction block according to reference sample values in a neighboring area of the current block; and perform a correction process on a predicted value of a respective one of second color component samples in the prediction block according to the compensation value, to determine the prediction block of the second color component of the current block.

In some embodiments, the second prediction unit 3203 is further configured to: perform a prediction process on a respective one of second color component samples in the prediction block according to at least one prediction mode, to determine at least one initial predicted value of the respective one of the second color component samples in the prediction block; and perform a weighted fusion process according to the at least one initial predicted value and a predicted value of the respective one of the second color component samples in the prediction block, to determine the prediction block of the second color component of the current block.

In some embodiments, the second determination unit 3201 is further configured to: for each of the second color component samples of the current block, determine a predicted difference value of the second color component sample; determine a predicted value of the second color component sample according to the prediction block; and determine a reconstructed value of the second color component sample according to the predicted difference value of the second color component sample and the predicted value of the second color component sample.

In some embodiments, with reference to FIG. 22, the apparatus for decoding 320 may further include a decoding unit 3204, the decoding unit 3204 is configured to parse a bitstream, and determine the predicted difference values of the second color component samples of the current block.

It may be understood that in the embodiment of the disclosure, the "unit" may be part of a circuit, part of a processor, part of a program or software, or the like, and of course, the "unit" may also be a module, or may be non-modular. Furthermore, components in the embodiment may be integrated into a processing unit, or each unit may physically exist alone, or two or more units may be integrated into a unit. The above integrated unit may be implemented in form of hardware, or may be implemented in form of software function modules.

If the integrated unit is implemented in form of software function modules and is not sold or used as an independent product, the integrated unit may be stored in a computer-readable storage medium. Based on such understanding, the embodiment provides a computer-readable storage medium, applied to the apparatus for decoding 320. The computer-readable storage medium stores a computer program, and the computer program implements the method of any one of the foregoing embodiments when it is executed by a second processor.

Based on composition of the above apparatus for decoding 320 and the computer-readable storage medium, with reference to FIG. 23, a schematic diagram of a specific hardware structure of a device for decoding 330 provided in an embodiment of the disclosure is shown. As shown in FIG. 23, the device for decoding 330 may include a second communication interface 3301, a second memory 3302, and a second processor 3303; various components are coupled together through a second bus system 3304. It may be understood that the second bus system 3304 is configured to implement connection and communication between these components. Besides a data bus, the second bus system 3304 includes a power bus, a control bus and a status signal bus. However, for the sake of clear illustration, various buses are labeled as the second bus system 3304 in FIG. 23.

The second communication interface 3301 is configured to receive and send signals in a process of receiving/sending information from/to other external network elements.

The second memory 3302 is configured to store a computer program executable on the second processor 3303.

The second processor 3303 is configured to: when it executes the computer program, execute operations of: determining reference information of a current block; performing a filtering process on partial information in the reference information of the current block, to determine target information of the current block; determining a respective one of weighting coefficients according to each of reference sample values of a first color component in the target information; determining a prediction block of a second color component of the current block according to the weighting coefficients and reference sample values of a second color component in the target information; and determining reconstructed values of second color component samples of the current block according to the prediction block.

Optionally, as another embodiment, the second processor 3303 is further configured to perform the method of any one of the foregoing embodiments when it executes the computer program.

It may be understood that hardware functions of the second memory 3302 are similar to those of the first memory 3102, and hardware functions of the second processor 3303 are similar to those of the first processor 3103, which are not elaborated here.

The embodiment provides a device for decoding, which may further include the apparatus for decoding 320 described in the foregoing embodiment. With respect to the device for decoding, characteristics of input color format information are fully considered, to improve accuracy of the reference information of the neighboring area; spatial correlation is fully utilized, to perform upsampling, downsampling, size enlargement, size reduction, or other filtering processes on the reference information of the neighboring area and the reconstructed luma information of the current block, which not only improves accuracy of the chroma prediction, saves bitrates, but also improves encoding and decoding performance.

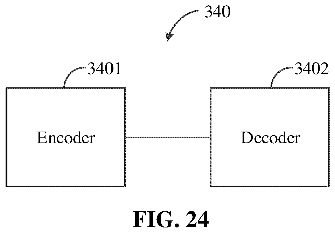

In yet another embodiment of the disclosure, with reference to FIG. 24, a schematic structural diagram of composition of a system for encoding and decoding provided in an embodiment of the disclosure is shown. As shown in FIG. 24, the system for encoding and decoding 340 may include an encoder 3401 and a decoder 3402. The encoder 3401 may be a device integrated with the apparatus for encoding 300 described in the foregoing embodiment, or may be the device for encoding 310 described in the foregoing embodiment; the decoder 3402 may be a device integrated with the apparatus for decoding 320 described in the foregoing embodiment, or may be the device for decoding 330 described in the foregoing embodiment.

In the embodiment of the disclosure, in the system for encoding and decoding 340, no matter with respect to the encoder 3401 or the decoder 3402, characteristics of input color format information may be fully considered, to improve accuracy of the reference information of the neighboring area; spatial correlation is fully utilized, to perform upsampling, downsampling, size enlargement, size reduction, or other filtering processes on the reference information of the neighboring area and the reconstructed luma information of the current block, which not only improves accuracy of the chroma prediction, saves bitrates, but also improves encoding and decoding performance.

It should be noted that in the disclosure, terms "include", "includes" or any other variants thereof are intended to cover non-exclusive inclusion, so that a process, method, article or apparatus including a series of elements not only includes those elements, but also includes other elements which are not listed explicitly, or elements inherent to such process, method, article or apparatus. Without any further limitation, an element defined by a statement "includes a..." does not exclude presence of additional identical elements in a process, method, article or apparatus including the element.

The above serial numbers of the embodiments of the disclosure are only intended for descriptions, and do not represent advantages or disadvantages of the embodiments.

The methods disclosed in several method embodiments provided in the disclosure may be arbitrarily combined without conflict, to obtain new method embodiments.

The features disclosed in several product embodiments provided in the disclosure may be arbitrarily combined without conflict, to obtain new product embodiments.

The features disclosed in several method or device embodiments provided in the disclosure may be arbitrarily combined without conflict, to obtain new method or device embodiments.

The above descriptions are only specific implementations of the disclosure, however, the scope of protection of the disclosure is not limited thereto. Variations or replacements easily conceived by any technician familiar with the technical field within the technical scope disclosed in the disclosure, should fall within the scope of protection of the disclosure. Therefore, the scope of protection of the disclosure should be subject to the scope of protection of the claims.

INDUSTRIAL APPLICABILITY

In the embodiments of the disclosure, no matter at the encoding side or the decoding side, reference information of a current block is determined; a filtering process is performed on partial information in the reference information of the current block, to determine target information of the current block; a respective one of weighting coefficients is determined according to each of reference sample values of a first color component in the target information; a prediction block of a second color component of the current block is determined according to the weighting coefficients and reference sample values of a second color component in the target information. In this way, at the encoding side, predicted difference values of second color component samples of the current block may be determined according to the prediction block, and the predicted difference values are written into a bitstream; so that at the decoding side, reconstructed values of the second color component samples of the current block may be determined according to the prediction block and predicted difference values obtained by decoding. Therefore, with respect to color component information in the neighboring area of the current block and color component information in the current block, accuracy of these reference information may be improved since characteristics of color format information are fully considered; and upsampling, downsampling or other filtering processes are performed on these reference information, so that continuity of spatial correlation thereof may be enhanced to a certain extent, or some information with weak spatial correlation may be removed, chroma prediction may be performed by using the target information obtained after the filtering processes, which may improve accuracy of the chroma prediction, save bitrates, while improve encoding and decoding performance.

**Claims**

1. A method for decoding, comprising:

 determining reference information of a current block;
 performing a filtering process on at least partial information in the reference information of the current block, to determine target information of the current block;
 determining a respective one of weighting coefficients according to each of reference sample values of a first color component in the target information;
 determining a prediction block of a second color component of the current block according to the weighting coefficients and reference sample values of a second color component in the target information; and
 determining reconstructed values of second color component samples of the current block according to the prediction block.

2. The method of claim 1, wherein the prediction block comprises predicted values of at least a part of the second color component samples in the current block.

3. The method of claim 1, wherein determining the reference information of the current block comprises:
 determining the reference information of the current block according to values of first color component samples in a neighboring area of the current block, values of second color component samples in the neighboring area of the current block, and reconstructed values of first reference color component samples in the current block.

4. The method of claim 3, wherein the neighboring area of the current block comprises at least one of an upper neighboring area, an upper right neighboring area, a left neighboring area, or a lower left neighboring area.

5. The method of claim 3, wherein performing the filtering process on the at least partial information in the reference information of the current block, to determine the target information of the current block comprises:

 performing a first filtering process on the values of the first color component samples in the neighboring area of the current block, to obtain filtered sample values of a first color component in the neighboring area of the current block; and
 determining the target information of the current block according to the filtered sample values of the first color component in the neighboring area of the current block.

6. The method of claim 5, wherein a number of filtered sample values of the first color component in the neighboring area of the current block is equal to L, L indicates a number of the values of the second color component samples in the neighboring area of the current block, and L is a positive integer.

7. The method of claim 5, wherein the first filtering process is a downsampling filtering process.

8. The method of claim 5, further comprising:
 performing the first filtering process on the values of the first color component samples in the neighboring area of the current block based on color format information, to obtain the filtered sample values of the first color component in the neighboring area of the current block.

9. The method of claim 8, wherein the first filtering process further comprises:
 if the color format information indicates 4:2:0 sampling, performing downsampling filtering on the values of the first color component samples in the neighboring area of the current block, wherein a downsampling rate is a reciprocal of a positive integer multiple of 2.

10. The method of claim 6, further comprising:

 comparing L with a preset number;

performing a second filtering process on the filtered sample values of the first color component in the neighboring area of the current block and the values of the second color component samples in the neighboring area of the current block according to a comparison result between L and the preset number, to determine filtered neighboring sample values of a first color component of the current block and filtered neighboring sample values of the second color component of the current block; and

determining the target information of the current block according to the filtered neighboring sample values of the first color component of the current block and the filtered neighboring sample values of the second color component of the current block.

11. The method of claim 10, wherein performing the second filtering process on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block comprises:

if L is greater than the preset number, performing a first sub-filtering process on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block; and

if L is less than the preset number, performing a second sub-filtering process on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block.

12. The method of claim 3, wherein performing the filtering process on the at least partial information in the reference information of the current block, to determine the target information of the current block comprises:

performing a third filtering process on the values of the second color component samples in the neighboring area of the current block, to obtain filtered sample values of a second color component in the neighboring area of the current block; and

determining the target information of the current block according to the filtered sample values of the second color component in the neighboring area of the current block.

13. The method of claim 12, wherein a number of filtered sample values of the second color component in the neighboring area of the current block is equal to K, K indicates a number of the values of the first color component samples in the neighboring area of the current block, and K is a positive integer.

14. The method of claim 12, wherein the third filtering process is an upsampling filtering process.

15. The method of claim 12, further comprising:
performing the third filtering process on the values of the second color component samples in the neighboring area of the current block based on color format information, to obtain the filtered sample values of the second color component in the neighboring area of the current block.

16. The method of claim 15, wherein the third filtering process further comprises:
if the color format information indicates 4:2:0 sampling, performing upsampling filtering on the values of the second color component samples in the neighboring area of the current block, wherein an upsampling rate is a positive integer multiple of 2.

17. The method of claim 13, further comprising:

comparing K with a preset number;
performing a fourth filtering process on the values of the first color component samples in the neighboring area of the current block and the filtered sample values of the second color component in the neighboring area of the current block according to a comparison result between K and the preset number, to determine filtered neighboring sample values of a first color component of the current block and filtered neighboring sample values of the second color component of the current block; and

determining the target information of the current block according to the filtered neighboring sample values of the first color component of the current block and the filtered neighboring sample values of the second color component of the current block.

18. The method of claim 17, wherein performing the fourth filtering process on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block comprises:

if K is greater than the preset number, performing a first sub-filtering process on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block; and

if K is less than the preset number, performing a second sub-filtering process on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block.

19. The method of claim 3, wherein performing the filtering process on the at least partial information in the reference information of the current block, to determine the target information of the current block comprises:

determining a number of the values of the first color component samples in the neighboring area of the current block as a first number;

performing a fifth filtering process on the values of the first color component samples in the neighboring area of the current block according to a comparison result between the first number and a preset number, to determine filtered neighboring sample values of a first color component of the current block; and

determining the target information of the current block according to the filtered neighboring sample values of the first color component of the current block.

20. The method of claim 19, wherein performing the fifth filtering process on the values of the first color component samples in the neighboring area of the current block, to determine the filtered neighboring sample values of the first color component of the current block comprises:

if the first number is greater than the preset number, performing a first sub-filtering process on the values of the first color component samples in the neighboring area of the current block, to determine the filtered neighboring sample values of the first color component of the current block; and

if the first number is less than the preset number, performing a second sub-filtering process on the values of the first color component samples in the neighboring area of the current block, to determine the filtered neighboring sample values of the first color component of the current block.

21. The method of claim 3, wherein performing the filtering process on the at least partial information in the reference information of the current block, to determine the target information of the current block further comprises:

determining a number of the values of the second color component samples in the neighboring area of the current block as a second number;

performing a sixth filtering process on the values of the second color component samples in the neighboring area of the current block according to a comparison result between the second number and a preset number, to determine filtered neighboring sample values of the second color component of the current block; and

determining the target information of the current block according to the filtered neighboring sample values of the second color component of the current block.

22. The method of claim 21, wherein performing the sixth filtering process on the values of the second color component samples in the neighboring area of the current block, to determine the filtered neighboring sample values of the second color component of the current block comprises:

if the second number is greater than the preset number, performing a first sub-filtering process on the values of the second color component samples in the neighboring area of the current block, to determine the filtered neighboring sample values of the second color component of the current block; and

if the second number is less than the preset number, performing a second sub-filtering process on the values of the second color component samples in the neighboring area of the current block, to determine the filtered neighboring sample values of the second color component of the current block.

23. The method of claim 10, 17 or 21, further comprising:
setting the reference sample values of the second color component in the target information as the filtered neighboring sample values of the second color component of the current block.

24. The method of claim 11, 18, 20 or 22, wherein the first sub-filtering process is a downsampling filtering process.

25. The method of claim 11, 18, 20 or 22, wherein the first sub-filtering process comprises at least one of:

performing a sub-filtering process by using a fixed-interval position selection mode; or
performing the sub-filtering process by using a continuous position selection mode.

26. The method of claim 11, 18, 20 or 22, wherein the second sub-filtering process is an upsampling filtering process.

27. The method of claim 11, 18, 20 or 22, wherein the second sub-filtering process comprises:
performing a sub-filtering process by using a fixed-interval position interpolation mode.

28. The method of claim 3 or 10, wherein performing the filtering process on the at least partial information in the reference information of the current block, to determine the target information of the current block comprises:

performing a seventh filtering process on the reconstructed values of the first reference color component samples in the current block, to determine filtered sample values of the first reference color component samples in the current block; and
determining the target information of the current block according to the filtered sample values of the first reference color component samples in the current block.

29. The method of claim 28, wherein performing the seventh filtering process on the reconstructed values of the first reference color component samples in the current block, to determine the filtered sample values of the first reference color component samples in the current block comprises:

determining a first width and a first height according to the reconstructed values of the first reference color component samples in the current block;
if the first width is greater than a width of the prediction block, or the first height is greater than a height of the prediction block, performing a third sub-filtering process on the reconstructed values of the first reference color component samples in the current block, to determine the filtered sample values of the first reference color component samples in the current block; and
if the first width is less than the width of the prediction block, or the first height is less than the height of the prediction block, performing a fourth sub-filtering process on the reconstructed values of the first reference color component samples in the current block, to determine the filtered sample values of the first reference color component samples in the current block.

30. The method of claim 29, wherein the third sub-filtering process is a downsampling filtering process.

31. The method of claim 30, wherein the third sub-filtering process comprises at least one of:

performing the downsampling filtering process in a horizontal direction on the reconstructed values of the first reference color component samples in the current block;
performing the downsampling filtering process in a vertical direction on the reconstructed values of the first reference color component samples in the current block;
performing the downsampling filtering process in the horizontal direction and then in the vertical direction on the reconstructed values of the first reference color component samples in the current block; or
performing the downsampling filtering process in the vertical direction and then in the horizontal direction on the

EP 4 510 583 A1

reconstructed values of the first reference color component samples in the current block.

32. The method of claim 29, wherein the fourth sub-filtering process is an upsampling filtering process.

33. The method of claim 32, wherein the fourth sub-filtering process comprises at least one of:

performing the upsampling filtering process in a horizontal direction on the reconstructed values of the first reference color component samples in the current block;
performing the upsampling filtering process in a vertical direction on the reconstructed values of the first reference color component samples in the current block;
performing the upsampling filtering process in the horizontal direction and then in the vertical direction on the reconstructed values of the first reference color component samples in the current block; or
performing the upsampling filtering process in the vertical direction and then in the horizontal direction on the reconstructed values of the first reference color component samples in the current block.

34. The method of claim 28, further comprising:
setting each of the reference sample values of the first color component in the target information as an absolute value of a difference between a value of a respective one of the first color component samples in the neighboring area of the current block and a reconstructed value of a respective one of the first reference color component samples in the current block.

35. The method of claim 28, further comprising:
setting each of the reference sample values of the first color component in the target information as an absolute value of a difference between a respective one of the filtered neighboring sample values of the first color component of the current block and a filtered sample value of a respective one of the first reference color component samples in the current block.

36. The method of claim 1, wherein determining the respective one of the weighting coefficients according to each of the reference sample values of the first color component in the target information comprises:

determining a respective value corresponding to each of the reference sample values of the first color component under a preset mapping relationship; and
setting the respective one of the weighting coefficients to be equal to the respective value.

37. The method of claim 36, wherein determining the respective value corresponding to each of the reference sample values of the first color component under the preset mapping relationship comprises:

determining a first factor;
determining a respective first product value according to the first factor and each of the reference sample values of the first color component; and
determining a value corresponding to the respective first product value under the preset mapping relationship.

38. The method of claim 37, wherein determining the first factor comprises:
the first factor is a preset constant value.

39. The method of claim 37, wherein determining the first factor comprises:

determining a value of the first factor according to size parameters of the current block,
wherein the size parameters of the current block comprise at least one of a width of the current block or a height of the current block.

40. The method of claim 36, wherein determining the respective value corresponding to each of the reference sample values of the first color component under the preset mapping relationship comprises:
the preset mapping relationship is a Softmax function.

41. The method of claim 36, wherein determining the respective value corresponding to each of the reference sample values of the first color component under the preset mapping relationship comprises:
the preset mapping relationship is a weighting function having an inverse ratio relationship with the reference sample values of the first color component.

**42.** The method of claim 1, wherein determining the prediction block of the second color component of the current block according to the weighting coefficients and the reference sample values of the second color component in the target information comprises:

determining a respective weighted value between each of the reference sample values of the second color component and a weighting coefficient corresponding to the reference sample value; and

setting a predicted value of a respective one of second color component samples in the prediction block to be equal to a sum of N weighted values, wherein N indicates a number of the reference sample values of the second color component, and N is a positive integer.

**43.** The method of claim 42, further comprising:

performing a correction operation on the predicted value of the respective one of the second color component samples in the prediction block, to determine the prediction block of the second color component of the current block.

**44.** The method of claim 1, further comprising:

performing a filtering enhancement process on the prediction block, and using the processed prediction block as the prediction block of the second color component of the current block.

**45.** The method of claim 1, further comprising:

determining a compensation value of a second color component of the prediction block according to reference sample values in a neighboring area of the current block; and

performing a correction process on a predicted value of a respective one of second color component samples in the prediction block according to the compensation value, to determine the prediction block of the second color component of the current block.

**46.** The method of claim 1, further comprising:

performing a prediction process on a respective one of second color component samples in the prediction block according to at least one prediction mode, to determine at least one initial predicted value of the respective one of the second color component samples in the prediction block; and

performing a weighted fusion process according to the at least one initial predicted value and a predicted value of the respective one of the second color component samples in the prediction block, to determine the prediction block of the second color component of the current block.

**47.** The method of claim 1, wherein determining the reconstructed values of the second color component samples of the current block according to the prediction block comprises:

for each of the second color component samples of the current block,

determining a predicted difference value of the second color component sample;

determining a predicted value of the second color component sample according to the prediction block; and

determining a reconstructed value of the second color component sample according to the predicted difference value of the second color component sample and the predicted value of the second color component sample.

**48.** A method for encoding, comprising:

determining reference information of a current block;

performing a filtering process on at least partial information in the reference information of the current block, to determine target information of the current block;

determining a respective one of weighting coefficients according to each of reference sample values of a first color component in the target information;

determining a prediction block of a second color component of the current block according to the weighting coefficients and reference sample values of a second color component in the target information; and

determining predicted difference values of second color component samples of the current block according to the prediction block.

**49.** The method of claim 48, wherein the prediction block comprises predicted values of at least a part of the second color component samples in the current block.

**50.** The method of claim 48, wherein determining the reference information of the current block comprises:
determining the reference information of the current block according to values of first color component samples in a neighboring area of the current block, values of second color component samples in the neighboring area of the current block, and reconstructed values of first reference color component samples in the current block.

**51.** The method of claim 50, wherein the neighboring area of the current block comprises at least one of an upper neighboring area, an upper right neighboring area, a left neighboring area, or a lower left neighboring area.

**52.** The method of claim 50, wherein performing the filtering process on the at least partial information in the reference information of the current block, to determine the target information of the current block comprises:

performing a first filtering process on the values of the first color component samples in the neighboring area of the current block, to obtain filtered sample values of a first color component in the neighboring area of the current block; and
determining the target information of the current block according to the filtered sample values of the first color component in the neighboring area of the current block.

**53.** The method of claim 52, wherein a number of filtered sample values of the first color component in the neighboring area of the current block is equal to L, L indicates a number of the values of the second color component samples in the neighboring area of the current block, and L is a positive integer.

**54.** The method of claim 52, wherein the first filtering process is a downsampling filtering process.

**55.** The method of claim 52, further comprising:
performing the first filtering process on the values of the first color component samples in the neighboring area of the current block based on color format information, to obtain the filtered sample values of the first color component in the neighboring area of the current block.

**56.** The method of claim 55, wherein the first filtering process further comprises:
if the color format information indicates 4:2:0 sampling, performing downsampling filtering on the values of the first color component samples in the neighboring area of the current block, wherein a downsampling rate is a reciprocal of a positive integer multiple of 2.

**57.** The method of claim 53, further comprising:

comparing L with a preset number;
performing a second filtering process on the filtered sample values of the first color component in the neighboring area of the current block and the values of the second color component samples in the neighboring area of the current block according to a comparison result between L and the preset number, to determine filtered neighboring sample values of a first color component of the current block and filtered neighboring sample values of the second color component of the current block; and
determining the target information of the current block according to the filtered neighboring sample values of the first color component of the current block and the filtered neighboring sample values of the second color component of the current block.

**58.** The method of claim 57, wherein performing the second filtering process on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block comprises:

if L is greater than the preset number, performing a first sub-filtering process on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block; and

if L is less than the preset number, performing a second sub-filtering process on the filtered sample values of the first color component in the neighboring area of the current block and the values of the second color component samples in the neighboring area of the current block, to determine the filtered neighboring sample values of the first color component of the current block and the filtered neighboring sample values of the second color component of the current block.

59. The method of claim 50, wherein performing the filtering process on the at least partial information in the reference information of the current block, to determine the target information of the current block comprises:

performing a third filtering process on the values of the second color component samples in the neighboring area of the current block, to obtain filtered sample values of a second color component in the neighboring area of the current block; and

determining the target information of the current block according to the filtered sample values of the second color component in the neighboring area of the current block.

60. The method of claim 59, wherein a number of filtered sample values of the second color component in the neighboring area of the current block is equal to K, K indicates a number of the values of the first color component samples in the neighboring area of the current block, and K is a positive integer.

61. The method of claim 59, wherein the third filtering process is an upsampling filtering process.

62. The method of claim 59, further comprising:

performing the third filtering process on the values of the second color component samples in the neighboring area of the current block based on color format information, to obtain the filtered sample values of the second color component in the neighboring area of the current block.

63. The method of claim 62, wherein the third filtering process further comprises:

if the color format information indicates 4:2:0 sampling, performing upsampling filtering on the values of the second color component samples in the neighboring area of the current block, wherein an upsampling rate is a positive integer multiple of 2.

64. The method of claim 60, further comprising:

comparing K with a preset number;

performing a fourth filtering process on the values of the first color component samples in the neighboring area of the current block and the filtered sample values of the second color component in the neighboring area of the current block according to a comparison result between K and the preset number, to determine filtered neighboring sample values of a first color component of the current block and filtered neighboring sample values of the second color component of the current block; and

determining the target information of the current block according to the filtered neighboring sample values of the first color component of the current block and the filtered neighboring sample values of the second color component of the current block.

65. The method of claim 64, wherein performing the fourth filtering process on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block comprises:

if K is greater than the preset number, performing a first sub-filtering process on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block; and

if K is less than the preset number, performing a second sub-filtering process on the values of the first color component samples in the neighboring area of the current block and the filtered sample values of the second color component in the neighboring area of the current block, to determine the filtered neighboring sample values of the first color component of the current block and the filtered neighboring sample values of the second color component of the current block.

66. The method of claim 49, wherein performing the filtering process on the at least partial information in the reference information of the current block, to determine the target information of the current block comprises:

determining a number of the values of the first color component samples in the neighboring area of the current block as a first number;

performing a fifth filtering process on the values of the first color component samples in the neighboring area of the current block according to a comparison result between the first number and a preset number, to determine filtered neighboring sample values of a first color component of the current block; and

determining the target information of the current block according to the filtered neighboring sample values of the first color component of the current block.

67. The method of claim 66, wherein performing the fifth filtering process on the values of the first color component samples in the neighboring area of the current block, to determine the filtered neighboring sample values of the first color component of the current block comprises:

if the first number is greater than the preset number, performing a first sub-filtering process on the values of the first color component samples in the neighboring area of the current block, to determine the filtered neighboring sample values of the first color component of the current block; and

if the first number is less than the preset number, performing a second sub-filtering process on the values of the first color component samples in the neighboring area of the current block, to determine the filtered neighboring sample values of the first color component of the current block.

68. The method of claim 50, wherein performing the filtering process on the at least partial information in the reference information of the current block, to determine the target information of the current block further comprises:

determining a number of the values of the second color component samples in the neighboring area of the current block as a second number;

performing a sixth filtering process on the values of the second color component samples in the neighboring area of the current block according to a comparison result between the second number and a preset number, to determine filtered neighboring sample values of the second color component of the current block; and

determining the target information of the current block according to the filtered neighboring sample values of the second color component of the current block.

69. The method of claim 68, wherein performing the sixth filtering process on the values of the second color component samples in the neighboring area of the current block, to determine the filtered neighboring sample values of the second color component of the current block comprises:

if the second number is greater than the preset number, performing a first sub-filtering process on the values of the second color component samples in the neighboring area of the current block, to determine the filtered neighboring sample values of the second color component of the current block; and

if the second number is less than the preset number, performing a second sub-filtering process on the values of the second color component samples in the neighboring area of the current block, to determine the filtered neighboring sample values of the second color component of the current block.

70. The method of claim 57, 64 or 68, further comprising:
setting the reference sample values of the second color component in the target information as the filtered neighboring sample values of the second color component of the current block.

71. The method of claim 58, 65, 67 or 69, wherein the first sub-filtering process is a downsampling filtering process.

72. The method of claim 58, 65, 67 or 69, wherein the first sub-filtering process comprises at least one of:

performing a sub-filtering process by using a fixed-interval position selection mode; or
performing the sub-filtering process by using a continuous position selection mode.

73. The method of claim 58, 65, 67 or 69, wherein the second sub-filtering process is an upsampling filtering process.

74. The method of claim 58, 65, 67 or 69, wherein the second sub-filtering process comprises:
performing a sub-filtering process by using a fixed-interval position interpolation mode.

75. The method of claim 50 or 57, wherein performing the filtering process on the at least partial information in the reference information of the current block, to determine the target information of the current block comprises:

performing a seventh filtering process on the reconstructed values of the first reference color component samples in the current block, to determine filtered sample values of the first reference color component samples in the current block; and
determining the target information of the current block according to the filtered sample values of the first reference color component samples in the current block.

76. The method of claim 75, wherein performing the seventh filtering process on the reconstructed values of the first reference color component samples in the current block, to determine the filtered sample values of the first reference color component samples in the current block comprises:

determining a first width and a first height according to the reconstructed values of the first reference color component samples in the current block;
if the first width is greater than a width of the prediction block, or the first height is greater than a height of the prediction block, performing a third sub-filtering process on the reconstructed values of the first reference color component samples in the current block, to determine the filtered sample values of the first reference color component samples in the current block; and
if the first width is less than the width of the prediction block, or the first height is less than the height of the prediction block, performing a fourth sub-filtering process on the reconstructed values of the first reference color component samples in the current block, to determine the filtered sample values of the first reference color component samples in the current block.

77. The method of claim 76, wherein the third sub-filtering process is a downsampling filtering process.

78. The method of claim 77, wherein the third sub-filtering process comprises at least one of:

performing the downsampling filtering process in a horizontal direction on the reconstructed values of the first reference color component samples in the current block;
performing the downsampling filtering process in a vertical direction on the reconstructed values of the first reference color component samples in the current block;
performing the downsampling filtering process in the horizontal direction and then in the vertical direction on the reconstructed values of the first reference color component samples in the current block; or
performing the downsampling filtering process in the vertical direction and then in the horizontal direction on the reconstructed values of the first reference color component samples in the current block.

79. The method of claim 76, wherein the fourth sub-filtering process is an upsampling filtering process.

80. The method of claim 79, wherein the fourth sub-filtering process comprises at least one of:

performing the upsampling filtering process in a horizontal direction on the reconstructed values of the first reference color component samples in the current block;
performing the upsampling filtering process in a vertical direction on the reconstructed values of the first reference color component samples in the current block;
performing the upsampling filtering process in the horizontal direction and then in the vertical direction on the reconstructed values of the first reference color component samples in the current block; or
performing the upsampling filtering process in the vertical direction and then in the horizontal direction on the reconstructed values of the first reference color component samples in the current block.

81. The method of claim 75, further comprising:
setting each of the reference sample values of the first color component in the target information as an absolute value of a difference between a value of a respective one of the first color component samples in the neighboring area of the current block and a reconstructed value of a respective one of the first reference color component samples in the current block.

82. The method of claim 75, further comprising:
    setting each of the reference sample values of the first color component in the target information as an absolute value of a difference between a respective one of the filtered neighboring sample values of the first color component of the current block and a filtered sample value of a respective one of the first reference color component samples in the current block.

83. The method of claim 48, wherein determining the respective one of the weighting coefficients according to each of the reference sample values of the first color component in the target information comprises:

    determining a respective value corresponding to each of the reference sample values of the first color component under a preset mapping relationship; and
    setting the respective one of the weighting coefficients to be equal to the respective value.

84. The method of claim 83, wherein determining the respective value corresponding to each of the reference sample values of the first color component under the preset mapping relationship comprises:

    determining a first factor;
    determining a respective first product value according to the first factor and each of the reference sample values of the first color component; and
    determining a value corresponding to the respective first product value under the preset mapping relationship.

85. The method of claim 84, wherein determining the first factor comprises:
    the first factor is a preset constant value.

86. The method of claim 84, wherein determining the first factor comprises:

    determining a value of the first factor according to size parameters of the current block,
    wherein the size parameters of the current block comprise at least one of a width of the current block or a height of the current block.

87. The method of claim 83, wherein determining the respective value corresponding to each of the reference sample values of the first color component under the preset mapping relationship comprises:
    the preset mapping relationship is a Softmax function.

88. The method of claim 83, wherein determining the respective value corresponding to each of the reference sample values of the first color component under the preset mapping relationship comprises:
    the preset mapping relationship is a weighting function having an inverse ratio relationship with the reference sample values of the first color component.

89. The method of claim 48, wherein determining the prediction block of the second color component of the current block according to the weighting coefficients and the reference sample values of the second color component in the target information comprises:

    determining a respective weighted value between each of the reference sample values of the second color component and a weighting coefficient corresponding to the reference sample value; and
    setting a predicted value of a respective one of second color component samples in the prediction block to be equal to a sum of N weighted values, wherein N indicates a number of the reference sample values of the second color component, and N is a positive integer.

90. The method of claim 89, further comprising:
    performing a correction operation on the predicted value of the respective one of the second color component samples in the prediction block, to determine the prediction block of the second color component of the current block.

91. The method of claim 48, further comprising:
    performing a filtering enhancement process on the prediction block, and using the processed prediction block as the prediction block of the second color component of the current block.

**92.** The method of claim 48, further comprising:

determining a compensation value of a second color component of the prediction block according to reference sample values in a neighboring area of the current block; and

performing a correction process on a predicted value of a respective one of second color component samples in the prediction block according to the compensation value, to determine the prediction block of the second color component of the current block.

**93.** The method of claim 48, further comprising:

performing a prediction process on a respective one of second color component samples in the prediction block according to at least one prediction mode, to determine at least one initial predicted value of the respective one of the second color component samples in the prediction block; and

performing a weighted fusion process according to the at least one initial predicted value and a predicted value of the respective one of the second color component samples in the prediction block, to determine the prediction block of the second color component of the current block.

**94.** The method of claim 48, wherein determining the predicted difference values of the second color component samples of the current block according to the prediction block comprises:

determining predicted values of the second color component samples of the current block according to the prediction block; and

for each of the second color component samples of the current block, determining a predicted difference value of the second color component sample according to an original value of the second color component sample and a predicted value of the second color component sample.

**95.** The method of claim 94, further comprising:
encoding the predicted difference values of the second color component samples of the current block, and writting obtained encoded bits into a bitstream.

**96.** An apparatus for encoding, comprising a first determination unit, a first filtering unit and a first prediction unit,

wherein the first determination unit is configured to determine reference information of a current block,

the first filtering unit is configured to perform a filtering process on at least partial information in the reference information of the current block, to determine target information of the current block,

the first determination unit is further configured to determine a respective one of weighting coefficients according to each of reference sample values of a first color component in the target information,

the first prediction unit is configured to determine a prediction block of a second color component of the current block according to the weighting coefficients and reference sample values of a second color component in the target information, and

the first determination unit is further configured to determine predicted difference values of second color component samples of the current block according to the prediction block.

**97.** A device for encoding, comprising a first memory and a first processor,

wherein the first memory is configured to store a computer program executable on the first processor, and

the first processor is configured to execute the computer program to perform the method of any one of claims 48 to 95.

**98.** An apparatus for decoding, comprising a second determination unit, a second filtering unit and a second prediction unit,

wherein the second determination unit is configured to determine reference information of a current block,

the second filtering unit is configured to perform a filtering process on at least partial information in the reference information of the current block, to determine target information of the current block,

the second determination unit is further configured to determine a respective one of weighting coefficients according to each of reference sample values of a first color component in the target information, the second prediction unit is configured to determine a prediction block of a second color component of the current block according to the weighting coefficients and reference sample values of a second color component in the target information, and

the second determination unit is further configured to determine reconstructed values of second color component samples of the current block according to the prediction block.

99. A device for decoding, comprising a second memory and a second processor,

wherein the second memory is configured to store a computer program executable on the second processor, and the second processor is configured to execute the computer program to perform the method of any one of claims 1 to 47.

100.

A computer-readable storage medium, storing a computer program that, when being executed, implements the method of any one of claims 1 to 47 or the method of any one of claims 48 to 95.

| | Upper neighboring area | Upper right neighboring area |
|---|---|---|
| Left neighboring area | Coding block | |
| Lower left neighboring area | | |

**FIG. 1**

Upper neighboring area

Left neighboring area

Coding block

（a）

Left neighboring area

Coding block

Lower left neighboring area

（b）

Upper neighboring area | Upper right neighboring area

Coding block

（c）

**FIG. 2**

EP 4 510 583 A1

FIG. 3

**FIG. 4A**

**FIG. 4B**

```
┌─────────────────────────────────────────────────────────┐
│                                                         │  ⌐ S501
│        Determine reference information of a current block │
│                                                         │
└─────────────────────────────────────────────────────────┘
                            │
                            ▼
┌─────────────────────────────────────────────────────────┐
│   Perform a filtering process on the reference information of the │  ⌐ S502
│   current block, to determine target information of the current block │
└─────────────────────────────────────────────────────────┘
                            │
                            ▼
┌─────────────────────────────────────────────────────────┐
│   Determine a respective one of weighting coefficients according to │  ⌐ S503
│   each of reference sample values of a first color component in the │
│                     target information                   │
└─────────────────────────────────────────────────────────┘
                            │
                            ▼
┌─────────────────────────────────────────────────────────┐
│   Determine a prediction block of a second color component of the │  ⌐ S504
│   current block according to the weighting coefficients and reference │
│   sample values of a second color component in the target │
│                     information                          │
└─────────────────────────────────────────────────────────┘
                            │
                            ▼
┌─────────────────────────────────────────────────────────┐
│   Determine reconstructed values of second color component samples │  ⌐ S505
│   of the current block according to the prediction block │
└─────────────────────────────────────────────────────────┘
```

**FIG. 5**

```
┌──────────────┬──────────────────────────────────────────┐
│  Upper left  │                                          │
│    area      │              Upper area                  │
│              │                                          │
├──────────────┼─────────────────────────┐────────────────┘
│              │                         │
│              │                         │
│              │                         │
│              │      Current block      │
│    Left      │                         │
│    area      │                         │
│              └─────────────────────────┘
│              
│              
└──────────────┘
```

**FIG. 6**

refY

(a)

refY'

(b)

**FIG. 7A**

refC

(a)

refC'

(b)

**FIG. 7B**

refY

refY'

**FIG. 8**

```
Planar mode
chroma
prediction
value
```
──── W_Planar ────

```
Direct current
mode chroma
prediction
value
```
W_DC

```
Vertical mode
chroma
prediction
value
```
──── W_Ver ────

```
Horizontal
mode chroma
prediction
value
```
W_Hor

```
CCLM mode
chroma
prediction
value
```
──── W_CCLM ────

```
WCP mode
chroma
prediction
value
```

W_Wcp

⊗ ⊕

```
Final chroma
prediction
value
```

**FIG. 9**

Sample

Downsampled
luma block

Current block     Neighboring
chroma vector

Neighboring
luma vector

Luma difference
vector

Normalized
weight vector

Weight-based
Chroma Prediction

Predicted
chroma value

**FIG. 10**

| Determine core parameters of a WCP mode | S1101 |

| Determine target information after a pre-processing operation according to the core parameters | S1102 |

| Perform weight-based chroma prediction calculation according to the target information, to determine a prediction block of the current block | S1103 |

| Perform a post-processing operation on the prediction block, to determine a target prediction block of the current block | S1104 |

**FIG. 11**

refY_T

refY_L

recY

**FIG. 12**

**FIG. 13**

**FIG. 14**

**FIG. 15**

| | |
|---|---|
| For each to-be-predicted pixel, create a luma difference vector by using reference chroma information included in target information, reference luma information included in the target information, and reconstructed luma information of a current block | S1601 |
| For each to-be-predicted pixel, calculate a weight vector by using a nonlinear function according to the luma difference vector | S1602 |
| For each to-be-predicted pixel, perform weighted calculation according to the weight vector and the reference chroma information included in the target information, to obtain a predicted chroma value | S1603 |
| For each to-be-predicted pixel, perform a correction process on the predicted chroma value obtained by calculation, to determine a prediction block of the current block | S1604 |

**FIG. 16**

FIG. 17

---

| Determine reference information of a current block | S1801 |

↓

| Perform a filtering process on the reference information of the current block, to determine target information of the current block | S1802 |

↓

| Determine a respective one of weighting coefficients according to each of reference sample values of a first color component in the target information | S1803 |

↓

| Determine a prediction block of a second color component of the current block according to the weighting coefficients and reference sample values of a second color component in the target information | S1804 |

↓

| Determine predicted difference values of second color component samples of the current block according to the prediction block | S1805 |

FIG. 18

| Determine reference information of a current block | S1801 |

↓

| Perform a filtering process on the reference information of the current block, to determine target information of the current block | S1802 |

↓

| Determine a respective one of weighting coefficients according to each of reference sample values of a first color component in the target information | S1803 |

↓

| Determine a prediction block of a second color component of the current block according to the weighting coefficients and reference sample values of a second color component in the target information | S1804 |

↓

| Determine predicted values of second color component samples of the current block according to the prediction block | S1901 |

↓

| For each of the second color component samples of the current block, determine a predicted difference value of the second color component sample according to an original value of the second color component sample and a predicted value of the second color component sample | S1902 |

↓

| Encode predicted difference values of the second color component samples of the current block, and write obtained encoded bits into a bitstream | S1903 |

**FIG. 19**

300

Apparatus for encoding

3001 — First determination unit
3002 — First filtering unit
3004 — Encoding unit
3003 — First prediction unit

**FIG. 20**

┌─────────────────────────────────────────────┐
│                    ⌐310                       │
│              Device for encoding              │
│                    ⌐3101                      │
│        ┌──────────────────────┐               │
│        │  First communication │        ⌐3104  │
│        │       interface      │               │
│        └──────────────────────┘               │
│    ⌐3103              ⌐3102                    │
│  ┌────────────────┐   ┌────────────────┐      │
│  │ First processor│   │  First memory  │      │
│  └────────────────┘   └────────────────┘      │
└─────────────────────────────────────────────┘

**FIG. 21**

┌─────────────────────────────────────────────┐
│                    ⌐320                       │
│            Apparatus for decoding             │
│      ⌐3201              ⌐3202                  │
│  ┌────────────┐     ┌────────────┐            │
│  │   Second   │     │   Second   │            │
│  │determination│     │ filtering  │           │
│  │    unit    │     │    unit    │            │
│  └────────────┘     └────────────┘            │
│        ⌐3204              ⌐3203                │
│  ┌────────────┐     ┌────────────┐            │
│  │            │     │   Second   │            │
│  │Decoding unit│     │ prediction │           │
│  │            │     │    unit    │            │
│  └────────────┘     └────────────┘            │
└─────────────────────────────────────────────┘

**FIG. 22**

┌─────────────────────────────────────────────┐
│                    ⌐330                       │
│              Device for decoding              │
│                    ⌐3301                      │
│        ┌──────────────────────┐               │
│        │ Second communication │        ⌐3304  │
│        │       interface      │               │
│        └──────────────────────┘               │
│    ⌐3303              ⌐3302                    │
│  ┌────────────────┐   ┌────────────────┐      │
│  │Second processor│   │ Second memory  │      │
│  └────────────────┘   └────────────────┘      │
└─────────────────────────────────────────────┘

**FIG. 23**

FIG. 24

<div align="center">**INTERNATIONAL SEARCH REPORT**</div>

| International application No. |
|---|
| **PCT/CN2022/086469** |

**A.   CLASSIFICATION OF SUBJECT MATTER**

H04N 19/59(2014.01)i;  H04N 19/593(2014.01)i

According to International Patent Classification (IPC) or to both national classification and IPC

**B.     FIELDS SEARCHED**

Minimum documentation searched (classification system followed by classification symbols)

H04N19/-

Documentation searched other than minimum documentation to the extent that such documents are included in the fields searched

Electronic data base consulted during the international search (name of data base and, where practicable, search terms used)

CNTXT; ENTXTC; CNABS; CNKI: 亮度, 色度, 明度, 第一分量, 第二分量, 跨分量, 分量间, 线性预测, 线性模型, 参考, 重建, 重构, 加权, 权值, 权重, CCLM, 局部亮度, 局部照度, 补偿, LIC, 上采样, 降采样, 下采样; VEN; ENTXT; JVET; IEEE: chroma, luminance, first componet, second componet, corss componet, linearity predict+, linear+ mode, reference, recontruct+, weight, CCLM, local luminace, up sampl+, LIC, down sampl+, local luminace compensat+

**C.     DOCUMENTS CONSIDERED TO BE RELEVANT**

| Category* | Citation of document, with indication, where appropriate, of the relevant passages | Relevant to claim No. |
|---|---|---|
| X | WO 2020029202 A1 (GUANGDONG OPPO MOBILE TELECOMMUNICATIONS CORP., LTD.) 13 February 2020 (2020-02-13) <br> description, page 6, lines 6-25, page 912, to page 10, line 11, and figures 5 and 6 | 1-100 |
| A | CN 113545063 A (HUAWEI TECHNOLOGIES CO., LTD.) 22 October 2021 (2021-10-22) <br> entire document | 1-100 |
| A | CN 113497937 A (GUANGDONG OPPO MOBILE TELECOMMUNICATIONS CORP., LTD.) 12 October 2021 (2021-10-12) <br> entire document | 1-100 |
| A | CN 112292863 A (KWANGWOON UNIVERSITY INDUSTRY-ACADEMIC COLLABORATION FOUNDATION) 29 January 2021 (2021-01-29) <br> entire document | 1-100 |
| A | US 2020177878 A1 (LG ELECTRONICS INC.) 04 June 2020 (2020-06-04) <br> entire document | 1-100 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 August 2022** | **30 August 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/086469**

| Patent document cited in search report | | | Publication date (day/month/year) | Patent family member(s) | | | Publication date (day/month/year) |
|---|---|---|---|---|---|---|---|
| WO | 2020029202 | A1 | 13 February 2020 | RU | 2771350 | C1 | 04 May 2022 |
| | | | | US | 2021160505 | A1 | 27 May 2021 |
| | | | | KR | 20210041603 | A | 15 April 2021 |
| | | | | PH | 12021550291 | A1 | 11 October 2021 |
| | | | | BR | 112021002310 | A2 | 04 May 2021 |
| | | | | US | 2022038699 | A1 | 03 February 2022 |
| | | | | AU | 2018436324 | A1 | 11 March 2021 |
| | | | | IL | 280695 | A | 25 March 2021 |
| | | | | CA | 3109014 | A1 | 13 February 2020 |
| | | | | JP | 2022501863 | A | 06 January 2022 |
| | | | | EP | 3823284 | A1 | 19 May 2021 |
| | | | | CN | 112534819 | A | 19 March 2021 |
| | | | | SG | 11202101310 | A | 30 March 2021 |
| | | | | IN | 202117009313 | A | 23 April 2021 |
| | | | | VN | 78157 | A | 25 May 2021 |
| | | | | EP | 3823284 | A4 | 14 July 2021 |
| | | | | CN | 113132722 | A | 16 July 2021 |
| | | | | US | 11218701 | B2 | 04 January 2022 |
| | | | | JP | 2022501863 | W | 06 January 2022 |
| CN | 113545063 | A | 22 October 2021 | CL | 2021002220 | A1 | 06 May 2022 |
| | | | | AU | 2020226573 | A1 | 30 September 2021 |
| | | | | KR | 20210125086 | A | 15 October 2021 |
| | | | | CA | 3131027 | A1 | 27 August 2020 |
| | | | | JP | 2022521757 | A | 12 April 2022 |
| | | | | US | 2021385440 | A1 | 09 December 2021 |
| | | | | WO | 2020169113 | A1 | 27 August 2020 |
| | | | | EP | 3928517 | A1 | 29 December 2021 |
| | | | | BR | 112021016560 | A2 | 26 October 2021 |
| | | | | IN | 202137039587 | A | 07 January 2022 |
| | | | | EP | 3928517 | A4 | 27 April 2022 |
| CN | 113497937 | A | 12 October 2021 | WO | 2021185008 | A1 | 23 September 2021 |
| CN | 112292863 | A | 29 January 2021 | US | 2020036971 | A1 | 30 January 2020 |
| | | | | WO | 2019240448 | A1 | 19 December 2019 |
| | | | | KR | 101956756 | B1 | 11 March 2019 |
| | | | | US | 2021195180 | A1 | 24 June 2021 |
| | | | | CA | 3141482 | A1 | 19 December 2019 |
| | | | | US | 10477205 | B1 | 12 November 2019 |
| | | | | KR | 20190140820 | A | 20 December 2019 |
| | | | | IN | 202117000987 | A | 19 March 2021 |
| | | | | US | 10972727 | B2 | 06 April 2021 |
| US | 2020177878 | A1 | 04 June 2020 | WO | 2018236028 | A1 | 27 December 2018 |
| | | | | US | 11190762 | B2 | 30 November 2021 |

Form PCT/ISA/210 (patent family annex) (January 2015)